# EUROPÄISCHE PATENTSCHRIFT

(11) **EP 2 769 828 B1**
(45) Veröffentlichungstag und Bekanntmachung des Hinweises auf die Patenterteilung: **26.10.2016**
(21) Anmeldenummer: 13000959.0
(22) Anmeldetag: 26.02.2013
(51) Int. Cl.: B29C 51/08, B29C 51/16, B29L 31/30

(54) **Verfahren und Werkzeug-Station zur Herstellung eines Verkleidungsteils**
Method and tool station for manufacturing a trim part
Procédé et station d'outil pour la fabrication d'un élément d'habillage

(43) Veröffentlichungstag der Anmeldung: 27.08.2014
(73) Patentinhaber: Faurecia Innenraum Systeme GmbH, 76767 Hagenbach (DE)
(72) Erfinder: Schilles, Wilfried, 76870 Kandel (DE)
(74) Vertreter: Schatt, Markus F.

(56) Entgegenhaltungen:
- US-A1- 2001 000 584
- DATABASE WPI Week 200463 Thomson Scientific, London, GB; AN 2004-645430 XP002708823, -& JP 2004 249487 A (ALOCA CO LTD) 9. September 2004 (2004-09-09)

## Beschreibung

Die Erfindung betrifft ein Verfahren und eine Werkzeug-Station oder Vorrichtung zur Herstellung eines Verkleidungsteils insbesondere für den Innenraum eines Kraftfahrzeugs.

Aus der DE 39 30 603 C2 ist eine Vorrichtung zur Herstellung von Verkleidungsteilen bekannt. Diese Vorrichtung weist eine Oberform und eine Unterform auf, zwischen denen eine Trägerschicht und eine Folie sowie zusätzliche Formteile unter Druck zusammengefügt werden. Für die Formung der Folie sind am unteren Formwerkzeug Vakuumkammern vorgesehen.

Die US 2001/0000584 A1 zeigt eine Vorrichtung und ein Verfahren zur Herstellung eines Innenverkleidungsteils, das eine Trägerschicht aufweist, die mit zwei Dekorteilen kaschiert ist. Die Vorrichtung weist ein erstes Werkzeugteil und ein gegenüber diesem angeordnetes zweites Werkzeugteil auf, wobei das zweite Werkzeugteil in Richtung des ersten Werkzeugteils verfahrbar ist. Das erste Werkzeugteil weist einen ortsfesten Werkzeugteilabschnitt auf, an dem ein relativ zu diesem in Richtung des zweiten Werkzeugteils verfahrbares Verformungsteil geführt ist und an dem ein Backen in einer Richtung quer zu der Führungsrichtung des Verformungsteils geführt ist. Zwischen dem Backen und einem in Richtung des zweiten Werkzeugteils vorstehenden Anlageabschnitt des Werkzeugteilabschnittes ist ein Klemmspalt gebildet. Das zweite Werkzeugteil weist einen relativ zu diesem und in Richtung des ersten Werkzeugteils verfahrbaren Schieber auf, der derart in dem zweiten Werkzeugteil angeordnet ist, dass dieser in den Klemmspalt einfahrbar ist. Zur Herstellung des Innenverkleidungsteils wird ein Halbzeug aus der Trägerschicht, auf dessen Oberfläche die Dekorteile aneinander angrenzend aufkaschiert sind, derart in die Vorrichtung eingelegt, dass das Halbzeug zwischen dem ersten und dem zweiten Werkzeugteil mit den Dekorschichten dem zweiten Werkzeugteil zugewandt gelegen ist, wobei der Bereich, in dem die Dekorschichten aneinander angrenzen über dem Klemmspalt gelegen ist. Der Schieber wird in Richtung des Klemmspalts ausgefahren, so dass der Bereich, in dem die Dekorschichten aneinander angrenzen, in den Klemmspalt eingedrückt und eine Trägerteil-Schleife, in der die Endabschnitte der Dekorteile gelegen sind, gebildet wird. Anschließend wird der Schieber wieder zurückgefahren, und die Backe in Richtung des Anlageabschnitts bewegt, wodurch die Trägerteil-Schleife zusammengedrückt wird. In einem abschließenden Schritt werden das Veformungsteil und das zweite Werkzeugteil aufeinander zu bewegt, sodass eine Verformung des Halbzeugs stattfindet.

Aus JP 2004 249487 A ist eine Vorrichtung und ein Verfahren zur Herstellung eines Verkleidungsteils, das Verkleidungsteile eine Trägerschicht aufweist, die an einer ersten Oberfläche mit einem Dekorteil kaschiert ist, wobei das Dekorteil beidseitig entlang einer Trennlinie verschiedene Farben aufweist. Die Vorrichtung weist ein oberes Werkzeugteil mit einem Schieber und ein unteres Werkzeugteil mit einer gegenüber dem Schieber angeordneten Klemmvorrichtung auf.

Aufgabe der Erfindung ist die Bereitstellung eines Verfahrens zur Herstellung eines Verkleidungsteils, mit dem mehrere unterschiedliche Dekorschichten in einer für Verbraucher ansprechenden Art auf einem Trägerteil in einer industriellen Fertigung integriert werden können, ist die Bereitstellung einer Werkzeug-Station oder Herstellungsvorrichtung zur Durchführung eines solchen Verfahrens.

Nach einem Aspekt der Erfindung ist ein Verfahren zur Herstellung eines Innenverkleidungsteils in einer Werkzeug-Station aus einer Halbzeug-Anordnung aus einem Trägerteil und einem Dekorteil vorgesehen. Bei dem Verfahren ist insbesondere vorgesehen, dass dieses von einem Ausgangszustand ausgeht, in dem die Halbzeug-Anordnung mit zumindest einem Basisabschnitt an einer Anlagefläche eines ersten Werkzeugteils und an einer Anlagefläche eines zweiten Werkzeugteils der Werkzeugstation anliegen und zumindest ein im ersten Werkzeugteil integrierter Haltebacken sowie ein im zweiten Werkzeugteil integrierter Haltebacken jeweils zumindest einen Erfassungsabschnitt der Halbzeug-Anordnung halten, wobei die Halbzeug-Anordnung in zumindest einem Basisabschnitt aus einer Kombination eines Trägerteils, das sich in einer lokalen Trägerteil-Längsrichtung L-T erstreckt, und eines Dekorteils, das in einem Beschichtungsbereich des Trägerteils auf dieses kaschiert ist, gebildet ist.

Nach einer Ausführungsform des erfindungsgemäßen Verfahrens zur Herstellung eines Innenverkleidungsteils in einer Werkzeug-Station aus einer Halbzeug-Anordnung aus einem Trägerteil und einem Dekorteil ist vorgesehen, dass die Werkzeug-Station zumindest ein Paar von Haltebacken aufweist, die einen Erfassungsabschnitt der Halbzeug-Anordnung halten, das Verfahren aufweisend die Schritte:
▪ Verschieben des Erfassungsabschnitts mittels des Paars von an diesem anliegenden Haltebacken in Richtung zu einem Basisabschnitt und gleichzeitiges Fahren eines Schiebers auf einen Zwischenabschnitt,
▪ Weiterfahren des Schiebers, so dass sich in dem Zwischenabschnitt eine Trägerteil-Schleife ausbildet, wobei ein Randbereichs-Abschnitt des Dekorteils in der Trägerteil-Schleife gelegen ist,
▪ Herausfahren des Schiebers aus der Trägerteil-Schleife,
▪ weiteres Bewegen der einen Erfassungsabschnitt haltenden Haltebacken in Richtung zu dem Basisabschnitt, so dass zwei Schenkel der Trägerteil-Schleife aneinander gepresst werden.

Nach einer Ausführungsform des Verfahrens ist dabei vorgesehen, dass in der Werkzeug-Station nach dem Zusammenpressen der zwei Schenkel der Trägerteil-Schleife ein Aushärten der Halbzeug-Anordnung erfolgt.

Nach einer Ausführungsform des Verfahrens ist vorgesehen, dass die Halbzeug-Anordnung in zumindest einem Basisabschnitt aus einer Kombination eines Trägerteils und eines Dekorteils, das in einem Beschichtungsbereich des Trägerteils auf dieses kaschiert ist, gebildet ist, das Verfahren aufweisend die Schritte:
▪ Verschieben des Erfassungsabschnitts mittels dem Paar von an diesem jeweils anliegenden Haltebacken in Richtung zu einem Basisabschnitt und gleichzeitiges Fahren eines Schiebers auf einen Zwischenabschnitt, der zwischen einem Basisabschnitt und dem jeweiligen Erfassungsabschnitt gelegen ist,
▪ Weiterfahren des Schiebers, so dass sich in dem Zwischenabschnitt eine Trägerteil-Schleife mit zwei Schenkel und einem zwischen diesen gelegenen Verbindungsabschnitt ausbildet, wobei die Halbzeug-Anordnung derart ausgeführt ist, dass ein Randbereichs-Abschnitt des Dekorteils in der Trägerteil-Schleife gelegen ist,
▪ Herausfahren des Schiebers aus der Trägerteil-Schleife,
▪ weiteres Bewegen der einen Erfassungsabschnitt haltenden Haltebacken in Richtung zu dem Basisabschnitt, so dass die zwei Schenkel der Trägerteil-Schleife aneinander gepresst werden.

Nach einer Ausführungsform des Verfahrens ist dabei vorgesehen, dass in der Werkzeug-Station nach dem Zusammenpressen der zwei Schenkel der Trägerteil-Schleife ein Aushärten der Halbzeug-Anordnung erfolgt.

Nach der Erfindung ist insbesondere ein Verfahren vorgesehen, das ausgeht von einem Ausgangszustand, in dem die Halbzeug-Anordnung mit zumindest einem Basisabschnitt an einer Anlagefläche eines ersten Werkzeugteils und an einer Anlagefläche eines zweiten Werkzeugteils der Werkzeugstation anliegen und zumindest ein im ersten Werkzeugteil integrierter Haltebacken sowie ein im zweiten Werkzeugteil integrierter Haltebacken jeweils zumindest einen Erfassungsabschnitt der Halbzeug-Anordnung halten, wobei die Halbzeug-Anordnung in zumindest einem Basisabschnitt aus einer Kombination eines Trägerteils, das sich in einer lokalen Trägerteil-Längsrichtung erstreckt, und eines Dekorteils, das in einem Beschichtungsbereich des Trägerteils auf dieses kaschiert ist, gebildet ist, das Verfahren aufweisend die Schritte:
▪ Verschieben des Erfassungsabschnitts mittels dem Paar von an diesem jeweils anliegenden Haltebacken in Richtung zu einem Basisabschnitt und gleichzeitiges Fahren eines Schiebers auf einen Zwischenabschnitt, der zwischen einem Basisabschnitt und dem jeweiligen Erfassungsabschnitt gelegen ist,
▪ Weiterfahren des Schiebers, so dass sich in dem Zwischenabschnitt eine Trägerteil-Schleife mit zwei Schenkel und einem zwischen diesen gelegenen Verbindungsabschnitt ausbildet, wobei die Halbzeug-Anordnung derart ausgeführt ist, dass ein Randbereichs-Abschnitt des Dekorteils in der Trägerteil-Schleife gelegen ist,
▪ Herausfahren des Schiebers aus der Trägerteil-Schleife,
▪ weiteres Bewegen der einen Erfassungsabschnitt haltenden Haltebacken in Richtung zu dem Basisabschnitt, so dass die zwei Schenkel der Trägerteil-Schleife aneinander gepresst werden,

Optional kann ein Aushärten der Halbzeug-Anordnung erfolgen.

Nach einer Ausführungsform des Verfahrens ist vorgesehen, dass die Halbzeug-Anordnung in zumindest einem Basisabschnitt aus einer Kombination eines Trägerteils und eines Dekorteils, das in einem Beschichtungsbereich des Trägerteils auf dieses kaschiert ist, gebildet ist, das Verfahren aufweisend die Schritte:
▪ Verschieben von zwei Erfassungsabschnitten mittels jeweils einem Paar von an diesen jeweils anliegenden Haltebacken in Richtung aufeinander zu und gleichzeitiges Fahren eines Schiebers auf einen Zwischenabschnitt, der zwischen den Erfassungsabschnitten gelegen ist,
▪ Weiterfahren des Schiebers, so dass sich in dem Zwischenabschnitt eine Trägerteil-Schleife mit zwei Schenkel und einem zwischen diesen gelegenen Verbindungsabschnitt ausbildet, wobei die Halbzeug-Anordnung derart ausgeführt ist, dass ein Randbereichs-Abschnitt des Dekorteils in der Trägerteil-Schleife gelegen ist,
▪ Herausfahren des Schiebers aus der Trägerteil-Schleife,
▪ weiteres Bewegen der beiden jeweils einen Erfassungsabschnitt haltenden Haltebacken in Richtung aufeinander zu, so dass die zwei Schenkel der Trägerteil-Schleife aneinander gepresst werden.

Nach einer Ausführungsform des Verfahrens ist dabei vorgesehen, dass in der Werkzeug-Station nach dem Zusammenpressen der zwei Schenkel der Trägerteil-Schleife ein Aushärten der Halbzeug-Anordnung erfolgt.

Nach der Erfindung ist insbesondere ein Verfahren vorgesehen, das ausgeht von einem Ausgangszustand, in dem die Halbzeug-Anordnung mit zumindest einem Basisabschnitt an einer Anlagefläche eines ersten Werkzeugteils und an einer Anlagefläche eines zweiten Werkzeugteils der Werkzeugstation anliegen und zwei im ersten Werkzeugteil integrierte Haltebacken sowie zwei im zweiten Werkzeugteil integrierte Haltebacken jeweils zumindest einen Erfassungsabschnitt der Halbzeug-Anordnung halten,
wobei die Halbzeug-Anordnung in zumindest einem Basisabschnitt aus einer Kombination eines Trägerteils, das sich in einer lokalen Trägerteil-Längsrichtung L-T erstreckt, und eines Dekorteils, das in einem Beschichtungsbereich des Trägerteils auf dieses kaschiert ist, gebildet ist, das Verfahren aufweisend die Schritte:
▪ Verschieben von zwei Erfassungsabschnitten mittels jeweils einem Paar von an diesen jeweils anliegenden Haltebacken in Richtung aufeinander zu und gleichzeitiges Fahren eines Schiebers auf einen Zwischenabschnitt, der zwischen den Erfassungsabschnitten gelegen ist,
▪ Weiterfahren des Schiebers, so dass sich in dem Zwischenabschnitt eine Trägerteil-Schleife mit zwei Schenkel und einem zwischen diesen gelegenen Verbindungsabschnitt ausbildet, wobei die Halbzeug-Anordnung derart ausgeführt ist, dass ein Randbereichs-Abschnitt des Dekorteils in der Trägerteil-Schleife gelegen ist,
▪ Herausfahren des Schiebers aus der Trägerteil-Schleife,
▪ weiteres Bewegen der beiden jeweils einen Erfassungsabschnitt haltenden Haltebacken in Richtung aufeinander zu, so dass die zwei Schenkel der Trägerteil-Schleife aneinander gepresst werden.

Optional kann anschließend ein Aushärten der Halbzeug-Anordnung erfolgen.

Nach einem weiteren Aspekt der Erfindung ist vorgesehen: eine Werkzeug-Station zur Herstellung eines Innenverkleidungsteils in einer aus einer Halbzeug-Anordnung aus einem Trägerteil und einem zumindest abschnittsweise auf diesem kaschierten Dekorteil, wobei die Werkzeug-Station aufweist:
▪ ein erstes Werkzeugteil mit einer formgebenden Werkzeugoberfläche,
▪ zumindest einen im ersten Werkzeugteil integrierten Haltebacken,
▪ eine Verstellvorrichtung, die mit dem im ersten Werkzeugteil integrierten Haltebacken gekoppelt und derart ausgeführt ist, dass diese den Haltebacken entlang der Erstreckung der formgebenden Werkzeugoberfläche bewegen kann,
▪ zumindest eine Schiebervorrichtung mit jeweils einem Schieber, und jeweils einer Antriebsvorrichtung zum Antrieb und Bewegen des Schiebers,
▪ ein zweites Werkzeugteil mit einer formgebenden Werkzeugoberfläche,
▪ zumindest einen im zweiten Werkzeugteil integrierten Haltebacken,
▪ eine Verstellvorrichtung, die mit dem im zweiten Werkzeugteil integrierten Haltebacken gekoppelt und derart ausgeführt ist, dass diese den Haltebacken entlang der Erstreckung der formgebenden Werkzeugoberfläche bewegen kann.

Die Werkzeug-Station kann insbesondere eine Steuerungsvorrichtung aufweisen, die funktional mit der Verstellvorrichtung und der Antriebsvorrichtung des ersten Werkzeugteils sowie mit der Verstellvorrichtung des zweiten Werkzeugteils verbunden ist. Die Steuerungsvorrichtung kann insbesondere eine Ansteuerungsfunktion aufweisen, mit der zumindest ein Verfahrensschritt einer Ausführungsform des erfindungsgemäßen Verfahrens ausführbar ist. Insbesondere ist die Steuerungsvorrichtung derart ausgeführt, dass diese den im ersten Werkzeugteil integrierten Haltebacken und den im zweiten Werkzeugteil integrierten Haltebacken zeitgleich entlang derselben Bewegungsrichtung bewegen und gleichzeitig weiterhin den Schieber in Richtung zum zweiten Werkzeugteil bewegen kann.

Nach einem weiteren Aspekt ist ein Verkleidungsteil vorgesehen mit einer ersten, die Sichtseite des Verkleidungsteils bildenden ersten oder Sichtseiten-Oberfläche und einer entgegen gesetzt zu dieser gelegenen und die Rückseite des Verkleidungsteils ausbildenden zweiten oder Rückseiten-Oberfläche vorgesehen mit einem Trägerteil, das eine erste, in Richtung der Sichtseiten-Oberfläche gerichtete Oberfläche sowie einen sich in einer Längsrichtung erstreckenden länglichen Taschenabschnitt aufweist, und mit zumindest einem Dekorteil, das auf jeweils einem Beschichtungsabschnitt des Trägerteils kaschiert ist. Dabei ist der längliche Taschen-Abschnitt in seinem Querschnitt als Trägerschicht-Schleife mit einem von der Oberfläche begrenzten Taschen-Innenraum gebildet und erstreckt sich ein Randbereichsabschnitt zumindest eines jeweiligen auf das Trägerteil kaschierten Dekorteils von der Sichtseiten-Oberfläche aus in den Innenraum der Trägerschicht-Schleife. Dabei ist der Taschen-Abschnitt durch Verformung einer Trägerteil-Matte als Ausgangsmaterial des Trägerteils gebildet und so ausgeführt, dass das Trägerteil von zwei einander gegenüber liegenden Seitenflächen der Oberfläche den jeweils aufgenommenen Randabschnitt des Dekorteils in einem an der Sichtseiten-Oberfläche liegenden Andrückbereich anliegt und den Taschen-Innenraum dicht abschließt, so dass ein erster mit einer Dekorschicht kaschierter Bereich des Verkleidungsteils und ein weiterer, diesem benachbarter Bereich des Verkleidungsteils unter Ausbildung einer an der ersten Oberfläche ausgebildete sich in der Längsrichtung erstreckenden v-förmigen Nut oder länglichen Vertiefung ineinander übergehen.

Nach einem weiteren Aspekt ist ein Verkleidungsteil vorgesehen mit einer ersten, die Sichtseite des Verkleidungsteils bildenden ersten oder Sichtseiten-Oberfläche und einer entgegen gesetzt zu dieser gelegenen und die Rückseite des Verkleidungsteils ausbildenden zweiten oder Rückseiten-Oberfläche vorgesehen mit einem Trägerteil, das eine erste, in Richtung der Sichtseiten-Oberfläche gerichtete Oberfläche sowie einen sich in einer Längsrichtung erstreckenden länglichen Taschenabschnitt mit einer Trägerschicht-Schleife aufweist, und mit zumindest einem Dekorteil, das auf jeweils einem Beschichtungsabschnitt des Trägerteils kaschiert ist, wobei sich ein Randbereichsabschnitt zumindest eines jeweiligen auf das Trägerteil kaschierten Dekorteils von der Sichtseiten-Oberfläche aus in den Innenraum der Trägerschicht-Schleife erstreckt, wobei der Taschenabschnitt durch Verformung einer Trägerteil-Matte als Ausgangsmaterial des Trägerteils gebildet und so ausgeführt ist, dass das Trägerteil von zwei einander gegenüber liegenden Seitenflächen der Oberfläche den jeweils aufgenommenen Randbereichsabschnitt des Dekorteils in einem an der Sichtseiten-Oberfläche liegenden Andrückbereich anliegt und den Taschen-Innenraum dicht abschließt, so dass ein erster mit einer Dekorschicht kaschierter Bereich des Verkleidungsteils und ein weiterer, diesem benachbarter Bereich des Verkleidungsteils unter Ausbildung einer an der ersten Oberfläche ausgebildete sich in der Längsrichtung erstreckenden v-förmigen Nut entlang der Längsrichtung des Taschenabschnitts aneinander anliegen.

Die Ausführungen zu einem der Aspekte der Erfindung, insbesondere zu einzelnen Merkmalen dieses Aspektes, gelten entsprechend auch analog für die anderen Aspekte der Erfindung. Wenn in dieser Anmeldung von "zweiten" und "ersten" Werkzeugteilen und "horizontalen" oder "vertikalen" Spalten gesprochen wird, bezieht sich dies auf die in den Figuren beispielhaft dargestellte Anordnung, bei der die einander zugewandten formgebenden Wirkflächen der Werkzeugteile im Wesentlichen horizontal angeordnet sind. Es ist ebenso möglich, diese Wirkflächen vertikal oder erst einem anderen Winkel zueinander anzuordnen, so dass man dann anstelle eines "zweiten" oder "ersten" Werkzeugteils von einem "rechten" und einem "linken" Werkzeugteil sprechen würde. Diese Bezeichnungen sollen daher für den Fachmann erkennbar nicht den Schutzbereich des Patents beschränken.

Im Folgenden werden Ausführungsformen der Erfindung anhand der beigefügten Zeichnungen beschreiben, die zeigen:
Figur 1 eine perspektivische Darstellung einer Ausführungsform des erfindungsgemäßen Verkleidungsteils in Form einer Instrumententafel mit in der Figur 1 nicht sichtbaren Ausbauchungen, in die jeweils ein Randbereichsabschnitt der Dekorschicht aufgenommen ist;
Figur 2 eine perspektivische Darstellung des in der Figur 1 bezeichneten Abschnitts T für eine Ausführungsform des Verkleidungsteils in einer Darstellung entlang einer Schnittlinie analog der Schnittlinie T0-T0 der Figur 1, wobei die Randbereichsabschnitte der Dekorschicht nach einer spezifischen Art in der jeweiligen Ausbauchung aufgenommen sind;
Figur 3 einen Ausschnitt E3 der Ausführungsform des Innenverkleidungsteils nach der Figur 2 als Querschnittsdarstellung in der entlang der in der Figur 2 eingetragenen Schnittlinie T3-T3;
Figur 4 eine perspektivische Darstellung des in der Figur 1 bezeichneten Abschnitts T für eine Ausführungsform des Verkleidungsteils in einer Darstellung entlang einer Schnittlinie analog der Schnittlinie T0-T0 der Figur 1, wobei die Randbereichsabschnitte der Dekorschicht nach einer weiteren spezifischen Art in der jeweiligen Ausbauchung aufgenommen sind;
Figur 5 einen Ausschnitt E5 der Ausführungsform des Innenverkleidungsteils nach der Figur 4 als Querschnittsdarstellung in der entlang der in der Figur 4 eingetragenen Schnittlinie T5-T5;
Figur 6 in schematischer Darstellung ein Verfahrensschritt, bei dem ein für das erfindungsgemäße Herstellungsverfahren vorgesehenes Halbzeug zur Ausbildung einer Dekorschicht erwärmt wird;
Figur 7 in schematischer Darstellung ein Verfahrensschritt, bei dem ein für das erfindungsgemäße Herstellungsverfahren vorgesehenes Halbzeug zur Ausbildung einer Trägerschicht erwärmt wird;
Figuren 8 bis 10 verschiedene Verfahrenszustände einer Ausführungsform des erfindungsgemäßen Verfahrens zur Herstellung eines Verkleidungsteils mit einem Abschnitt gemäß Figur 2 oder Figur 4;
Figur 11 einen vergrößerten Ausschnitt der Darstellung einer ersten speziellen Variante des in der Figur 10 dargestellten Verfahrenszustands;
Figur 12 einen vergrößerten Ausschnitt der Darstellung einer zweiten speziellen Variante des in der Figur 10 dargestellten Verfahrenszustands;
Figuren 13 bis 16 verschiedene weitere Verfahrenszustände der Ausführungsform des erfindungsgemäßen Verfahrens, von dem vorangehenden Verfahrenszustände in den Figuren 8 bis 10 dargestellt sind;
Figur 17 einen Ausschnitt der mit dem Verfahren nach den Figuren 20 bis 22 hergestellten Verkleidungsteils gemäß Figur 18 entlang einer Schnittlinie analog der Schnittlinie T0-T0 der Figur 1;
Figur 18 eine perspektivische Darstellung eines in der Figur 1 bezeichneten Abschnitts T eines mit einer weiteren Ausführungsform des erfindungsgemäßen Verfahrens hergestellten Verkleidungsteils in einer Darstellung entlang einer Schnittlinie analog der Schnittlinie T0-T0 der Figur 1;
Figur 19 einen Ausschnitt der Ausführungsform des Innenverkleidungsteils nach der Figur 18 als Querschnittsdarstellung entlang der in der Figur 6 eingetragenen Schnittlinie T18-T18;
Figuren 20 bis 22 verschiedene Verfahrenszustände einer weiteren Ausführungsform des erfindungsgemäßen Verfahrens;
Figur 23 einen Ausschnitt der mit dem Verfahren nach den Figuren 20 bis 22 hergestellten Verkleidungsteils gemäß Figur 18 entlang einer Schnittlinie analog der Schnittlinie T0-T0 der Figur 1;
Figur 24 eine perspektivische Darstellung eines in der Figur 1 bezeichneten Abschnitts T eines mit einer weiteren Ausführungsform des erfindungsgemäßen Verfahrens hergestellten Verkleidungsteils in einer Darstellung entlang einer Schnittlinie analog der Schnittlinie T0-T0 der Figur 1;

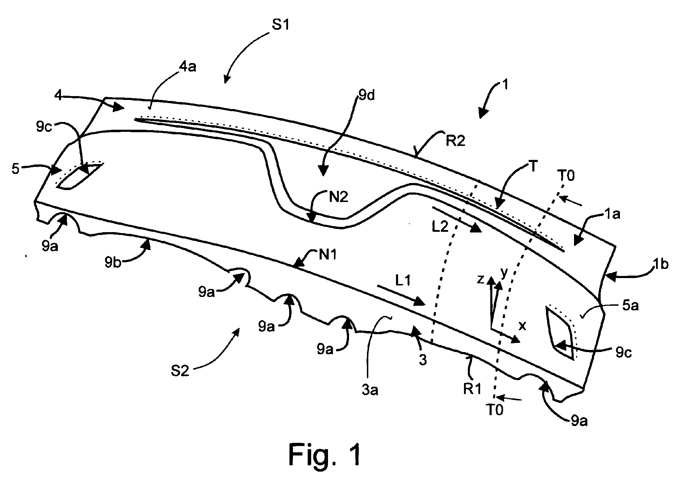

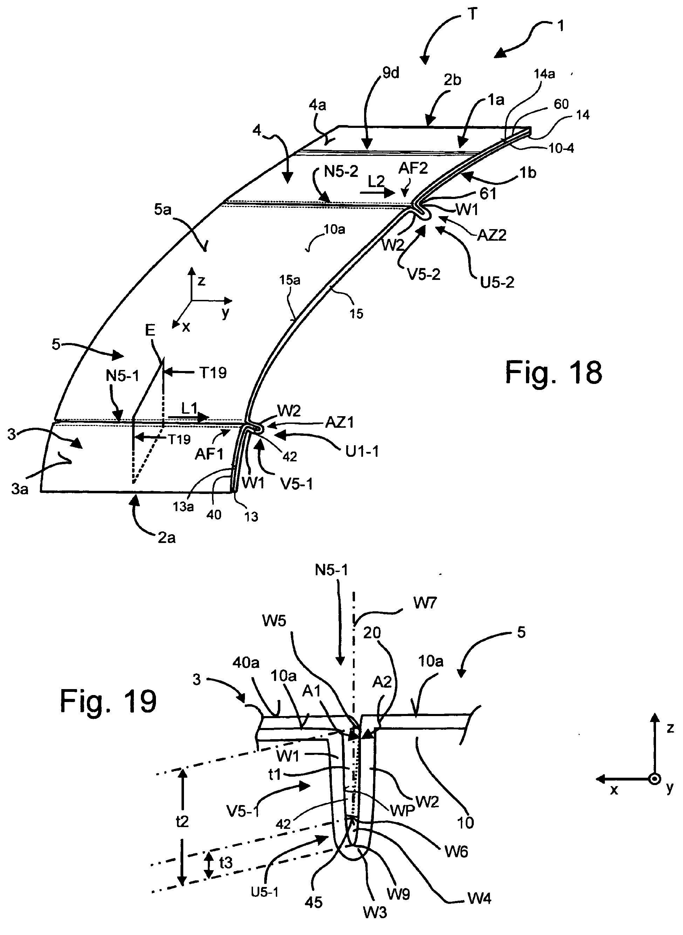

Figur 18 eine perspektivische Darstellung eines Abschnitts einer weiteren Ausführungsform des Innenverkleidungsteils, wobei dieser Abschnitt in analoger Weise wie der Abschnitt T der Figur 1 definiert ist;
Figur 19 einen Ausschnitt E26 der Ausführungsform des Innenverkleidungsteils nach der Figur 18 als Querschnittsdarstellung in der entlang der in der Figur 18 eingetragenen Schnittlinie T19-T19;

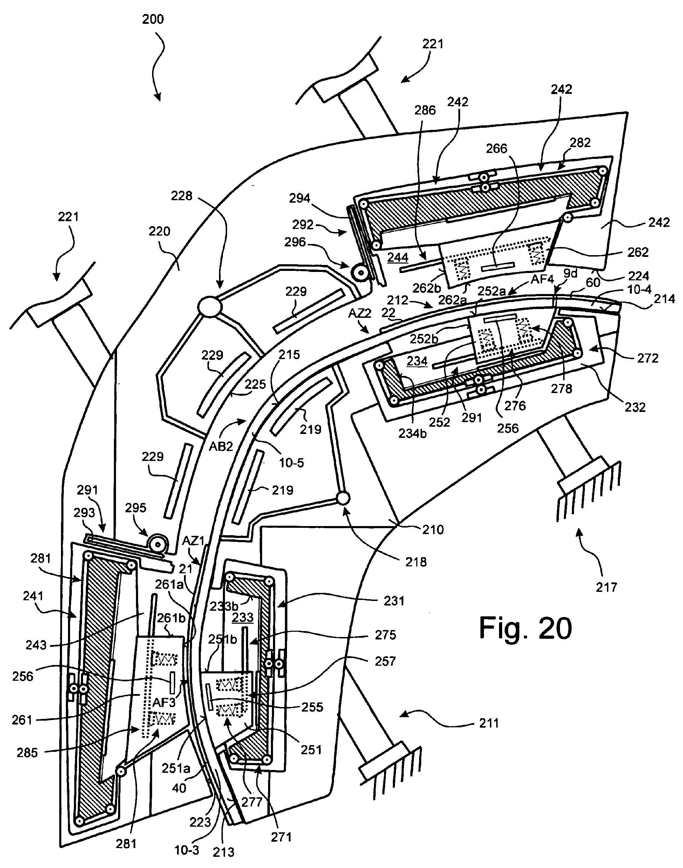

Figuren 20 bis 22 verschiedene Verfahrenszustände einer weiteren Ausführungsform des erfindungsgemäßen Verfahrens zur Herstellung eines Verkleidungsteils mit einem Abschnitt gemäß Figur 18;

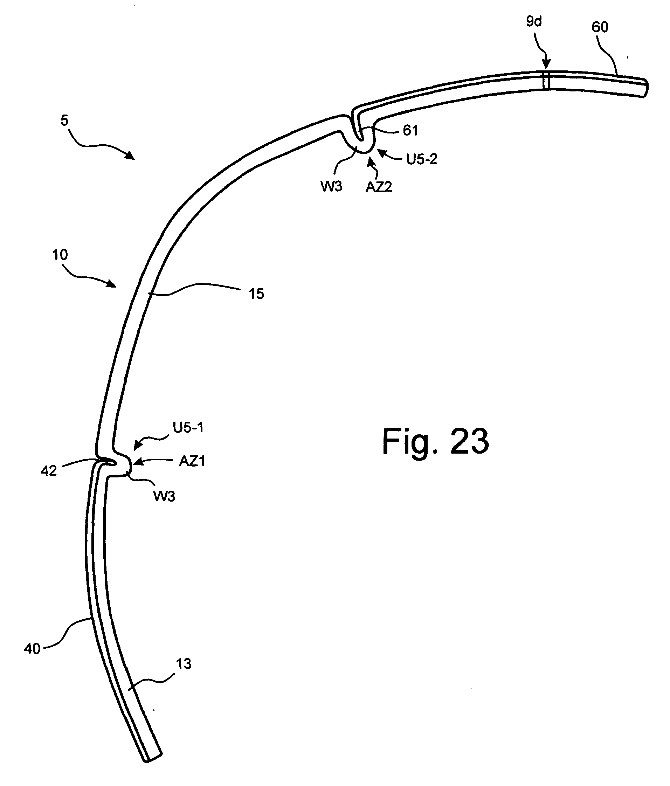

Figur 23 einen Ausschnitt der mit dem Verfahren nach den Figuren 20 bis 22 hergestellten Verkleidungsteils gemäß Figur 18 entlang einer Schnittlinie analog der Schnittlinie T0-T0 der Figur 1;

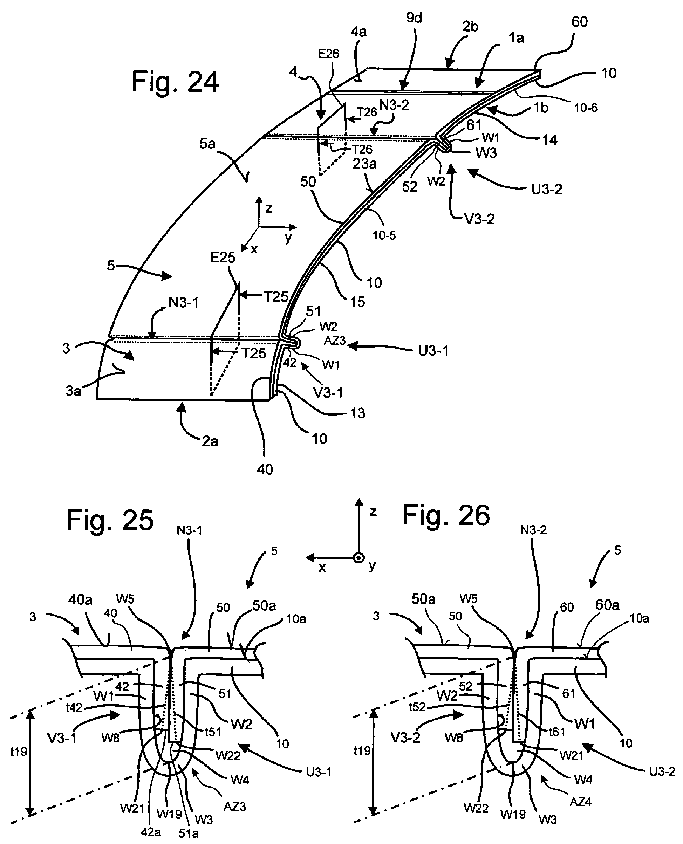

Figur 24 eine perspektivische Darstellung eines Abschnitts einer weiteren Ausführungsform des Verkleidungsteils, wobei dieser Abschnitt in analoger Weise wie der Abschnitt T der Figur 1 definiert ist;
Figur 25 einen Ausschnitt E25 der Ausführungsform des Innenverkleidungsteils nach der Figur 24 als Querschnittsdarstellung in der entlang der in der Figur 24 eingetragenen Schnittlinie T25-T25;
Figur 26 einen Ausschnitt E26 der Ausführungsform des Innenverkleidungsteils nach der Figur 24 als Querschnittsdarstellung in der entlang der in der Figur 24 eingetragenen Schnittlinie T26-T26;

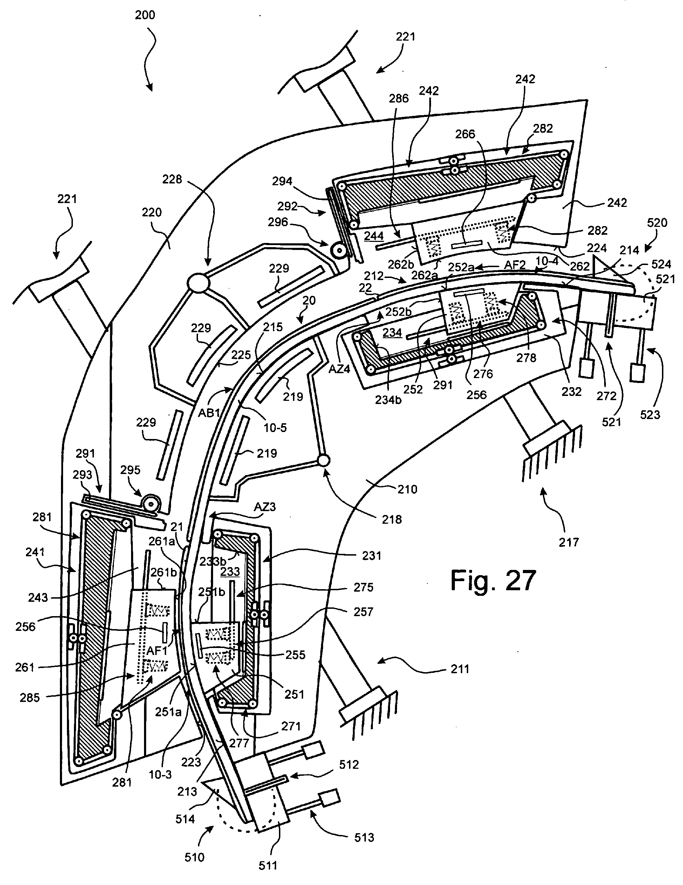

Figur 27 ein Verfahrenszustand einer weiteren Ausführungsform des erfindungsgemäßen Verfahrens zur Herstellung eines Verkleidungsteils mit einem Abschnitt gemäß Figur 24;

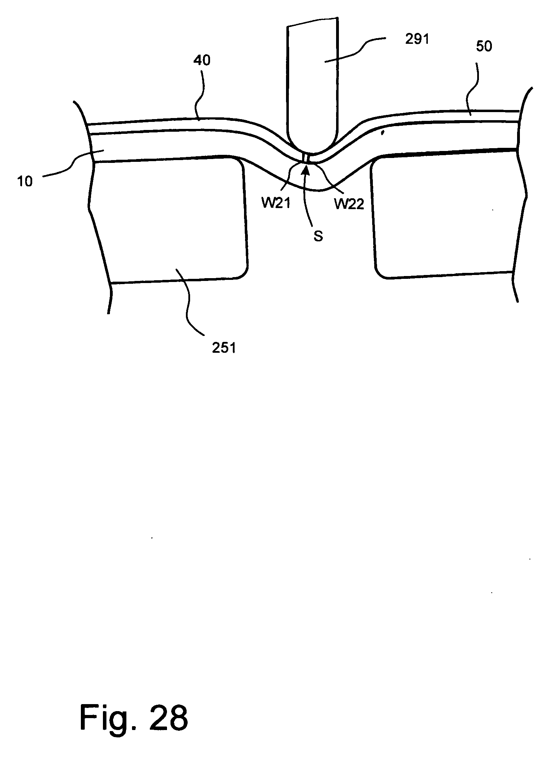

Figur 28 einen vergrößerten Ausschnitt der Darstellung des in der Figur 27 dargestellten Verfahrenszustands;

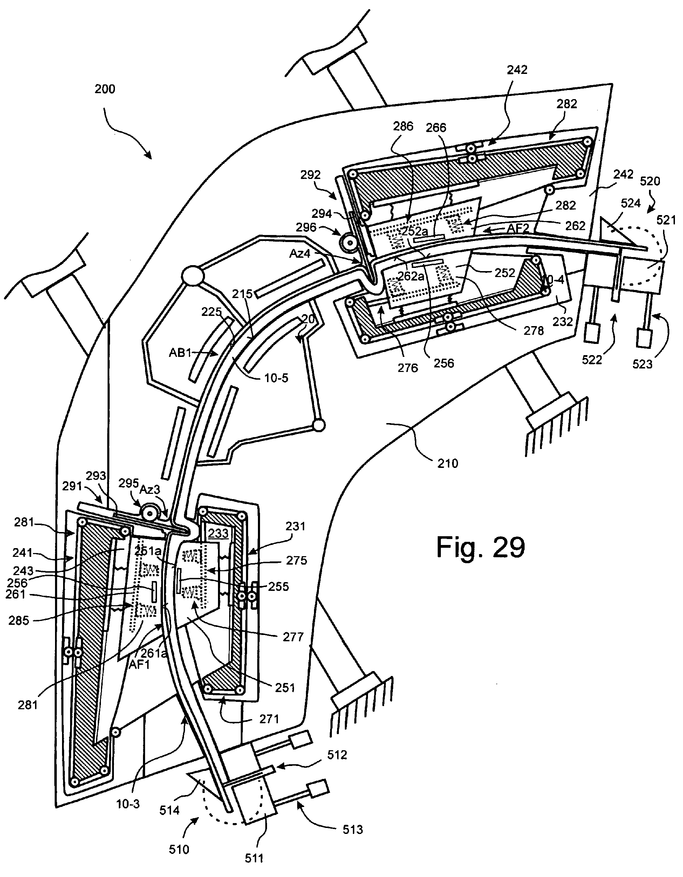

Figuren 29 bis 31 verschiedene Verfahrenszustände der Ausführungsform des erfindungsgemäßen Verfahrens zur Herstellung eines Verkleidungsteils mit einem Abschnitt gemäß Figur 24;

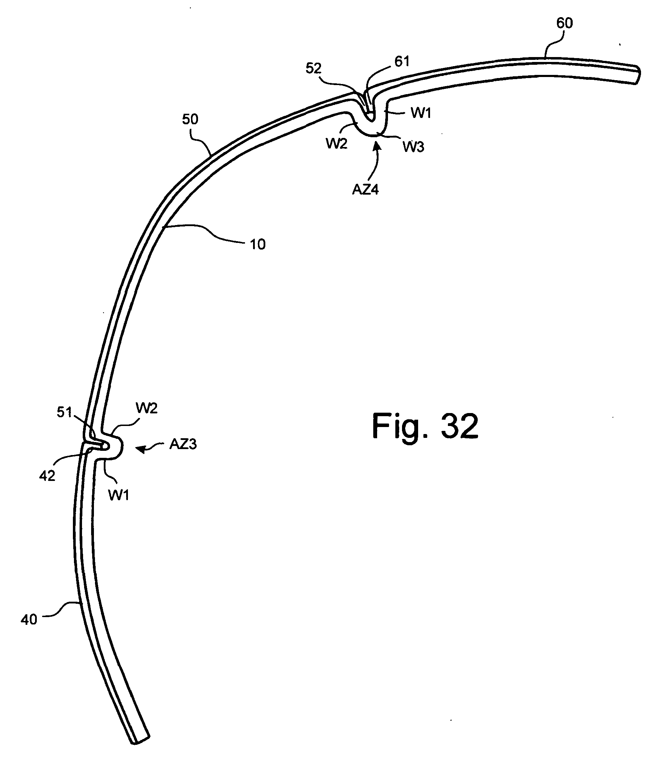

Figur 32 einen Ausschnitt der mit dem Verfahren nach den Figuren 27 bis 31 hergestellten Verkleidungsteils gemäß Figur 24 entlang einer Schnittlinie analog der Schnittlinie T0-T0 der Figur 1;

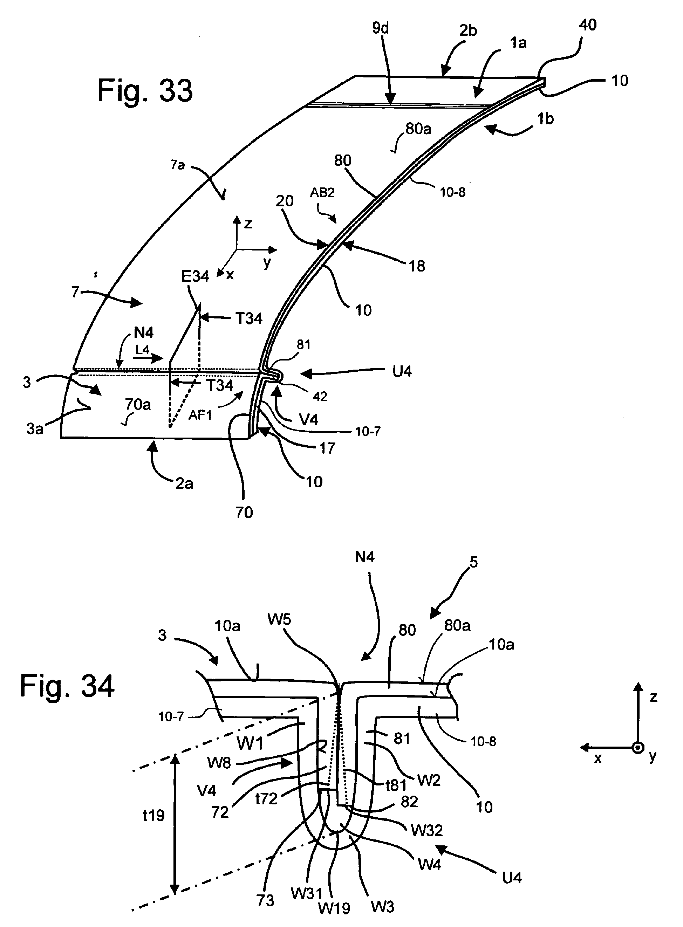

Figur 33 eine perspektivische Darstellung eines in der Figur 1 bezeichneten Abschnitts T eines mit einer weiteren Ausführungsform des erfindungsgemäßen Verfahrens hergestellten Verkleidungsteils in einer Darstellung entlang einer Schnittlinie analog der Schnittlinie T0-T0 der Figur 1;
Figur 34 einen Ausschnitt E34 der Ausführungsform des Innenverkleidungsteils nach der Figur 33 als Querschnittsdarstellung in der entlang der in der Figur 33 eingetragenen Schnittlinie T34-T34;

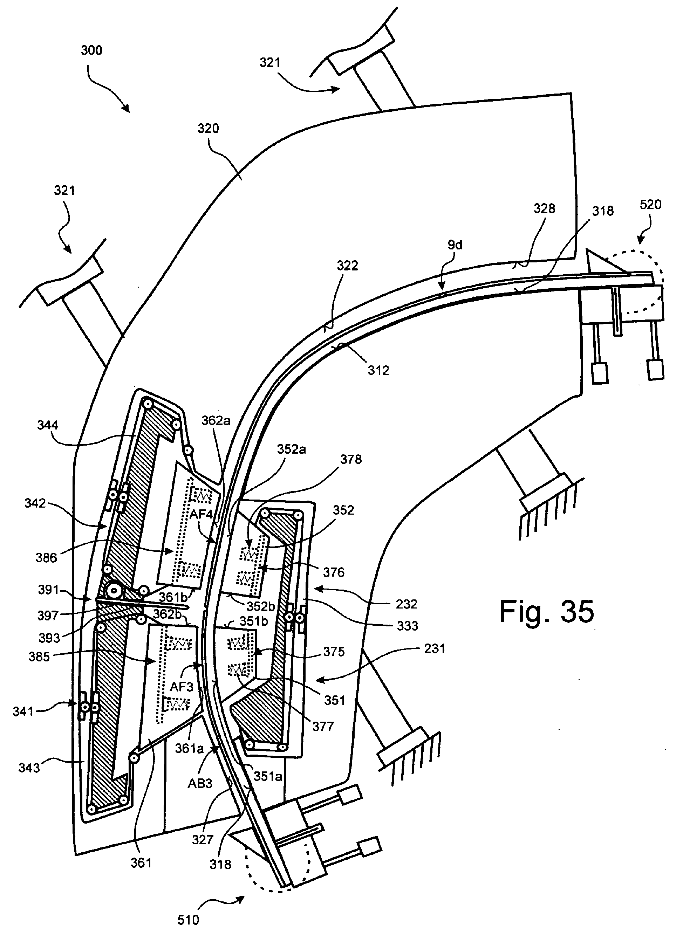

Figur 35 ein Verfahrenszustand einer weiteren Ausführungsform des erfindungsgemäßen Verfahrens zur Herstellung eines Verkleidungsteils mit einem Abschnitt gemäß Figur 33;

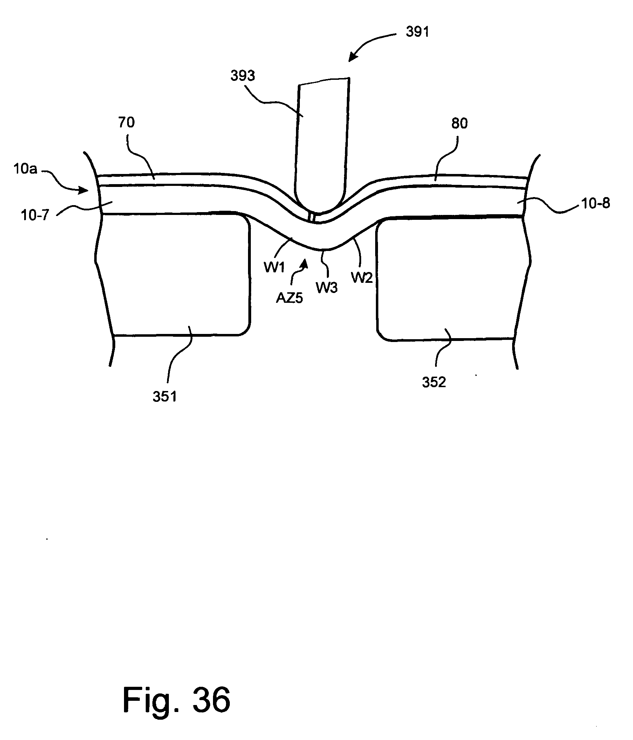

Figur 36 einen vergrößerten Ausschnitt der Darstellung des in der Figur 35 dargestellten Verfahrenszustands;

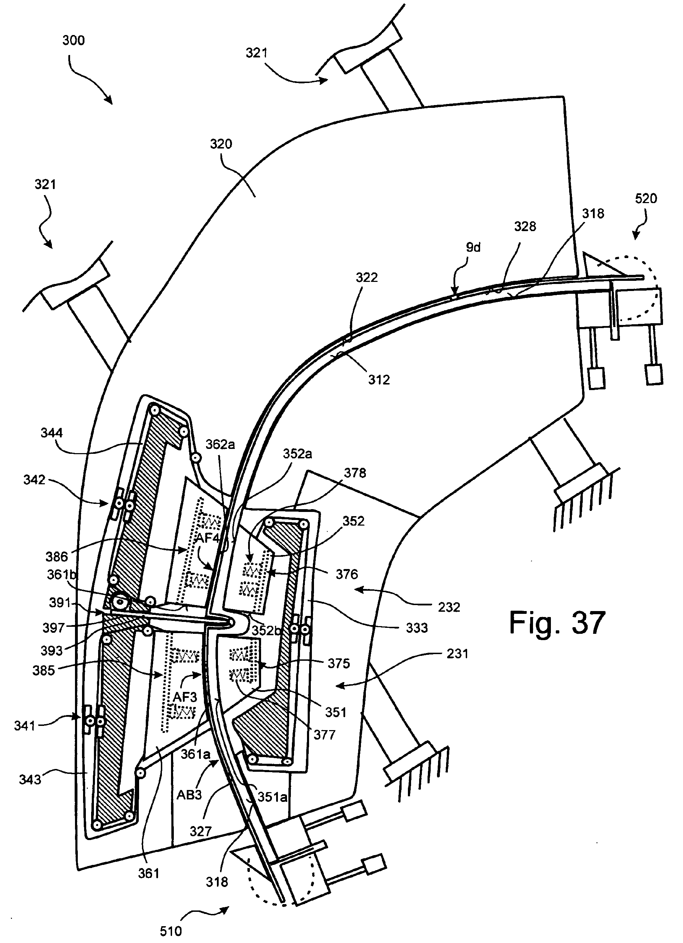

Figuren 37 bis 40 verschiedene Verfahrenszustände der Ausführungsform des erfindungsgemäßen Verfahrens zur Herstellung eines Verkleidungsteils mit einem Abschnitt gemäß Figur 33;

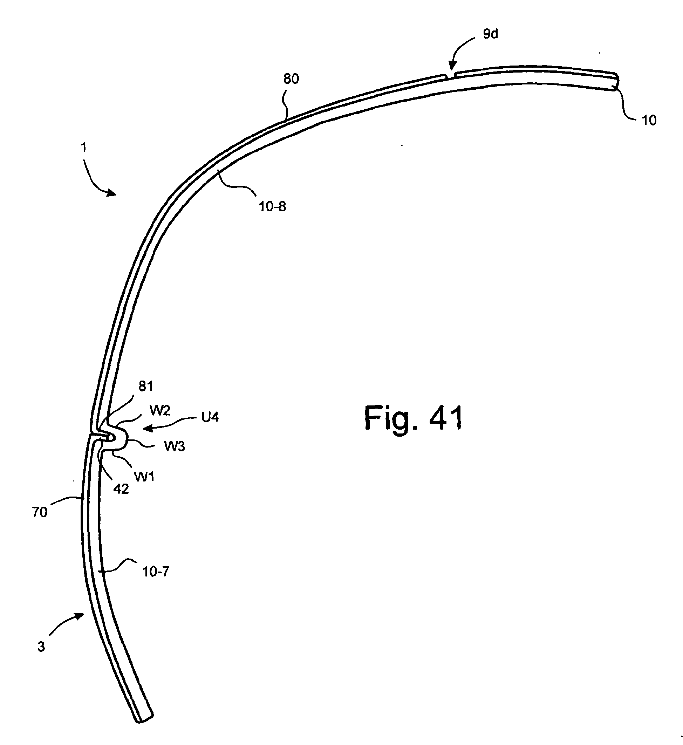

Figur 41 einen Ausschnitt der mit dem Verfahren nach den Figuren 35 bis 40 hergestellten Verkleidungsteils gemäß Figur 34 entlang einer Schnittlinie analog der Schnittlinie T0-T0 der Figur 1;

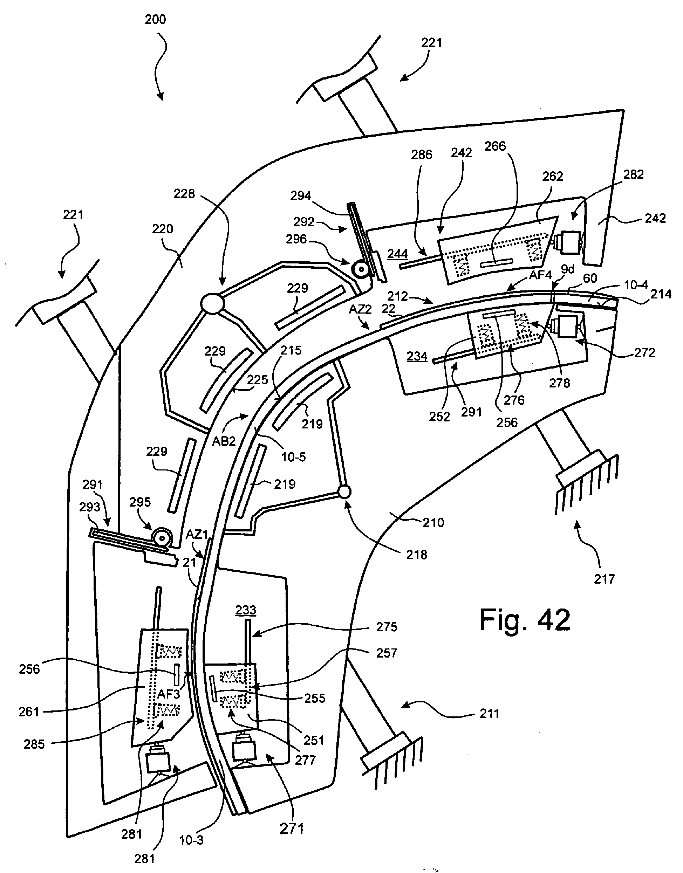

Figur 42 eine weitere Ausführungsform der erfindungsgemäßen Herstellungsvorrichtung.

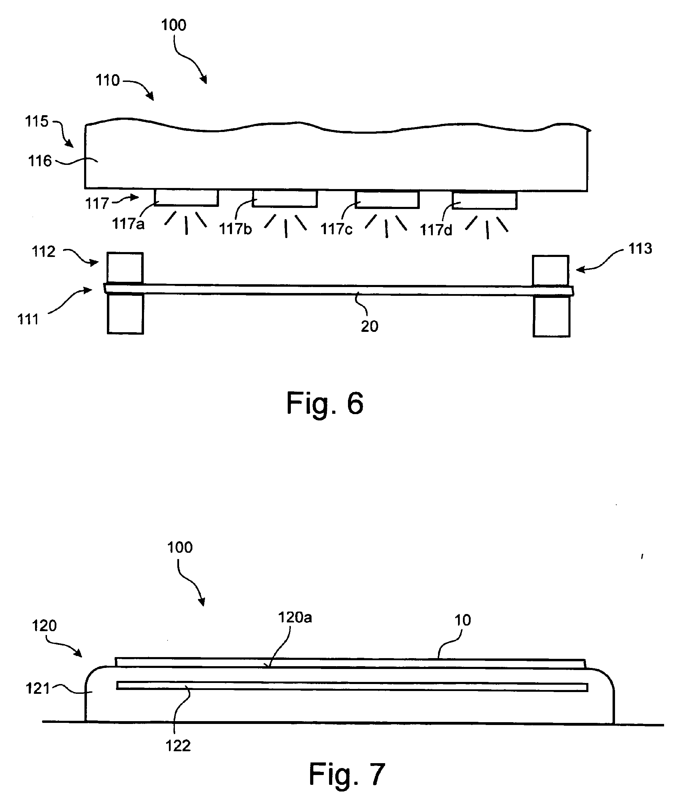

In den Figuren 1 bis 7 sind verschiedene Ausführungsformen des erfindungsgemäßen Verkleidungsteils 1 dargestellt. In den Figuren 6 bis 17 ist eine Ausführungsform des erfindungsgemäßen Verfahrens zur Herstellung eines derartigen Verkleidungsteils 1 nach der Erfindung dargestellt.

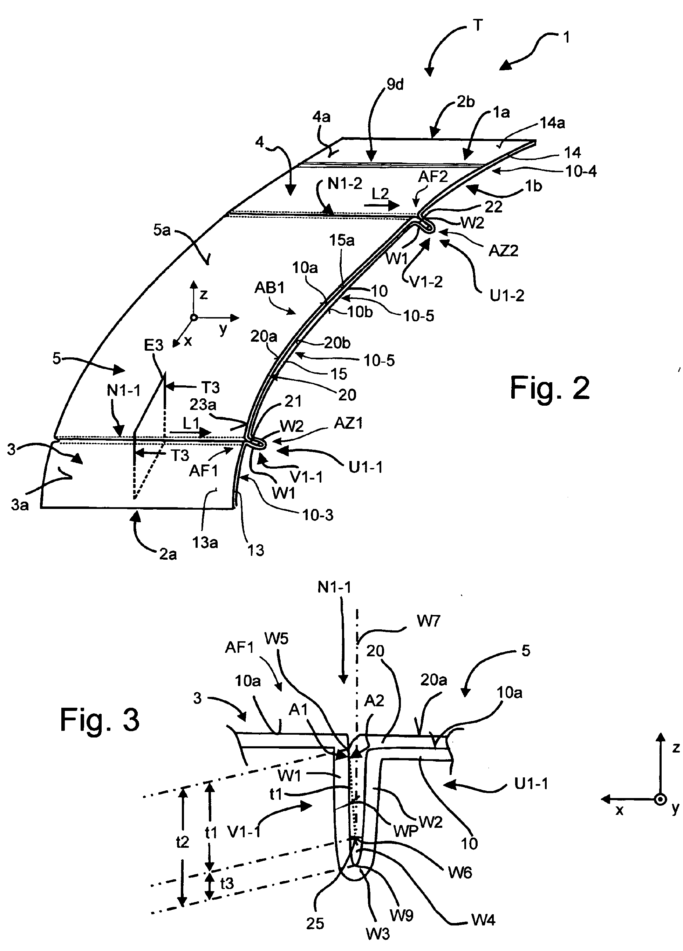

In die Figuren 1 und 2 ist ein lokales Koordinatensystem mit einer X-Achse, einer Y-Achse und einer Z-Achse eingetragen, wobei die X-Achse eine Längsrichtung, die Y-Achse eine Querrichtung und die Z-Richtung eine Dickenrichtung des Verkleidungsteils 1 bzw. der Instrumententafel definieren. Dieses lokale Koordinatensystem ist an einem jeweiligen Punkt der Oberfläche 1a des Verkleidungsteils 1 derart orientiert, dass die X-Achse eine Längsrichtung, die Y-Achse jeweils in Richtung eine Tangente an die jeweiligen Punkt der Oberfläche 1a des Verkleidungsteils 1 verlaufen. Die in den Figuren 1 bis 9 dargestellten Ausführungsformen des erfindungsgemäßen Verkleidungsteils 1 sind Ausführungsformen einer Instrumententafel für den Innenraum eines Kraftfahrzeugs.

Die erfindungsgemäße Instrumententafel 1 ist generell zum Einbau im Innenraum eines Kraftfahrzeugs vorgesehen und ist dazu an einem Rahmenbauteil des Fahrzeugs (nicht dargestellt) anbringbar, d.h. die Instrumententafel 1 ist im eingebauten Zustand an dem Rahmenbauteil angebracht. An einer ersten Randseite R1 schließt sich ein Unterbau-Formteil (nicht gezeigt) als separates Verkleidungsteil für den Beinbereich in einem vorderen Bereich des Fahrzeug-Innenraums an. Das Unterbau-Formteil bildet zusammen mit der Instrumententafel 1 einen Verkleidungskörper, der als Bestandteil der Cockpit-Ausstattung zur Anordnung an der Windschutzscheibe vorgesehen ist. Dabei ist eine entgegen gesetzt zur ersten Randseite R1 gelegene zweite Randseite R2 an der Windschutzseite gelegen. Die Instrumententafel 1 hat vorzugsweise eine Form, die - teilweise in Kombination mit dem an dieser angeordneten Unterbau-Formteil - eine oder mehrere der folgenden Öffnungen aufweist: Öffnungen 9a zur Aufnahme Lüftungsleitungs-Endstücken, eine Öffnung 9b zur Aufnahme einer Anzeigevorrichtung, Öffnungen 9c zur Aufnahme eines Lautsprechers, ein Öffnung 9d zur Aufnahme einer Entfrosterdüse. An den jeweiligen Öffnungen 9c, 9d ausgebildete Abschrägungen sind mit einer punktierten Linie dargestellt.

Generell ist nach der Erfindung ein Verkleidungsteil 1 insbesondere für einen Fahrzeug-Innenraum vorgesehen. Grundsätzlich kann das erfindungsgemäße Verkleidungsteil auch anders gestaltet und zu einem anderen Zweck vorgesehen und z.B. als Tür-Innenverkleidungsteil ausgeführt sein.

Das Verkleidungsteil 1 und somit die in den Figuren 1 bis 9 dargestellte Instrumententafel 1 weist eine erste Oberfläche 1a oder eine Sichtseiten-Oberfläche 1 a, die die Sichtseite des Verkleidungsteil 1 bildet, und eine entgegen gesetzt zu der ersten Oberfläche 1 a orientierte zweite Oberfläche 1 b oder Rückseiten-Oberfläche 1b auf. Weiterhin weist das Verkleidungsteil 1 eine erste Randseite R1 und eine zweite Randseite R2 auf, die in Bezug auf die Längsrichtung X entgegen gesetzt zueinander gelegen sind und sich entlang der Querrichtung Y erstrecken.

Weiterhin weist das Verkleidungsteil 1 zwei an dessen Sichtseite ausgebildete Nuten N1, N2 auf, die sich jeweils entlang einer Längsrichtung L1 bzw. L2 erstrecken. Entsprechend der Nuten N1, N2 weist die dargestellte Instrumententafel 1 hinsichtlich ihrer flächigen Erstreckung einen ersten Abschnitt 3 oder einen ersten Seitenabschnitt 3 mit einem ersten Oberflächen-Abschnitt 3a, einen zweiten Abschnitt 3 oder zweiten Seitenabschnitt 4 mit einem zweiten Oberflächen-Abschnitt 4a und einen zwischen dem ersten Abschnitt 3 und dem zweiten Abschnitt 4 gelegenen dritten Abschnitt 5 oder Mittelabschnitt 5 mit einem dritten oder mittleren Oberflächen-Abschnitt 5a auf, die in einer Tiefenrichtung X des Verkleidungsteils 1 hintereinander angeordnet sind und wobei die Oberflächen-Abschnitt 3a, 4a, 5a Bestandteile der ersten Oberfläche 1a des Verkleidungsteils 1 bzw. der Instrumententafel 1 sind. Der erste Seitenabschnitt 3, der zweite Seitenabschnitt 4 sowie der Mittelabschnitt 5 erstrecken sich jeweils entlang einander in einer Längsrichtung Y des Verkleidungsteils 1.

Das Verkleidungsteil 1 weist mindestens eine solcher Nuten auf, die sich jeweils abschnittsweise in ihrer Längsrichtung erstreckt und sich dabei von einer ersten Randseite zu einer zu dieser entgegen gesetzt gelegenen Randseite des Verkleidungsteils 1 oder innerhalb des Verkleidungsteils 1 erstreckt, wobei sich die Endabschnitte der jeweiligen Nut in einem Abstand zum jeweiligen Randabschnitt gelegen sind.

Generell und bei den in den Figuren 2 bis 5,18 bis 19, 24 bis 26 und 33 bis 34 dargestellten Ausführungsformen des erfindungsgemäßen Verkleidungsteils 1 bzw. der Instrumententafel weist das erfindungsgemäße Verkleidungsteil 1 jeweils eine in sich steife und somit formstabiles und tragendes Trägerteil 10, die also als Trägerteil 10 gebildet ist, und ein im Mittelabschnitt 5 auf dem Trägerteil 10 aufkaschiertes Dekorteil 20 auf, das somit eine Dekorschicht 20 des Verkleidungsteils 1 bildet. Dabei ist ein Trägerteil-Abschnitt 10-5 des Trägerteils 10 vom Dekorteil 20 beschichtet und sind die Trägerteil-Abschnitte oder Randbereichsabschnitte 10-3, 10-4 des Trägerteils 10 nicht von einem Dekorteil beschichtet. Die Dekorschicht 20 weist eine erste Oberfläche 20a und eine entgegen gesetzt zu dieser orientierte zweite Oberfläche 20b auf, die an einer ersten Oberfläche 10a des Trägerteils 10 anliegt. Die erste Oberfläche 20a der Dekorschicht 20 bildet somit eine Außenseite des Innenverkleidungsteils 1 in dessen eingebauten Zustand von einer Sichtseite S1 aus gesehen und ist dabei dem Innenraum des Fahrzeugs zugewandt. Das Trägerteil 10 weist eine zweite Oberfläche 10b oder eine Trägerteil-Rückseite von einer Rückseite S2 aus gesehen auf, die entgegen gesetzt zu dessen ersten Oberfläche 10a gelegen ist.

Bei den in den Figuren 2 bis 5,18 bis 19, 24 bis 26 und 33 bis 34 dargestellten Ausführungsformen des Verkleidungsteils 1 geht der erste Seitenabschnitt 3 und der Mittelabschnitt 5 des Verkleidungsteils 1 über eine an der Oberfläche 1 a ausgebildete jeweilige v-förmige Nut oder längliche Vertiefung N1-1, N2-1, N3-1, N4, N5-1 (Figuren 18, 19) die jeweils entlang der y-Richtung verläuft, ineinander über. Weiterhin geht bei den in den Figuren 2 bis 8 dargestellten Ausführungsformen der Mittelabschnitt 5 und der zweite Seitenabschnitt 4 über eine an der Oberfläche 1 a ausgebildete weitere v-förmige Nut oder längliche Vertiefung N1-2, N2-2, N3-2, N5-2, die jeweils entlang der y-Richtung verläuft, ineinander über. Dabei bildet sich die jeweilige v-förmige Nut N1-1, N1-2, N2-1, N2-2, N3-1, N3-2, N4, N5-1, N5-2 dadurch aus, dass die Trägerschicht 10 im in der zweiten oder Y-Richtung ausgebildeten Querschnitt, also in der Längsrichtung der Nut N1-1, N1-2, N2-1, N2-2, N3-1, N3-2, N4 gesehen, eine u-förmige kurvenförmige Trägerschicht-Schleife ausbildet, so dass die Trägerteil-Rückseite 10b dieses Bereichs als Ausbauchung geformt ist, und dadurch, dass in die jeweilige Trägerschicht-Schleife zumindest ein Seitenabschnitt einer jeweils anliegenden Dekorschicht (z.B. einer der Seitenabschnitte 21, 22 in der Figur 2) zur Ausbildung einer länglichen, entlang der Y-Richtung verlaufenden Endbereich-Aufnahme aufgenommen ist. Die Innenfläche der Trägerschicht-Schleife begrenzt einen Innenraum W4. Die Trägerschicht-Schleife zusammen mit einem von dieser aufgenommenen Seitenabschnitt einer jeweils anliegenden Dekorschicht bilden zusammen jeweils einen Taschen-Abschnitt oder eine Endbereich-Aufnahme.

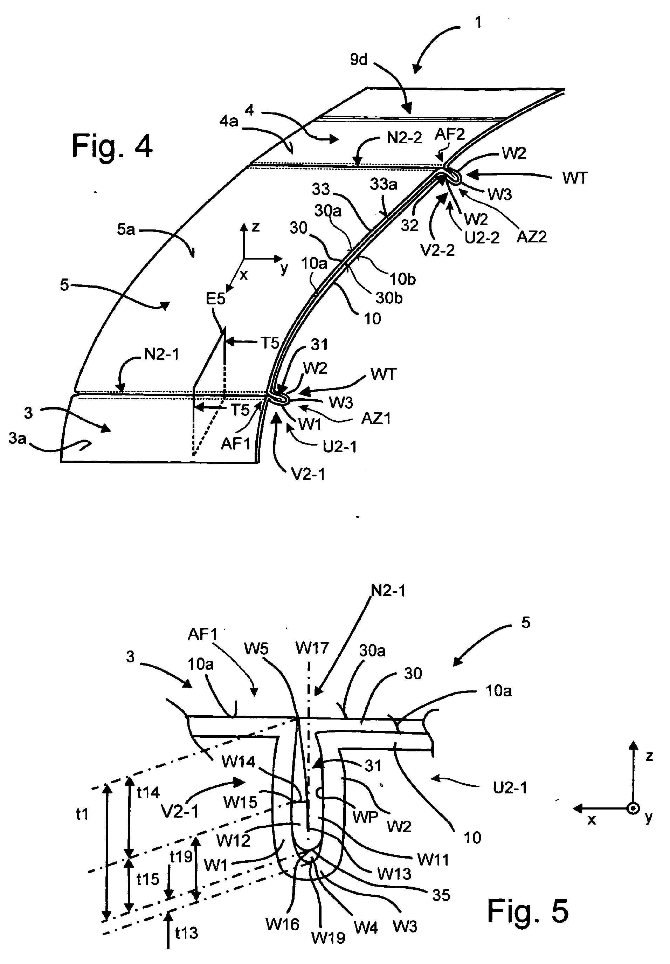

Die zwei Taschen-Abschnitte oder Endbereich-Aufnahmen mit den jeweils zugehörigen kurvenförmigen Trägerschicht-Schleifen der Trägerschicht 10 sind in der Ausführungsform der Figur 2 mit den Bezugszeichen U1-1, U1-2 bzw. V1-1, V1-2 und in der Ausführungsform der Figur 4 mit den Bezugszeichen U2-1, U2-2 bzw. V2-1, V2-2 versehen. Bei den Ausführungsformen der Figuren 2 und 4 ist der Mittelabschnitt 5 als Bereich mit einer Trägerschicht 10 und einer auf dieser kaschierten Dekorschicht 20 bzw. 30 gebildet. Somit ist generell ein erfindungsgemäßes Verkleidungsteil 1 mit einer ersten, die Sichtseite des Verkleidungsteils 1 bildenden ersten oder Sichtseiten-Oberfläche 1a und einer entgegen gesetzt zu dieser gelegenen und die Rückseite des Verkleidungsteils 1 ausbildenden zweiten oder Rückseiten-Oberfläche 1 b vorgesehen mit einem Trägerteil 10, das eine erste, in Richtung der Sichtseiten-Oberfläche 1 a gerichtete Oberfläche 10a sowie einen sich in einer Längsrichtung (Bezugszeichen L1, L2) erstreckenden länglichen Taschenabschnitt U1-1 und U1-2 (Figur 2), U2-1 und U2-2 (Figur 4), U3-1 und U32-2 (Figur 19), U5-1 und U5-2 (Figur 18), U4 (Figur 33) oder eine längliche Endbereich-Aufnahme aufweist, und mit zumindest einem Dekorteil (Bezugszeichen 20, 30, 40, 60, 70, 80), das auf jeweils einem Beschichtungsabschnitt des Trägerteils 10 kaschiert ist. Dabei ist der längliche Taschen-Abschnitt in seinem Querschnitt als Trägerteil-Schleife V1-1 und V1-2 (Figur 2), V2-1 und V2-2 (Figur 4), V3-1 und V32-2 (Figur 19), V5-1 und V5-2 (Figur 18), V4 (Figur 33) mit einem von der Oberfläche 10a begrenzten Taschen-Innenraum (z.B. Bezugszeichen "W4" in Figur 3) gebildet und erstreckt sich ein Randbereichs-Abschnitt 21 oder 22 (Figur 2), 31 oder 32 (Figur 4), 41 oder 42 (Figur 18), 42 und 21 oder 22 und 61 (Figur 24), 42 und 81 (Figur 33) zumindest eines jeweiligen auf das Trägerteil 10 kaschierten Dekorteils von der Sichtseiten-Oberfläche 1a aus in den Innenraum der Trägerschicht-Schleife. Dabei ist der Taschen-Abschnitt durch Verformung einer Trägerteil-Matte als Ausgangsmaterial des Trägerteils 10 gebildet und so ausgeführt, dass das Trägerteil 10 von zwei einander gegenüber liegenden Seitenflächen der Oberfläche 10a den jeweils aufgenommenen Randbereichs-Abschnitt des Dekorteils in einem an der Sichtseiten-Oberfläche 1a liegenden Andrückbereich anliegt und den Taschen-Innenraum dicht abschließt, so dass ein erster mit einer Dekorschicht 20 kaschierter Abschnitt des Verkleidungsteils 1 und ein weiterer, diesem benachbarter Abschnitt des Verkleidungsteils 1 unter Ausbildung einer an der ersten Oberfläche 1 a ausgebildete sich in der Längsrichtung (Bezugszeichen L1, L2) erstreckenden v-förmigen Nut oder länglichen Vertiefung ineinander übergehen.

Insbesondere kann vorgesehen sein, dass die Trägerschicht 10 aus einem thermoplastischen Material gebildet ist oder besteht. Alternativ oder zusätzlich kann vorgesehen sein, dass die zumindest eine Dekorschicht eines Verkleidungsteils 1 aus einem thermoplastischen Material gebildet ist oder besteht.

Bei der Ausführungsform des erfindungsgemäßen Verkleidungsteils 1 der Figur 2 sind die zwei Seitenabschnitte 21, 22 in jeweils einer Trägerschicht-Schleife V1-1 bzw. V1-2 der Trägerschicht 10 zur Ausbildung der Endbereich-Aufnahmen gelegen, so dass ein mittlerer Abschnitt oder Mittel-Abschnitt 23 der Dekorschicht 20 flächig auf der Trägerschicht 10 gelegen ist. Deshalb ist dessen Außenseite 23a Bestandteil der Oberfläche 1a des Verkleidungsteils 1.

Die Figur 3 zeigt den Seitenabschnitt 21, der im Verkleidungsteil-Querschnitt gesehen (Figur 3) geradlinig oder nahezu geradlinig oder weitgehend geradlinig in die Trägerschicht-Schleife V1-1 hinein ragt, so dass der Seitenabschnitt 21 in dem Innenraum W4 der Trägerschicht-Schleife V1-1 gelegen ist. Der "Ausdruck "weitgehend geradlinig" bedeutet hierin, dass die Mittellinie W7 des Querschnitts (wie z.B. in der Figur 3 gezeigt) der Dekorschicht 20 innerhalb des Innenraums W4 einen Richtungswechsel von weniger als 45 Grad vollzieht.

Die Länge, mit der der Seitenabschnitt 21 in einem Innenraum W4 der jeweiligen Trägerschicht-Schleife gelegen ist, ist in der Figur 3 für die Trägerschicht-Schleife V1-1 mit dem Bezugszeichen "t1" gezeichnet. Dabei ist die Länge t1 als kürzester Abstand der Punkte W5 und W6 definiert. Die Punkte W5 und W6 sind aufgrund eines Querschnitts des Verkleidungsteils 1 definiert, der sich bei einer Blickrichtung in der Längserstreckung der Nut N1-1 ergibt, oder als in der Fläche liegt, die sich senkrecht zur Tangente an die Nutlinie erstreckt, die die Verbindungslinie der entgegen der Dickenrichtung Z gesehen jeweils tiefsten Punkte W5 oder Wurzelpunkte der jeweiligen Nut ist. Ein solcher Querschnitt ist in den Figuren 3, 5, 19, 25, 26 und 34 gezeigt.

Der Punkt W5 ergibt sich in diesem Querschnitt generell als der Wurzelpunkt der v-förmigen Nut N und wie z.B. in der Figur 3 an der Nut N1-1 gezeigt, als derjenige Punkt, an dem die Konturlinie der Oberfläche 3a des Verkleidungsteils 1 und die Oberfläche 5a des Verkleidungsteils 1 von deren flächigen Erstreckung aus gesehen zusammentreffen. Generell ist nach der Erfindung vorgesehen, dass die Oberflächen, die im Punkt W5 aneinander anliegen, ein dichtes Abschließen des Innenraums W4 existiert, ohne dass das Verkleidungsteil 1 an der jeweiligen Endbereich-Aufnahme eine Naht oder eine Klammer zum Zusammenhalten der Schenkel W1, W2 aufweist.

Weiterhin ist generell der Punkt W6 derjenige Punkt des im Innenraum W4 gelegenen Außenrand-Abschnitts 25 der Dekorschicht 20 (Figur 3), der von dem Punkt W5 in dem genannten Querschnitt gesehen, am weitesten entfernt liegt. Die Punkte W5 und W6 ergeben sich im jeweiligen Querschnitt, der nach vorstehenden Kriterien definiert ist, so dass in räumlicher Betrachtungsweise die Punkte W5 und die Punkte W6 jeweils eine Linie des Verkleidungsteils 1 bilden. Bei der Ausführungsform der Figur 2 ist die Oberfläche 3a durch die Oberfläche 10a der Trägerschicht 10 im ersten Bereich 3 gebildet und ist die Oberfläche 5a durch die Oberfläche 20a der Dekorschicht 20 im Mittelabschnitt 5 gebildet. Deshalb ergibt sich der Punkt W5 als der Punkt, an dem die Konturlinien der Oberfläche 3a und der Oberfläche 20a von ihrer jeweiligen flächigen Erstreckung aus gesehen zusammentreffen. Weiterhin ist in der Figur 2 die geometrische Mittellinie W7 des Abschnitts 21 eingetragen, der sich von dem Punkt W5 aus zum Außenrandabschnitt 25 hin erstreckt. Die Punkte W5, W6 sowie die geometrische Mittellinie W7 ist im Querschnitt eingetragen, der sich bei einer Blickrichtung in der Längserstreckung der Nut N1-1 ergibt, oder in der Fläche liegt, die sich senkrecht zur Tangente an die Nutlinie als Verbindungslinie der Basispunkte W5 erstreckt. In der räumlichen Betrachtung des Verkleidungsteils 1 ergibt die Summe der Punkte W5 entlang der jeweiligen Nut eine Nutlinie, die die tiefste Linie der Nut N1-1 ist.

In der Figur 3 ist auch ein Basispunkt oder Punkt W9 des Innenraums W4 eingetragen, der derjenige Punkt der Innenfläche W8 der ersten Oberfläche 1a des Trägerteils 10 im Innenraum W4 ist, der von dem Punkt W5 in dem genannten Querschnitt und in der Längserstreckung der Schleife V1-1 des Trägerteils gesehen am weitesten entfernt liegt. Der kürzeste Abstand zwischen den Punkten W5 und W7 wird hierin als Innenraum-Länge t2 oder als Länge des Innenraums W4 bezeichnet, so dass sich bei der Ausführungsform der Figur 3 im Innenraum W4 ein Freiraum mit der Länge t3 ergibt.

Nach einer bevorzugten Ausführungsform der Erfindung ist hinsichtlich der Aufnahme eines Seitenabschnitts 21, 22 nach der Ausführungsform der Figur 3 beträgt die Länge t1 mehr als 50% der Länge T2. Generell kann vorgesehen sein, dass die Länge t1 mehr als die fünffache Dicke des Dekorteils 20 beträgt, wobei die Dicke insbesondere die durchschnittliche Dicke sein kann.

Bei der Ausführungsform des in der Figur 2 dargestellten Verkleidungsteils 1 ist auch die Endbereich-Aufnahme U1-2 wie die Endbereich-Aufnahme U1-1 ausgeführt, d.h. der Seitenabschnitt 22 erstreckt sich in analoger Weise weitgehend geradlinig in dem Innenraum W4.

Bei der Ausführungsform des Verkleidungsteils 1 der Figur 4 sind - wie bei der Ausführungsform der Figur 2 - die Oberfläche 3a und die Oberfläche 4a des Verkleidungsteils 1 durch die Oberfläche 10a der Trägerschicht 10 im ersten Bereich 3 gebildet und ist die Oberfläche 5a des Verkleidungsteils 1 durch die Oberfläche 30a der Dekorschicht 30 im Mittelabschnitt 5 gebildet. Bei der Ausführungsform der Figur 4 sind die zwei Seitenabschnitte 31, 32 in jeweils einer Trägerschicht-Schleife V2-1 bzw. V2-2 der Trägerschicht 10 jeweils einer Endbereich-Aufnahme U2-1 bzw. U2-2 gelegen, so dass ein mittlerer Abschnitt 33 der Dekorschicht 30 flächig auf der Trägerschicht 10 gelegen ist. Deshalb ist dessen Außenseite 33a Bestandteil der Oberfläche 1a des Verkleidungsteils 1.

Die Figur 5 zeigt den Seitenabschnitt 31, der im Verkleidungsteil-Querschnitt gesehen (Figur 3) gefaltet in dem Innenraum W4 der Trägerschicht-Schleife V2-1 gelegen ist. Der "Ausdruck "gefaltet" bedeutet hierin, dass die Dekorschicht 30 von derjenigen Seite der Nut N2-1, in der die Dekorschicht 30 flächig auf der Trägerschicht 10 gelegen ist, in den Innenraum W4 hineinragt, und dabei
▪ sich mit einem ersten Abschnitt W11 entlang des Schenkels W2 erstreckt,
▪ sich mit einem zweiten Abschnitt W12 entlang des zweiten Schenkels W1 erstreckt, und
▪ zwischen dem ersten und zweiten Abschnitt eine Falte mit einem Innenfaltenpunkt W13 ausbildet.

In der Figur 5 ist die Mittellinie W17 des Querschnitts des Innenraums W4 als Linie von Mittelpunkten von jeweils kürzesten Abständen zwischen jeweils gegenüber liegenden Punkten der Schenkel W1, W2 gezeigt. Die Mittellinie W17 kann im Allgemeinen auch krummlinig verlaufen. Die Länge oder Tiefe, mit der der Seitenabschnitt 31 in den Innenraum W4 der Trägerschicht-Schleife V2-1 hineinragt, ist in der Figur 5 für die Trägerschicht-Schleife V2-1 mit dem Bezugszeichen "t1" bezeichnet. Dabei ist die Länge t1 als kürzester Abstand der Punkte W5 und W16 definiert. Generell kann vorgesehen sein, dass die Länge t1 mehr als die fünffache Dicke des Dekorteils 30 beträgt, wobei die Dicke insbesondere die durchschnittliche Dicke sein kann. Die Punkte W5 und W16 sind aufgrund eines Querschnitts des Verkleidungsteils 1 definiert, der sich bei einer Blickrichtung in der Längserstreckung der Nut N2-1 ergibt, oder als in der Fläche liegt, die sich senkrecht zur Tangente an die Nutlinie erstreckt, die die Verbindungslinie der entgegen der Dickenrichtung Z gesehen jeweils tiefsten Punkte W5 oder Wurzelpunkte der jeweiligen Nut ist. Der Punkt W5 ergibt sich in diesem Querschnitt als der Wurzelpunkt der v-förmigen Nut N2-1 und der Punkt W16 ergibt sich als derjenige Punkt eines im Innenraum W4 gelegenen Außenrandes 35 der Dekorschicht 20 (Figur 3), der von dem Punkt W5 in dem genannten Querschnitt gesehen, am weitesten entfernt liegt. Die Punkte W5 und W16 ergeben sich im jeweiligen Querschnitt, der nach vorstehenden Kriterien definiert ist, so dass in räumlicher Betrachtungsweise die Punkte W5 und die Punkte W16 jeweils eine Linie des Verkleidungsteils 1 bilden. Mit dem Abschnitt W12 erstreckt sich der Randabschnitt 31 von der Stelle W13 in Richtung zum Punkt W5 zurück und weist einen Außenrand W14 auf. Der kürzestes Abschnitt zwischen dem Punkt W5 und demjenigen Punkt W15 des Außenrands W14, der den kürzesten Abstand zum Punkt W5 hat, definiert einen Abstand t14. Der kürzeste Abstand zwischen dem Punkt W15 und dem Punkt W19 ist als Länge t19 bezeichnet. Nach einer bevorzugten Ausführungsform der Endbereich-Aufnahme U2-1 beträgt der Abstand t15 mindestens 25% des Abstands t19. In der Figur 5 ist auch ein Basispunkt oder Punkt W19 des Innenraums W4 eingetragen, der derjenige Punkt der Innenfläche W8 der ersten Oberfläche 1a des Trägerteils 10 im Innenraum W4 ist, der von dem Punkt W5 in dem genannten Querschnitt und in der Längsersteckung der Schleife V2-1 des Trägerteils 10 gesehen am weitesten entfernt liegt. Der kürzeste Abstand zwischen den Punkten W5 und W19 wird hierin als Innenraum-Länge t19 oder als Länge des Innenraums W4 bezeichnet, so dass sich bei der Ausführungsform der Figur 5 im Innenraum W4 ein Freiraum mit der Länge t13 ergibt.

Bei der Ausführungsform des in der Figur 4 dargestellten Verkleidungsteils 1 ist auch die Endbereich-Aufnahme U2-2 wie die Endbereich-Aufnahme U2-1 ausgeführt, d.h. der Seitenabschnitt 32 erstreckt sich in analoger Weise unter Ausbildung einer Falte mit einem zwischen gekrümmt verlaufenden Schenkeln gelegenen Verbindungsabschnitt W13 in dem Innenraum W4.

Im Folgenden werden Ausführungsformen des erfindungsgemäßen Verfahrens zum Herstellen eines Verkleidungsteils 1 nach der Erfindung und Ausführungsformen der erfindungsgemäßen Vorrichtung zum Herstellen eines Verkleidungsteils 1 nach der Erfindung beschrieben. Generell ist das somit herstellbare Verkleidungsteil 1 aus einem Trägerteil 10 mit einer zumindest einen abschnittsweise sein, das in einem oder mehreren in einem Innenbereich oder Mittelabschnitt 5 mit einer Dekorschicht 20 kaschiert ist, deren Randabschnitte in Falten des Trägerteils eingeklemmt sind. Auch kann das Innenverkleidungsteil 1 eine Instrumententafel oder ein Teil derselben sein. In einem weiteren Anwendungsfall kann das Innenverkleidungsteil 1 eine Abdeckung einer Mittelkonsole sein.

Das Trägerteil 10 kann generell aus Polypropylen (Kurzbezeichnung "PP") gebildet sein, das Naturfasern, keramische Fasern, Karbonfasern oder Glasfasern oder eine Kombination derselben enthalten kann. Auch kann das Trägerteil 10 aus einem ABS-Kunststoffmaterial (Acrylnitril-Butadien-Styrol-Copolymerisat-Kunststoff) oder Polyurethan gebildet sein.

Das Dekorteil oder die Dekorschicht kann als Deckfolie ausgebildet sein. Weiterhin kann das Dekorteil oder die Dekorschicht insbesondere aus einem thermoplastischen Material gebildet sein oder aus diesem bestehen. Dabei kann die Dekorschicht eine Kompakt-Folie sein. Die Folienschicht kann insbesondere dabei aus TPO (Thermoplast-Polyolefin) oder aus PVC (Polyvinylchlorid) gebildet sein. Alternativ kann das Dekorteil oder die Dekorschicht insbesondere aus einer textilen Schicht oder aus Leder oder Kunstleder gebildet sein. Die Dekorschicht 20 kann auch aus mehr als zwei Schichten gebildet sein oder bestehen. Beispielsweise kann die Dekorschicht 20 aus einer Deckfolie und einer Schaumschicht sowie einer zwischen diesen gelegenen Verstärkungsschicht insbesondere der vorangehend beschriebenen Art gebildet sein.

In den Figuren 6 bis 21 ist eine Ausführungsform des erfindungsgemäßen Verfahrens zum Herstellen eines Verkleidungsteils 1 nach den Ausführungsformen nach den Figuren 2 bis 5 dargestellt, bei dem ein Trägerteil 10 in seinem Mittelabschnitt 15 mit einer Dekorschicht 20 kaschiert wird. Das dabei mit der Herstellungsvorrichtung herzustellende Verkleidungsteil 1 ist aus einem Träger oder einer Trägerschicht 10 und einer auf dieser Trägerschicht 10 flächig aufkaschierten Dekorschicht 20 gemäß Figur 2 oder einer auf der Trägerschicht 10 flächig aufkaschierten Dekorschicht 30 gemäß Figur 4 gebildet, wobei zwei entgegen gesetzt zueinander gelegenen RandbereichsAbschnitte 21, 22 bzw. 31, 32 der Dekorschicht 20 in einer Nut des Trägerteile 10 gelegen sind.

Bei dem erfindungsgemäßen Verfahren kann generell vorgesehen sein, dass die zur Herstellung des Verkleidungsteils jeweils verwendete Dekorschicht mittels einer Heizvorrichtung 115 erwärmt wird (Figur 6). Dieser Verfahrensschritt ist schematisch in der Figur 6 beispielartig mit der Dekorschicht 20 gezeigt. Dies kann mittels zumindest einem Heizstrahler oder einer Anordnung 117 von Heizstrahlern erfolgen. Dabei kann vorgesehen sein, dass mehrere Heizstrahler 117a, 117b, 117c, 117d an einer Befestigungsvorrichtung 116 angebracht sind und auf eine in Bezug auf die Schwerkraftrichtung unter dieser gelegene jeweilige Dekorschicht gerichtet sind. Alternativ oder zusätzlich kann vorgesehen sein, dass die jeweilige Dekorschicht über zumindest einem Heizstrahler gelegen ist und dieser in Bezug auf die Schwerkraftrichtung nach oben gerichtet ist. Dabei kann insbesondere vorgesehen sein, dass die Dekorschicht an einem Spannrahmen 111 mit zumindest einer Haltevorrichtung, die insbesondere umlaufend oder weitgehend umlaufend ausgebildet sein kann. Auch kann die Haltevorrichtung durch zwei in einem Abstand voneinander gelegenen Abschnitts-Haltevorrichtungen 112, 113 gebildet sein. Der Spannrahmen 111 und die Anordnung 117 von Heizstrahlern können Bestandteile einer ersten Werkzeugstation 100 (Figur 1) sein.

Alternativ oder zusätzlich dazu kann vorgesehen sein, dass das für eine jeweilige Ausführungsform des erfindungsgemäßen Verfahrens verwendete Trägerteil 10 auf einem Vorbereitungs-Werkzeug 120 mit einer Aufnahme-Oberfläche 120a vorbereitend für den nachfolgenden Verformungsprozess erwärmt wird (Figur 7). Das Vorbereitungs-Werkzeug 120 kann ein Basis-Werkzeugteil 121 aufweisen. In dem Basis-Werkzeugteil 121 kann eine Heizvorrichtung 122 integriert sein. Das Vorbereitungs-Werkzeug 120 kann als Bestandteil der ersten Werkzeug-Station 100 vorgesehen sein.

Die auf diese oder andere Weise erwärmte Dekorschicht und Trägerteil werden zur Durchführung des Verformungsprozesses in einer Werkzeugstation 200 eingelegt. Der Verformungsprozess in einer Werkzeugstation 200 kann auch ohne den beschriebenen Vorbereitungsschrittes z.B. in einer ersten Werkzeugstation 100 erfolgen.

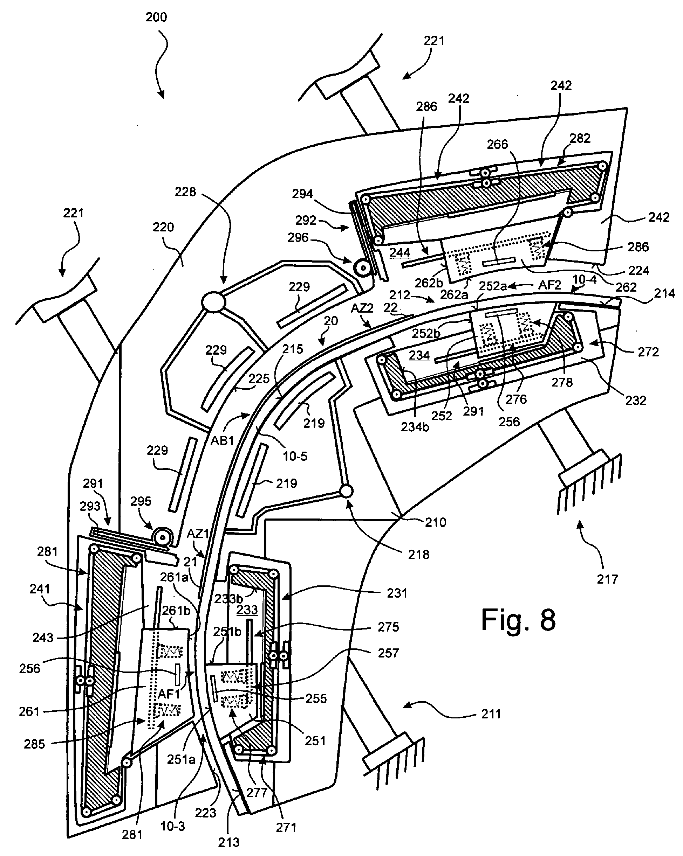

Die Werkzeugstation 200 (Figur 8) weist ein erstes Werkzeugteil 210 und ein zweites Werkzeugteil 220 auf, die jeweils mittels zumindest einer Verstellvorrichtung 211 bzw. 221 relativ zueinander verstellbar sind. Das erste Werkzeugteil 210 und das zweite Werkzeugteil 220 weist jeweils eine erste formgebende Werkzeugoberfläche oder Konturoberfläche 212 bzw. eine zweite formgebende Werkzeugoberfläche oder Konturoberfläche 222 auf. In der Figur 8 weist das erste Werkzeugteil 210 und das zweite Werkzeugteil 220 jeweils eine optional vorgesehene Unterdruckvorrichtung 219 bzw. 229 auf, mit der z.B. ein an der ersten formgebenden Werkzeugoberfläche 215 anliegendes Trägerteil 10 oder ein jeweils vorgesehenes und an der zweiten formgebenden Werkzeugoberfläche 222 anliegendes Dekorteil 20 des zweiten Werkzeugteils 220 angesaugt werden kann. Insbesondere kann in diesen jeweiligen Zuständen vorgesehen sein, dass das anliegende Trägerteil 10 bzw. das anliegende Dekorteil mittels einer Heizvorrichtung 219 bzw. 229, die in dem ersten Werkzeugteil 210 bzw. dem zweiten Werkzeugteil 220 integriert ist, erwärmt wird (nicht dargestellt). Damit kann insbesondere auf den an Hand der Figuren 6 und 7 beschriebenen Vorbereitungsschritt verzichtet werden.

Auf einer oder beiden der formgebenden Werkzeugoberflächen 221, 222 kann abschnittsweise oder durchgehend eine elastische Auflage oder Gleit-Auflage (nicht in den Figuren dargestellt) gelegen sein. Diese Auflage kann insbesondere eine Matte oder ein Pad aus Polyurethan (PU) oder ein Silikon-Pad sein oder aus dieser jeweils gebildet sein. Durch diese kann insbesondere ein guter Gleiteffekt der jeweils zwischen den Werkzeugoberflächen 221, 222 gelegenen Halbzeug-Anordnung auf der jeweiligen Werkzeugoberflächen 221, 222 erreicht werden. Dabei kann die Gleit-Auflage auf einem Abschnitt der jeweiligen Werkzeugoberfläche 221, 222 angeordnet sein, in dem nach der jeweiligen Ausführungsform des Herstellungsverfahrens eine Bewegung eines Abschnitts der Halbzeug-Anordnung auf der jeweiligen Werkzeugoberfläche 221, 222 vorgesehen ist.

Das erste Werkzeugteil 210 weist zwei Halte-Einstellvorrichtungen 231, 232 und zwei Aufnahmeräume 233 und 234, in die jeweils eine Halte-Einstellvorrichtung 231, 232 aufgenommen ist. Jede Halte-Einstellvorrichtung 231, 232 weist jeweils einen in jeweils einem Aufnahmeraum 233 bzw. 234 gelegenen Haltebacken 251 bzw. 252 und eine Verstellvorrichtung 271 bzw. 272 auf, mit der jeweils der Haltebacken 251 bzw. 252 zwischen einer Ausgangsstellung (Figur 8) und einer Press-Stellung entlang der ersten formgebenden Werkzeugoberfläche 212 bewegt werden kann. Jeder Haltebacken 251, 252 weist eine Haltebacken-Konturoberfläche 251a bzw. 252a auf, die der zweiten formgebenden Werkzeugoberfläche 222 zugewandt ist. Weiterhin weist jeder Haltebacken 251, 252 eine Anlagefläche 251 b bzw. 252b auf, die jeweils quer zur Haltebacken-Konturoberfläche 251 a bzw. 252a verläuft.

Die erste formgebende Werkzeugoberfläche 212 weist einen ersten Abschnitt 213, einen zweiten Abschnitt 214 und einen zwischen diesen gelegenen Mittelabschnitt 215 auf. Der Mittelabschnitt 215 ist als ein Abschnitt vorgesehen, der während des Verformungsprozesses der an diesem jeweils anliegende Abschnitt eines auf der ersten formgebenden Werkzeugoberfläche 212 gelegenen Halbzeugs oder des Trägerteils 10 dieses nicht bewegt wird.

Der Aufnahmeraum 233 ist zwischen dem ersten Abschnitt 213, und dem Mittelabschnitt 215 gelegen, so dass in diesem Bereich der Haltebacken 251 die Funktion einer formgebende Werkzeugoberfläche ergänzend zur der formgebenden Werkzeugoberfläche 215 übernimmt. Weiterhin ist der Aufnahmeraum 234 ist zwischen dem zweiten Abschnitt 214, und dem Mittelabschnitt 115 gelegen, so dass in diesem Bereich der Haltebacken 252 die Funktion einer formgebende Werkzeugoberfläche ergänzend zur der formgebenden Werkzeugoberfläche 215 übernimmt. In jedem Aufnahmeraum 233, 234 ist eine Anlagefläche 233b bzw. 234b ausgebildet, die der Anlagefläche 251b bzw. 252b des Haltebackens 251 bzw. 252 zugewandt ist. Zur Bewegungsführung des Haltebackens 251 bzw. 252 weist jede Halte-Einstellvorrichtung 231, 232 eine Führungsvorrichtung 275 bzw. 276 auf. Jede Halte-Einstellvorrichtung 231, 232 kann auch eine Vorspanneinrichtung 277 bzw. 278 aufweisen, mit der der jeweilige Haltebacken 251 bzw. 252 in eine ausgefahrene Stellung vorgespannt ist, bei der die Kontur-Oberfläche 251a bzw. 252a des Haltebackens 251 bzw. 252 eine Distanz über die Konturoberfläche der ersten formgebenden Werkzeugoberfläche 212, wie sie sich als kontinuierliche Konturlinie ohne Wendepunkt aus dem Verlauf des ersten Abschnitts 213 und des zweiten Abschnitts 214 ergibt, wie sie sich als kontinuierliche Konturlinie ohne Wendepunkt aus dem Verlauf des ersten Abschnitts 223 und des zweiten Abschnitts 224 ergibt, in Richtung zum zweiten Werkzeugteil 220 übersteht. Der Haltebacken 251, 252 kann mittels der Verstellvorrichtung 271 bzw. 272 in Richtung zur im Aufnahmeraum 233 bzw. 234 ausgebildeten Anlagefläche 233b bzw. 234b und in einem Abstand zu dieser bewegt werden, dass die Anlagefläche 251 b bzw. 252b des Haltebackens 251 und die Anlagefläche 233b bzw. 234b einen Taschenabschnitt U1-1 und U1-2 (Figur 2), U2-1 und U2-2 (Figur 4), U3-1 und U3-2 (Figur 19), U5-1 und U5-2 (Figur 18), U4 (Figur 33) und zumindest einen jeweiligen Rändbereichs-Abschnitt eines jeweiligen Dekorteils zusammenpressen können.

Ebenfalls weist das zweite Werkzeugteil 220 zwei Halte-Einstellvorrichtungen 241, 242 und zwei Aufnahmeräume 243 und 244, in die jeweils eine Halte-Einstellvorrichtung 241, 242 aufgenommen ist. Jede Halte-Einstellvorrichtung 241, 242 weist jeweils einen in jeweils einem Aufnahmeraum 243 bzw. 244 gelegenen Haltebacken 261 bzw. 262 und eine Verstellvorrichtung 281 bzw. 282 auf, mit der jeweils der Haltebacken 261 bzw. 262 zwischen einer Ausgangsstellung (Figur 8) und einer Press-Stellung entlang der zweiten formgebenden Werkzeugoberfläche 222 bewegt werden kann. Jeder Haltebacken 261, 262 weist eine Haltebacken-Konturoberfläche 261a bzw. 262a auf, die der ersten formgebenden Werkzeugoberfläche 212 zugewandt ist. Weiterhin weist jeder Haltebacken 261, 262 eine Anlagefläche 261 b bzw. 262b auf, die jeweils quer zur Haltebacken-Konturoberfläche 261a bzw. 262a verläuft.

Bei der z.B. in den Figuren 8 bis 16 dargestellten Ausführungsform der Herstellungsvorrichtung ist die Verstellvorrichtung 271, 272, 281, 282 jeweils als Riemenantriebsvorrichtung mit einem entsprechend gelagerten Antriebsriemen und einer Antriebsmotor ausgeführt, der derart an den Antriebsriemen gekoppelt ist, dass dieser den Antriebsriemen antreibt.

Die zweite formgebende Werkzeugoberfläche 222 weist einen ersten Abschnitt 223, einen zweiten Abschnitt 224 und einen zwischen diesen gelegenen Mittelabschnitt 225 auf. Der Mittelabschnitt 225 ist als ein Abschnitt vorgesehen, auf dem während des Verformungsprozesses der an diesem jeweils anliegende Abschnitt eines auf der ersten formgebenden Werkzeugoberfläche 212 gelegenen Halbzeugs oder des jeweils vorgesehenen Dekorteils nicht bewegt wird.

Der Aufnahmeraum 243 ist zwischen dem ersten Abschnitt 223, und dem Mittelabschnitt 225 gelegen, so dass in diesem Bereich der Haltebacken 261 die Funktion einer formgebende Werkzeugoberfläche ergänzend zur der formgebenden Werkzeugoberfläche 225 übernimmt. Weiterhin ist der Aufnahmeraum 234 zwischen dem zweiten Abschnitt 223, und dem Mittelabschnitt 225 gelegen, so dass in diesem Bereich der Haltebacken 262 die Funktion einer formgebenden Werkzeugoberfläche ergänzend zur der formgebenden Werkzeugoberfläche 225 übernimmt. In jedem Aufnahmeraum 243, 244 ist eine Anlagefläche 243b bzw. 244b ausgebildet, die der Anlagefläche 261b bzw. 262b des Haltebackens 261 bzw. 262 zugewandt ist. Zur Bewegungsführung des Haltebackens 261 bzw. 262 weist jede Halte-Einstellvorrichtung 241, 242 eine Führungsvorrichtung 285 bzw. 286 auf. Jede Halte-Einstellvorrichtung 241, 242 kann auch eine Vorspanneinrichtung 287 bzw. 288 aufweisen, mit der der jeweilige Haltebacken 261 bzw. 262 in eine ausgefahrene Stellung vorgespannt ist, bei der die Kontur-Oberfläche 261a bzw. 262a des Haltebackens 261 bzw. 262 eine Distanz über die Konturoberfläche der ersten formgebenden Werkzeugoberfläche 225, wie sie sich als kontinuierliche Konturlinie ohne Wendepunkt aus dem Verlauf des ersten Abschnitts 327 und des zweiten Abschnitts 328 ergibt, in Richtung zum zweiten Werkzeugteil 220 übersteht. Der Haltebacken 261, 262 kann mittels der Verstellvorrichtung 281 bzw. 282 derart bewegt werden, dass die Haltebacken 261, 262 in derselben Richtung und Geschwindigkeit wie der jeweils gegenüberliegende Haltebacken 261 bzw. 262 des zweiten Werkzeugteils 220 bewegt wird.

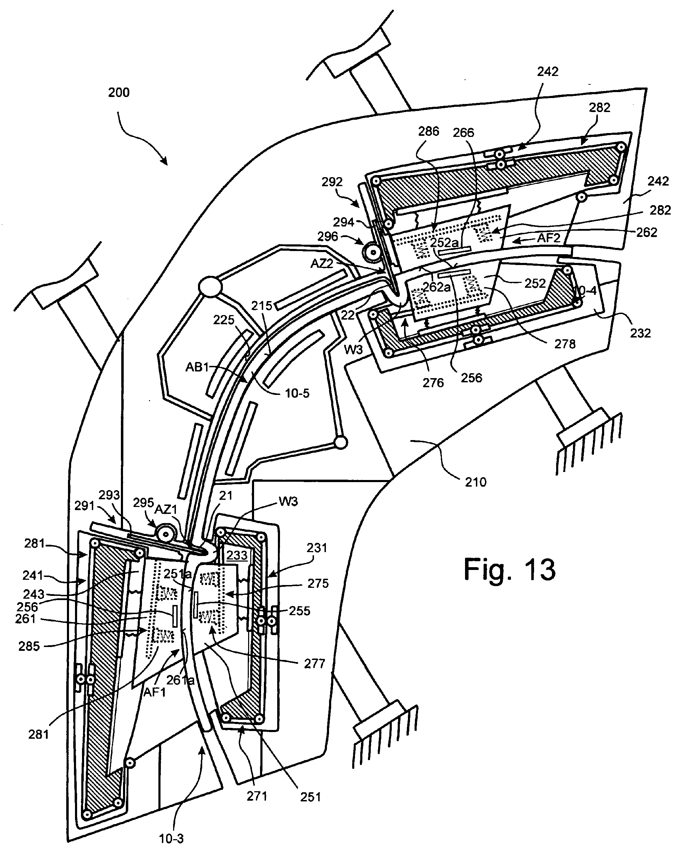

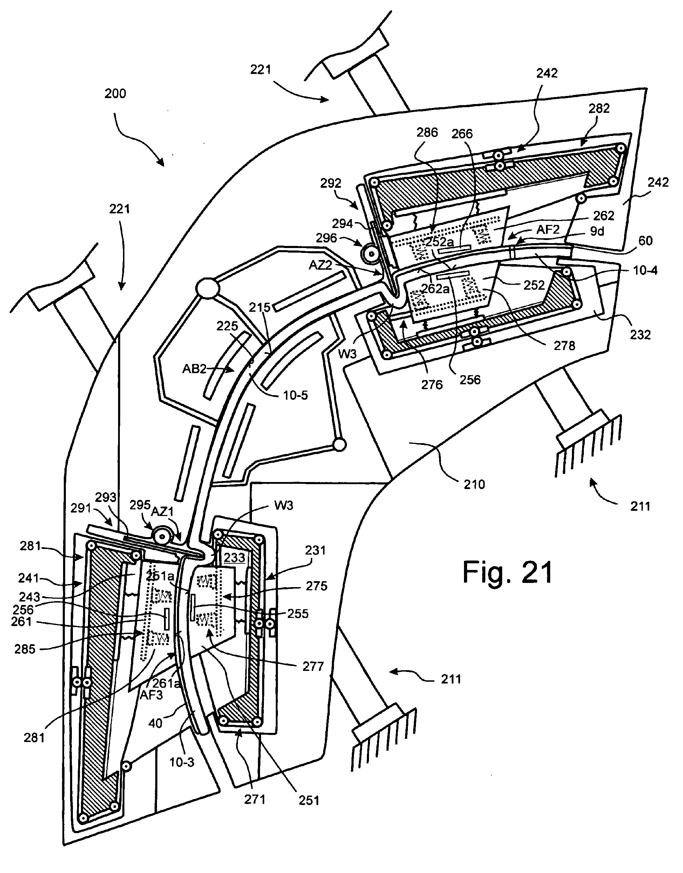

An dem zweiten Werkzeugteil 220 sind zusätzlich zwei Schiebervorrichtungen 291, 292 mit jeweils einem Schieber 293 bzw. 294, einer Schieber-Verstellmechanik 297 bzw. 299, insbesondere in Form eine Führungsvorrichtung wie z.B. einer Gleitführung, und jeweils einer Antriebsvorrichtung 295 bzw. 296 zum Antrieb und Bewegen des Schiebers 293 bzw. 295 angeordnet. Der Schieber 293 ist zwischen dem Aufnahmeraum 243 und dem Mittelabschnitt 225 gelegen. Der Schieber 294 ist zwischen dem Aufnahmeraum 244 und dem Mittelabschnitt 225 gelegen. Die Schiebervorrichtungen 291, 292 sind derart ausgeführt, dass der jeweils zugehörige Schieber 293 bzw. 294 zwischen einer eingefahrenen Stellung (Figur 8) und einer ausgefahrenen Stellung (Figur 13) bewegbar ist. Die Haltebacken 251, 252; 261, 262 sind derart in den jeweiligen Werkzeugteilen 210, 220 angeordnet und optional an der Vorspannvorrichtung 277, 278 in Bezug auf das jeweils gegenüber gelegene Werkzeugteil 210 bzw. 220 gelagert, dass beim Zusammenfahren der Werkzeugteile 210, 220 und einem zwischen den jeweils einander gegenüber liegenden Haltebacken 251 und 261 bzw. 252 und 262 gelegenen Halbzeug wie das Trägerteil 10 (Figur 8) oder eine Halbzeug-Anordnung (Figur 21) die Haltebacken 251 und 261 bzw. 252 und 262 gegen die Vorspannung der Vorspannvorrichtung 277bzw. 278 in das jeweilige Werkzeugteil 210 bzw. 220 eingefahren werden. Dadurch ist es möglich, dass die Haltebacken 231 und 241 bzw. 232 und 242 das Halbzeug oder die Halbzeug-Anordnung mit einer vorbestimmten maximalen Kraft und auf nachgiebige oder elastische Weise von zwei entgegen gesetzten Seiten zusammendrücken, so dass das Risiko einer Beschädigung des Halbzeugs oder der Halbzeug-Anordnung reduziert ist und die Verkleidungsteil-Qualität und insbesondere die Qualität des Dekorteils des Verkleidungsteils 1 sicher gestellt und insbesondere erhöht werden kann.

Die Oberflächen 251 a und 261 a bzw. 252a und 262a der jeweils einander gegenüber liegenden Haltebacken 131 und 141 bzw. 132 und 142 sind komplementär zueinander und derart gestaltet, dass diese den Abschnitt AF1 bzw. AF2 der Halbzeuganordnung formen, der jeweils von diesen jeweils einander gegenüber liegenden Haltebacken 251 und 261 bzw. 252 und 262 durch Andrücken oder Anpressen geformt wird.

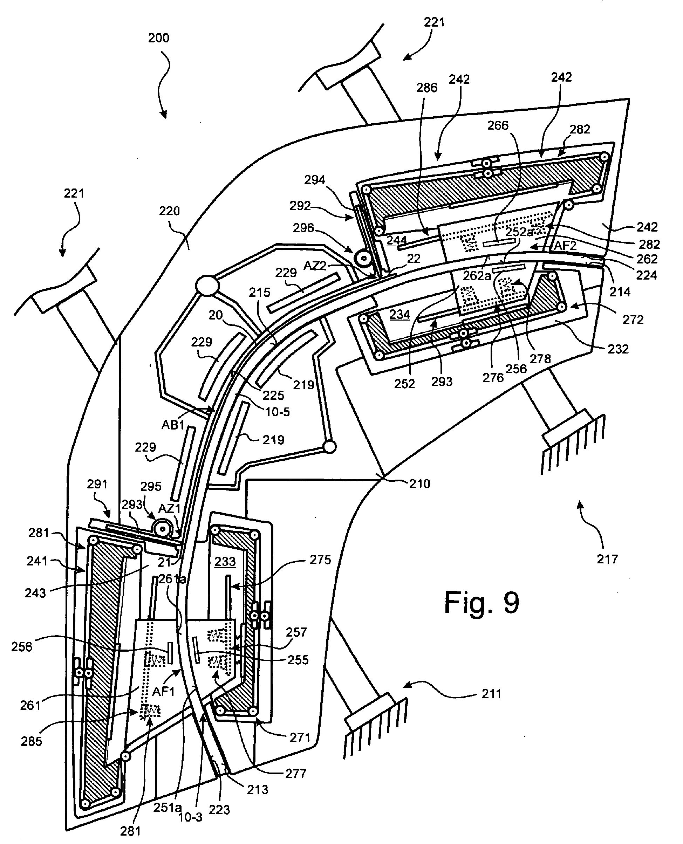

Nach einer Ausführungsform der Erfindung weist jeder zumindest eines Paares von Haltebacken 251 und 261 bzw. 252 und 262 jeweils eine Heizvorrichtung 255 und 256 bzw. 265 und 266 auf, durch die eine Pressverformung jeweils eines Abschnitts AF1 bzw. AF2 der Halbzeug-Anordnung bzw. des von diesen gehaltenen Trägerteils 10 (Figur 9) oder eine Anordnung aus dem Trägerteil 10 vorgenommen werden kann, wenn die Haltebacken 251 und 261 bzw. 252 und 262 auf den jeweiligen Abschnitt AF1 bzw. AF2 von zwei entgegen gesetzt zueinander gelegenen Seiten andrücken und den jeweiligen Abschnitt AF1 bzw. AF2 erwärmen.

Die Werkzeugstation 200 ist derart ausgeführt, dass durch das Zusammenfahren der Werkzeugteile 210, 220 mit den Haltebacken 251 und 261 bzw. 252 und 262 mit einem zwischen diesen gelegenen Halbzeug und insbesondere Trägerteil 10 oder einer zwischen diesen gelegenen Halbzeug-Anordnung ein Ausgangszustand mit folgenden Gegebenheiten gegeben ist:
▪ Eine Anordnung aus einem Trägerteil 10 und zumindest einem Dekorteil zwischen dem ersten Werkzeugteil 210 und dem zweiten Werkzeugteil 220 sind eingelegt.
▪ Ein Oberflächenabschnitt des ersten Werkzeugteils 210 und ein diesem gegenüber liegender Oberflächenabschnitt des zweiten Werkzeugteils 220 halten und pressen zusammen einen Basisabschnitt AB1 der Halbzeug-Anordnung bzw. einer Anordnung aus dem Trägerteil 10 und dem Dekorteil 20 (Figur 9) oder des Trägerteils 10 (Figur 21) in einer vorbestimmten Position entlang der Längserstreckung der ersten oder zweiten formgebenden Werkzeugoberfläche 212, 222. Dabei kann insbesondere vorgesehen sein, dass die Heizvorrichtung 219 und/oder die Heizvorrichtung 229 das erste Werkzeugteil 210 und das zweite Werkzeugteil 220 erwärmen, um eine Pressverformung des Basisabschnitts AB1 des jeweiligen zwischen den Werkzeugteilen 210 und 220 gelegenen Halbzeugs zu erreichen.
▪ Zumindest ein Paar aus einem im ersten Werkzeugteil 210 integrierten Haltebacken 251; 252 und einem im zweiten Werkzeugteil 220 integrierten Haltebacken 261; 262 halten jeweils einen Erfassungsabschnitt AF1; AF2 der Halbzeug-Anordnung bzw. des Trägerteils 10 (Figur 9) oder einer Anordnung aus dem Trägerteil 10 und dem Dekorteil (Figur 21) in einer vorbestimmten Position entlang der Längsersteckung der ersten oder zweiten formgebende Werkzeugoberfläche 212, 222. Dabei kann insbesondere vorgesehen sein, dass die Heizvorrichtung 255 und/oder die Heizvorrichtung 266 den jeweiligen Haltebacken 251; 252 bzw. 261; 262 erwärmen und insbesondere bei einer entsprechenden gewölbten Formgebung der Konturoberfläche 251a, 252a bzw. 261a, 262a eine Pressverformung der Erfassungsabschnitte AF1 oder AF2 des zwischen diesen gelegenen Halbzeugs vornehmen.

Bei dem konkreten, in den Figuren 8 bis 17 dargestellten Verfahren ist der Ausgangszustand, der in der Figur 9 dargestellt ist, wie folgt gegeben:
▪ Eine Anordnung aus einem Trägerteil 10 und zumindest dem Dekorteil 20 ist zwischen dem ersten Werkzeugteil 210 und dem zweiten Werkzeugteil 220 eingelegt, wobei das Dekorteil 20, 30 auf dem Abschnitt 10-5 des Trägerteil 10 gelegen ist und die Abschnitte 10-3 und 10-4 sind im Bereich der Haltebacken 251; 252 und 261; 262 gelegen.
▪ Ein Oberflächenabschnitt des ersten Werkzeugteils 210 und ein diesem gegenüber liegender Oberflächenabschnitt des zweiten Werkzeugteils 220 halten und pressen zusammen einen Basisabschnitt AB1 der Halbzeug-Anordnung aus dem Trägerteil 10 und dem Dekorteil 20 in einer vorbestimmten Position entlang der Längserstreckung der ersten oder zweiten formgebenden Werkzeugoberfläche 212, 222. Dabei kann insbesondere vorgesehen sein, dass die Heizvorrichtung 219 und/oder die Heizvorrichtung 229 das erste Werkzeugteil 210 und das zweite Werkzeugteil 220 erwärmen, um eine Pressverformung des Basisabschnitts AB1 des jeweiligen zwischen den Werkzeugteilen 210 und 220 gelegenen Halbzeugs zu erreichen.
▪ Zwei Paare von im ersten und zweiten Werkzeugteil 210, 220 integrierten Haltebacken 251, 261 bzw. 252, 262 halten jeweils einen Erfassungsbereich AF1; AF2 der Halbzeug-Anordnung, die in diesem Bereich durch das Trägerteil 10 gebildet ist, in einer vorbestimmten Position entlang der Längsersteckung der ersten oder zweiten formgebende Werkzeugoberfläche 212, 222. Dabei kann insbesondere vorgesehen sein, dass die Heizvorrichtung 255 und/oder die Heizvorrichtung 266 den jeweiligen Haltebacken 251; 252 bzw. 261; 262 erwärmen und insbesondere bei einer entsprechenden gewölbten Formgebung der Konturoberfläche 251a, 252a bzw. 261a, 262a eine Pressverformung der Erfassungsabschnitte AF1 oder AF2 des zwischen diesen gelegenen Halbzeugs vornehmen.

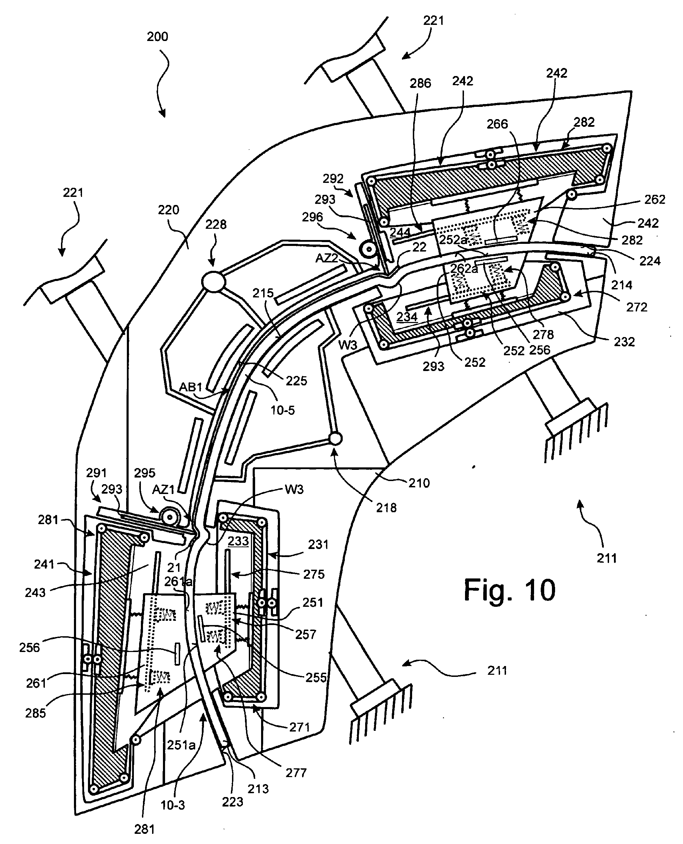

Nach dem erfindungsgemäßen Verfahren ist generell in einem nächsten Schritt vorgesehen,
▪ dass der Erfassungsbereich AF1, AF2 der Halbzeug-Anordnung, der von jeweils einem Paar von an diesem auf entgegen gesetzten Seiten anliegenden Haltebacken 251; 252 bzw. 261; 262 erfasst und gehalten wird, diese mittels jeweils einer Verstellvorrichtung 271; 272 bzw. 281; 282, die - wie dargestellt - insbesondere zwischen einem Werkzeugteil 210 bzw. 220 und dem jeweiligen Haltebacken 251; 252 bzw. 261; 262 gelagert sein kann, in Richtung zum Basisabschnitt AB1 bewegt wird und
▪ dass gleichzeitig ein Schieber 293, 294 auf einen zwischen dem Basisabschnitt AB1 und dem jeweiligen Erfassungsbereich oder Zuführbereich AF1; AF2 gelegenen Zwischenabschnitt AZ1, AZ2, in dem ein Randbereichs-Abschnitt 31, 32 des Dekorteils 20, 30 auf dem Trägerteil 10 gelegen ist, gedrückt und derart weiter bewegt wird, dass sich der Zwischenabschnitt AZ1, AZ2 in eine Trägerteil-Schleife V1-1, V1-2; V2-1, V2-2 zur Ausbildung eines Taschenabschnitts verformt. Dabei erfolgt die Bewegung des Schiebers 293, 294 in korrelierter Weise mit der Bewegung des Erfassungsbereichs AF1, AF2 durch die Haltebacken 251; 252 bzw. 261; 262 in Richtung zum Basisabschnitt AB1 derart, dass in dem Maße, wie das Eindrücken des Schieber 293, 294 in das Halbzeug und die Vergrößerung des Taschen-Abschnitts fortschreitet und damit der jeweilige Erfassungsbereich AF1, AF2 des Halbzeugs nachgeführt werden muss, das jeweilige Paar von Haltebacken 251 und 261 bzw. 252 und 262 in Richtung zum Basisabschnitt AB1 bewegt wird. Eine Zwischenstellung, bei der bereits die Schieber 293, 294 eine Ausbauchung des Trägerteils 10 zur Ausbildung des Taschen-Abschnitts U1-1 bzw. U1-2 bewirken, ist in der Figur 10 dargestellt.

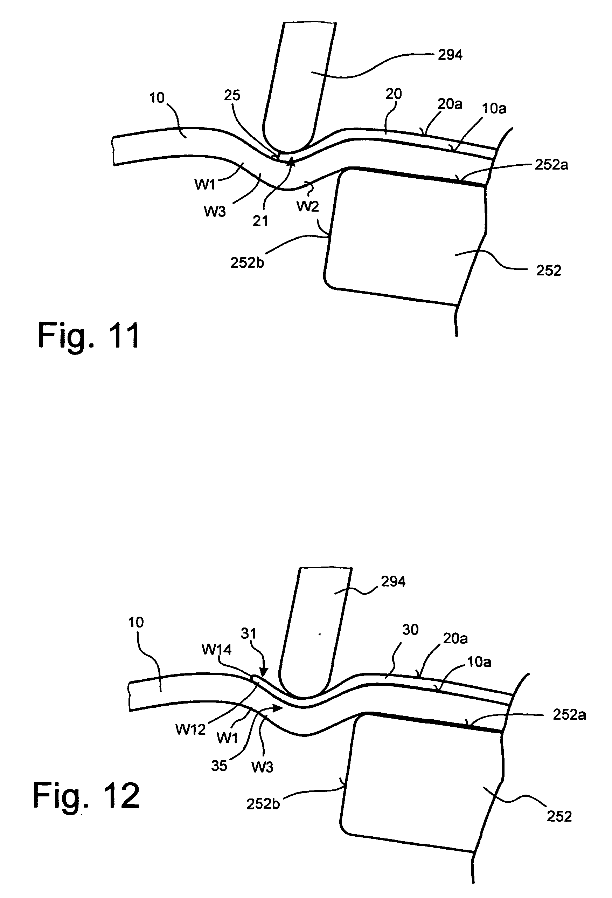

Hinsichtlich dieser Bewegung des jeweiligen Schiebers 293, 294 können unterschiedliche Lagen des Dekorteils auf dem Trägerteil 10 relativ zum Schieber 293, 294 vorgesehen sein. In den Figuren 11 und 12 sind zwei mögliche Lagen des Dekorteils 30 auf dem Trägerteil 10 relativ zum Schieber 293, 294 dargestellt. In der Figur 11 ist eine Anordnung aus Trägerteil 10 und Dekorteil 20 mit einer Lage des Dekorteils 20 auf dem Trägerteil 10 dargestellt, mit der ein Taschen-Abschnitt U1-1 nach der Figur 3 hergestellt wird, da der Außenrandabschnitt 25 seitlich des Verbindungsabschnitts W3 gelegen ist. Alternativ dazu ist in der Figur 12 eine Anordnung aus Trägerteil 10 und Dekorteil 30 mit einer Lage des Dekorteils 30 auf dem Trägerteil 10 dargestellt, mit der ein Taschen-Abschnitt U2-1 nach der Figur 5 hergestellt wird, da sich das Dekorteil 30 bis zum Außenrandabschnitt 35 über den Verbindungsabschnitt W3 hinaus erstreckt.

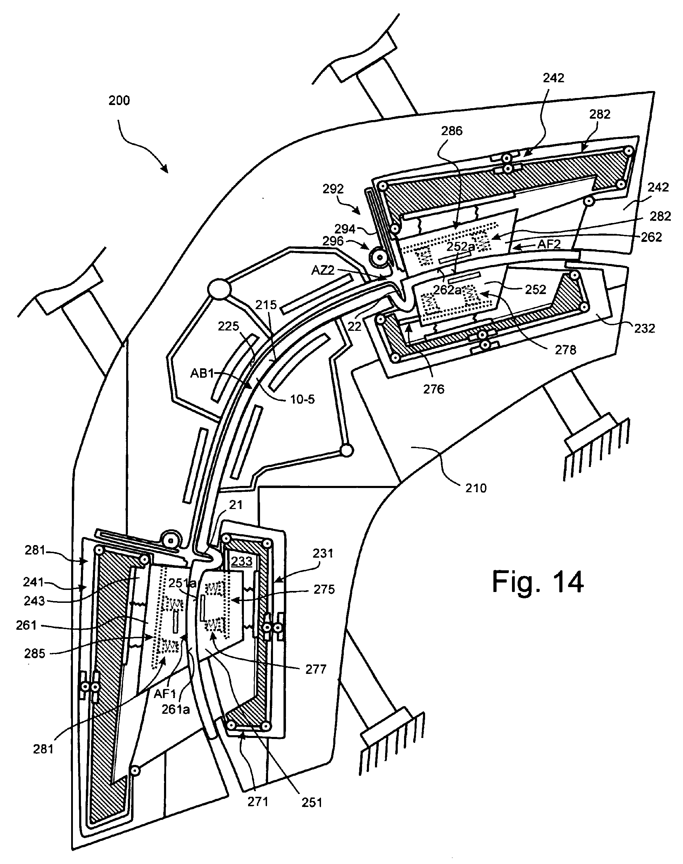

An einer weiteren Zwischenstellung der Haltebacken 251 und 261 bzw. 252 und 262 und des Schiebers 293, 294, die in der Figur 13 gezeigt ist, wird der Schieber 293, 294 aus dem Abschnitt AZ1 bzw. AZ2 der Halbzeug-Anordnung heraus bewegt, so dass der jeweilige Schieber 293, 294 nicht in Kontakt mit dem zwischen den Werkzeugteilen 210, 220 liegenden Halbzeug ist. Dieser Zustand ist in der Figur 14 gezeigt. Die Zwischenstellung kann derart definiert sein, dass der jeweilige Schieber 293, 294 zumindest so weit das Halbzeug hinein drückt, dass das jeweilige Dekorteil 20, 30 zumindest über eine Erstreckung der doppelten durchschnittlichen Dicke des Dekorteils 20 bzw. 30 an dem jeweiligen Schieber 293, 294 anliegt.

Dieses Herausbewegen des jeweiligen Schiebers 293, 294 kann während dem Weiterbewegen des jeweiligen Paares von Haltebacken 251 und 261 bzw. 252 und 262 in Richtung zum Basisabschnitt AB1 erfolgen, so dass das jeweilige Paar von Haltebacken 251 und 261 bzw. 252 und 262 ununterbrochen in Richtung zum Basisabschnitt AB1 bewegt werden. Alternativ dazu kann auch vorgesehen sein, dass für das Herausbewegen des Schiebers 293, 294 aus der Ausbauchung oder eine Zwischen-Schleife des Trägerteils 10 die Bewegung der Haltebacken 251 und 261 bzw. 252 und 262 gestoppt wird, wie dies in den Figuren 13 und 14 dargestellt ist.

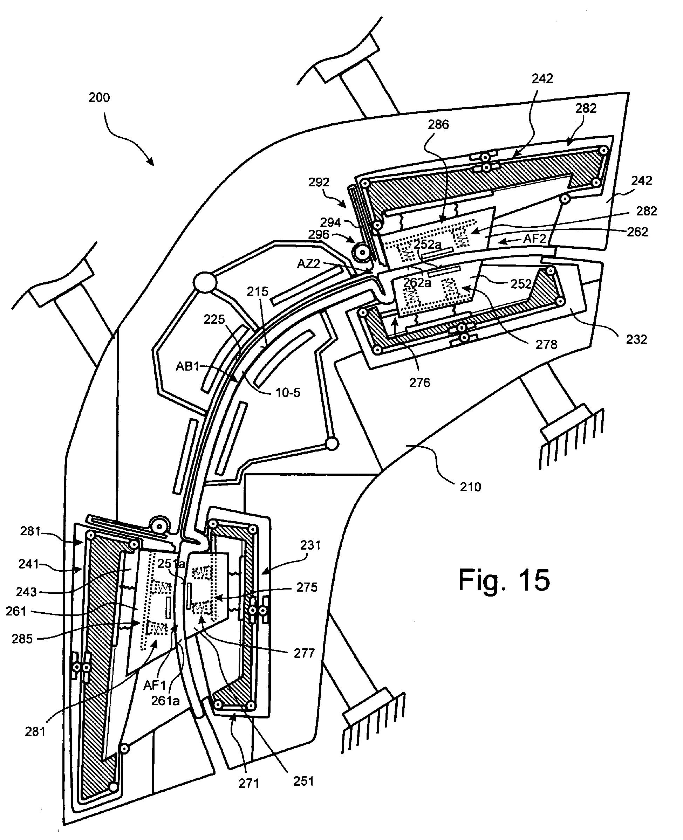

In einem weiteren Verfahrensschritt, also in einem Zwischenzustand, in dem zumindest einer der jeweiligen Schieber 293, 294 aus der jeweiligen Zwischen-Schleife des Trägerteils 10 herausgezogenen, werden die Haltebacken 251 und 261 bzw. 252 und 262 jeweils weiter in Richtung des Basisabschnitts AB1 bewegt und dadurch die Schenkel W1, W2 jeder Zwischen-Schleife des Trägerteils 10 weiter zusammen bewegt, bis die jeweils einander zugewandten Innenflächen der Schenkel W1, W2 der jeweiligen Ausbauchung oder Zwischen-Schleife des Trägerteils 10 den zwischen diesen jeweils gelegenen Endabschnitt flächig zusammendrücken und den Punkt W5 (Figur 3 und Figur 5) somit Nute N1-1, N1-2 bzw. N2-1, N2-2 jeweils mit einem Wurzelpunkt W5 bilden. Das Zusammendrücken des Randbereichs-Abschnitts 21 oder 22 (Figuren 2 und 3) bzw. 31 oder 32 (Figuren 4 und 5) durch die jeweiligen Schenkel W1, W2 erfolgt dadurch, dass jeweils derjenige Haltebacken 251 bzw. 252, der in Bezug auf die Position des Trägerteils 10 jenseits des jeweiligen Schiebers 293, 294 gelegen ist gegen eine jeweilige Anlagefläche fährt, die ortsfest am ersten Werkzeugteil 210 ausgebildet ist, und die Halbzeug-Anordnung mit den Schenkeln W1, W2 und dem jeweiligen Randbereichs-Abschnitt 21 bzw. 22 (Figuren 2 und 3) oder 31 bzw. 32 (Figuren 4 und 5) gegen die jeweilige Anlagefläche pressen (Figur 15). In der Ausführungsform der dargestellten Werkzeug-Station 200 ist die jeweilige Anlagefläche 233b, 234b eine Oberflüche eines Grundkörpers 235 bzw. 236 der Verstellvorrichtung 271 bzw. 272, der im Aufnahmeraum 233 bzw. 234 angeordnet ist. Bei einer alternativen Ausführungsform der Verstellvorrichtung 271 bzw. 272 kann die Anlagefläche auch ein Oberflächenabschnitt der Oberfläche des ersten Werkzeugteils 210 sein, die den Aufnahmeraum 233 bzw. 234 bildet.

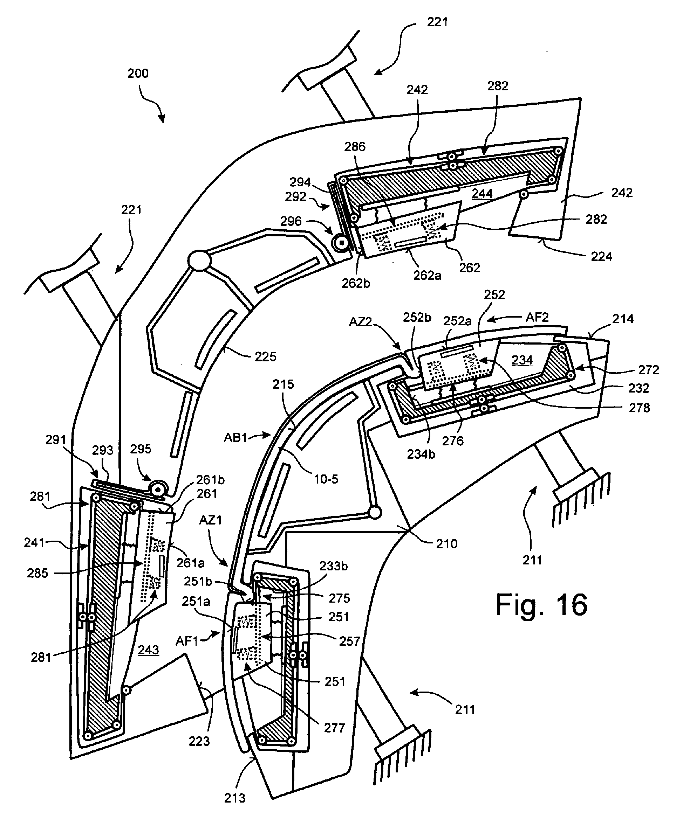

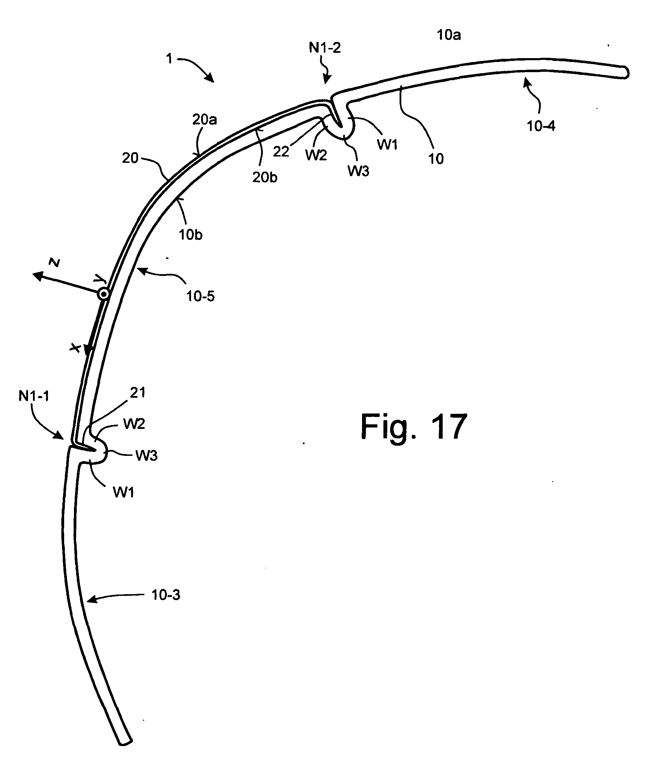

In diesem Zustand kann durch Aufrechterhaltung einer Presskraft der Werkzeugteile, die mittels einer Verstellvorrichtung und insbesondere der Verstellvorrichtungen 211, 221 relativ zueinander und sowie der Haltebacken 251 bzw. 252 mittels Verstellvorrichtungen 271, 272 gegen eine jeweilige Anlagefläche und optional auch durch Zufuhr von Wärme mittels der Heizvorrichtungen ein Aushärten der Halbzeuganordnung erfolgen. Nach Fertigstellung des hergestellten Verkleidungsteils 1 wird die Werkzeugstation 200 geöffnet (Figur 16), so dass das hergestellte Verkleidungsteil 1 (Figur 17) der Werkzeugstation 200 entnommen werden kann.

Bei der in den Figuren 18 und 19 dargestellten Ausführungsform des erfindungsgemäßen Verkleidungsteils 1 bzw. der Instrumententafel sind Endbereich-Aufnahmen U5-1, U5-2 zur Aufnahme von Randabschnitten 42 bzw. 61 von Dekorschichten 40 bzw. 60 ausgebildet und ist die Trägerschicht 10 wie folgt beschichtet:
▪ ein bezüglich der positiven X-Richtung seitlich der Endbereich-Aufnahme U5-1 gelegener Abschnitt 13 der Trägerschicht 10 mit einer Dekorschicht 40, so dass die Oberfläche 3a des Verkleidungsteils 1 durch eine erste Oberfläche 40a der Dekorschicht 40 gebildet wird,
▪ ein zwischen den Endbereich-Aufnahmen U5-1, U5-2 gelegener Abschnitt 15 der Trägerschicht 10, der nicht mit einer Dekorschicht 50 beschichtet ist, so dass die Oberfläche 5a des Verkleidungsteils 1 durch eine erste Oberfläche 10a der Dekorschicht 50 gebildet wird,
▪ ein auf einer in der negativen X-Richtung seitlich der Endbereich-Aufnahme U5-2 gelegener Abschnitt 14 der Trägerschicht 10 mit einer Dekorschicht 60, so dass die Oberfläche 4a des Verkleidungsteils 1 durch eine erste Oberfläche 60a der Dekorschicht 60 gebildet wird.

Die Taschenabschnitte oder Endbereich-Aufnahmen U5-1, U5-2 sind derart ausgeführt, dass in den zugehörigen Trägerschicht-Schleifen V5-1 bzw. V5-2 jeweils ein Seitenabschnitte 42 bzw. 61 aufgenommen sind. Dabei ist der Seitenabschnitt 42 Bestandteil der Dekorschicht 40 und ist der Seitenabschnitt 61 Bestandteil der Dekorschicht 60. Jede der Trägerschicht-Schleifen V5-1, V5-2 der Trägerschicht 10 ist aus den zwei entlang zueinander verlaufenden Schenkeln W1, W2 gebildet, die sich quer zur flächigen Erstreckung des Trägerteils und entlang der Dickenrichtung Z erstrecken und ihre von der flächigen Erstreckung des Trägerteils abstehenden Enden über einen Verbindungsabschnitt W3 miteinander verbunden sind.

Die Figur 19 zeigt den Taschenabschnitt U5-1 mit der Trägerteil-Schleife U5-1 und dem in dieser gelegenen Seitenabschnitt 42, so dass dieser - im Verkleidungsteil-Querschnitt der Figur 19 gesehen - in dem Innenraum W4 der Trägerschicht-Schleife V5-1 gelegen ist und von einander zugewandten Innenflächen des Schenkels W1 und des Schenkels W2 zusammen gedrückt wird.

Zur Herstellung des Verkleidungsteils 1 nach der Figur 18 können dieselben Ausführungsformen der Werkzeugstation 200 verwendet werden, die an Hand der Figuren 8 bis 16 beschrieben ist. In der Figur 20 ist die Werkzeugstation 200 in einer offenen Stellung gezeigt, wobei in diese eine Halbzeug-Anordnung zur Herstellung eines Verkleidungsteils 1 nach der Figur 18 eingelegt ist. Ein nicht dargestellter Ausgangszustand ist analog der Darstellung der Figur 9 wie folgt bestimmt:
▪ Eine Anordnung aus einem Trägerteil 10 und zwei Dekorteilen 40, 60 ist zwischen dem ersten Werkzeugteil 210 und dem zweiten Werkzeugteil 220 eingelegt, wobei das Dekorteil 40, 60 auf dem Abschnitt 10-3 bzw. 10-4 des Trägerteils 10 gelegen ist und die Abschnitte 10-3 und 10-4 sind im Bereich der Haltebacken 251; 252 und 261; 262 gelegen sind.
▪ Ein Oberflächenabschnitt des ersten Werkzeugteils 210 und ein diesem gegenüber liegender Oberflächenabschnitt des zweiten Werkzeugteils 220 halten und pressen zusammen einen Basisabschnitt AB1 der Halbzeug-Anordnung, die in diesem Abschnitt aus dem Trägerteil 10 ohne einem Dekorteil 20 gebildet ist. Dabei kann insbesondere vorgesehen sein, dass die Heizvorrichtung 219 und/oder die Heizvorrichtung 229 das erste Werkzeugteil 210 und das zweite Werkzeugteil 220 erwärmen, um eine Pressverformung des Basisabschnitts AB1 des jeweiligen zwischen den Werkzeugteilen 210 und 220 gelegenen Halbzeugs zu erreichen.
▪ Zwei Paare von im ersten und zweiten Werkzeugteil 210, 220 integrierten Haltebacken 251, 261 bzw. 252, 262 halten jeweils einen Erfassungsbereich AF1; AF2 der Halbzeug-Anordnung, die in diesem Bereich durch das Trägerteil 10 mit jeweils einem Dekorteil 40 bzw. 60 gebildet ist, in einer vorbestimmten Position entlang der Längsersteckung der ersten oder zweiten formgebende Werkzeugoberfläche 212, 222. Dabei kann insbesondere vorgesehen sein, dass die Heizvorrichtung 255 und/oder die Heizvorrichtung 266 den jeweiligen Haltebacken 251; 252 bzw. 261; 262 erwärmen und insbesondere bei einer entsprechenden gewölbten Formgebung der Konturoberfläche 251 a, 252a bzw. 261a, 262a eine Pressverformung der Erfassungsabschnitte AF1 oder AF2 des zwischen diesen gelegenen Halbzeugs vornehmen.

Die Figur 21 zeigt einen nächsten Schritt der Ausführungsform des Verfahrens,
▪ bei dem der Erfassungsbereich AF1, AF2 der aus dem Trägerteil 10 und dem Dekorteil 40 bzw. 60 gebildeten Halbzeug-Anordnung, der von jeweils einem Paar von an diesem auf entgegen gesetzten Seiten anliegenden Haltebacken 251; 252 bzw. 261; 262 erfasst und gehalten wird, diese mittels jeweils einer Verstellvorrichtung 271; 272 bzw. 281; 282, die - wie dargestellt - insbesondere zwischen einem Werkzeugteil 210 bzw. 220 und dem jeweiligen Haltebacken 251; 252 bzw. 261; 262 gelagert sein kann, in Richtung zum Basisabschnitt AB1 bewegt wird und
▪ bei dem gleichzeitig ein Schieber 293, 294 auf einen zwischen dem Basisabschnitt AB1 und dem jeweiligen Erfassungsbereich oder Zuführbereich AF1; AF2 gelegenen Zwischenabschnitt AZ1, AZ2, in dem ein Randbereichs-Abschnitt 31, 32 des Dekorteils 20, 30 auf dem Trägerteil 10 gelegen ist, gedrückt und derart weiter bewegt wird,
dass sich der Zwischenabschnitt AZ1, AZ2 in eine Trägerteil-Schleife V1-1, V1-2; V2-1, V2-2 zur Ausbildung eines Taschenabschnitts verformt. Hinsichtlich dieser Bewegung des jeweiligen Schiebers 293, 294 können unterschiedliche Lagen des Dekorteils auf dem Trägerteil 10 relativ zum Schieber 293, 294 vorgesehen sein, um jeweils analog zu den in den Figuren 3 und 5 dargestellten Taschenabschnitte auszubilden.

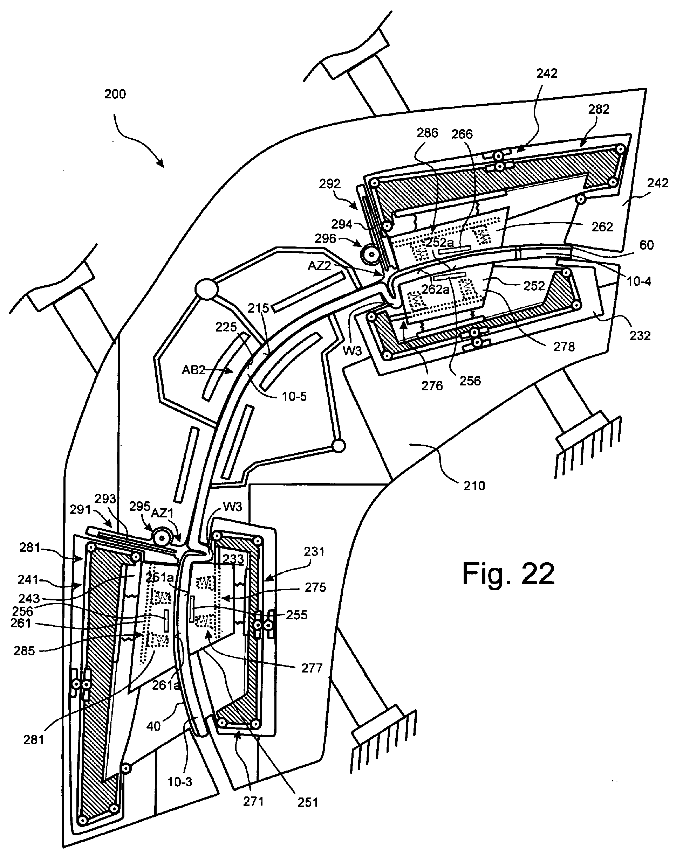

Wie bei den in den Figuren 9 bis 16 dargestellten Ausführungsform des Verfahrens wird der Schieber 293, 294 aus dem Abschnitt AZ1 bzw. AZ2 der Halbzeug-Anordnung heraus bewegt und das jeweilige Paar von Haltebacken 251 und 261 bzw. 252 und 262 in Richtung zum Basisabschnitt AB1 bewegt. Die Figur 22 zeigt einen darauf folgenden Zwischenzustand, in dem zumindest einer der jeweiligen Schieber 293, 294 aus der jeweiligen Zwischen-Schleife des Trägerteils 10 herausgezogen ist und die Haltebacken 251 und 261 bzw. 252 und 262 jeweils weiter in Richtung des Basisabschnitts AB1 bewegt und dadurch die Schenkel W1, W2 jeder Zwischen-Schleife des Trägerteils 10 weiter derart zusammen bewegt wurden, dass die jeweils einander zugewandten Innenflächen der Schenkel W1, W2 der jeweiligen Ausbauchung oder Zwischen-Schleife des Trägerteils 10 den zwischen diesen jeweils gelegenen Endabschnitt flächig zusammendrücken und den Punkt W5 (Figur 3 und Figur 5) somit Nute N1-1, N1-2 bzw. N2-1, N2-2 jeweils mit einem Wurzelpunkt W5 bilden. Durch den Pressvorgang und optional auch durch Zufuhr von Wärme mittels Heizvorrichtungen kann ein Aushärten der Halbzeuganordnung erfolgen. Nach Fertigstellung des hergestellten Verkleidungsteils 1 wird die Werkzeugstation 200 geöffnet, so dass das hergestellte Verkleidungsteil 1 (Figur 23) der Werkzeugstation 200 entnommen werden kann.

Bei der in den Figuren 24 bis 26 dargestellten Ausführungsform des erfindungsgemäßen Verkleidungsteils 1 bzw. der Instrumententafel sind Endbereich-Aufnahmen U3-1, U3-2 zur Aufnahme von Randabschnitten 42, 21 bzw. 22, 61 von Dekorschichten 40, 20, 60 ausgebildet und ist die Trägerschicht 10 wie folgt beschichtet:
▪ ein auf einer in der positiven X-Richtung seitlich der Endbereich-Aufnahme U3-1 gelegener Abschnitt 13 der Trägerschicht 10 mit einer Dekorschicht 40, so dass die Oberfläche 3a des Verkleidungsteils 1 durch eine erste Oberfläche 40a der Dekorschicht 40 gebildet wird,
▪ ein zwischen den Endbereich-Aufnahmen U3-1, U3-2 gelegener Abschnitt 15 der Trägerschicht 10 mit einer Dekorschicht 50, so dass die Oberfläche 5a des Verkleidungsteils 1 durch eine erste Oberfläche 50a der Dekorschicht 50 gebildet wird,
▪ ein auf einer in der negativen X-Richtung seitlich der Endbereich-Aufnahme U3-2 gelegener Abschnitt 14 der Trägerschicht 10 mit einer Dekorschicht 60, so dass die Oberfläche 4a des Verkleidungsteils 1 durch eine erste Oberfläche 60a der Dekorschicht 60 gebildet wird.

Die Endbereich-Aufnahmen U3-1, U3-2 sind derart ausgeführt, dass in den zugehörigen Trägerschicht-Schleifen V3-1 bzw. V3-2 jeweils zwei Seitenabschnitte 42, 51 bzw. 52, 61 aufgenommen sind. Dabei ist der Seitenabschnitt 42 Bestandteil der Dekorschicht 40, sind die Seitenabschnitte 51 und 52 Bestandteil der Dekorschicht 50 und ist der Seitenabschnitt 61 Bestandteil der Dekorschicht 60.

Jede dieser Trägerschicht-Schleifen V3-1, V3-2 der Trägerschicht 10 ist aus den zwei entlang zueinander verlaufenden Schenkeln W1, W2 gebildet, die sich quer zur flächigen Erstreckung des Trägerteils und entlang der Dickenrichtung Z erstrecken und ihre von der flächigen Erstreckung des Trägerteils abstehenden Enden über einen Verbindungsabschnitt W3 miteinander verbunden sind.

Die Figur 25 zeigt die Seitenabschnitte 42, 51, die im Verkleidungsteil-Querschnitt gesehen (Figur 24) in dem Innenraum W4 der Trägerschicht-Schleife V3-1 gelegen sind und sich dabei aneinander anliegend entlang zueinander erstrecken, wobei
▪ sich der Seitenabschnitt 42 entlang des Schenkels W1 erstreckt,
▪ sich der Seitenabschnitt 51 entlang des Schenkels W2 erstreckt.

Als Wurzelpunkt der v-förmigen Nut N3-1 ergibt sich der Punkt W5. Der Punkt W5 ergibt sich in diesem Querschnitt als der Wurzelpunkt der v-förmigen Nut N3-1. Der Abstand zwischen den Punkten W22 und W5 definiert die Länge t22. In den Figuren 25 und 26 ist auch der Basispunkt oder Punkt W19 des Innenraums W4 eingetragen, der derjenige Punkt der Innenfläche W8 der ersten Oberfläche 1a des Trägerteils 10 im Innenraum W4 ist, der von dem Punkt W5 in dem genannten Querschnitt und in der Längsersteckung der Schleife V3-1 des Trägerteils 10 gesehen am weitesten entfernt liegt. Der kürzeste Abstand zwischen den Punkten W5 und W19 wird hierin als Innenraum-Länge t19 oder als Länge des Innenraums W4 bezeichnet. Nach einer bevorzugten Ausführungsform der Endbereich-Aufnahme U2-1 beträgt sowohl der Abstand t21 als auch der Abstand t22 mindestens 30% des Abstands t19.

An einem Außenrand 42a des Seitenabschnitts 42 ist der Punkt W21 als derjenige Punkt des Seitenabschnitts 42 und an einem Außenrand 51a des Seitenabschnitts 51 ist der Punkt W22 als derjenige Punkt des Seitenabschnitts 42 definiert, die von dem Punkt W5 in dem genannten Querschnitt gesehen jeweils am weitesten entfernt liegen. Der Abstand zwischen den Punkten W21 und W5 in der Richtung des kürzesten Abstands t19 definiert die Länge t42 und der Abstand zwischen den Punkten W5 und W22 in der Richtung des kürzesten Abstands t19 definiert die Länge t51. Die Längen t42 und t51 betragen jeweils mindestens die dreifach durchschnittliche Dicke der Dekorschicht 40 bzw. 50.

Die Figur 26 zeigt in entsprechender Weise die Seitenabschnitte 52, 61, die im Verkleidungsteil-Querschnitt gesehen (Figur 24) in dem Innenraum W4 der Trägerschicht-Schleife V3-1 gelegen sind und sich dabei aneinander anliegend entlang zueinander erstrecken, wobei sich der Seitenabschnitt 52 entlang des Schenkels W2 und sich der Seitenabschnitt 61 entlang des Schenkels W1 erstreckt.

Als Wurzelpunkt der v-förmigen Nut N3-4 ergibt sich der Punkt W5. Der Punkt W5 ergibt sich in diesem Querschnitt als der Wurzelpunkt der v-förmigen Nut N3-2. Der Abstand zwischen den Punkten W22 und W5 definiert die Länge t52. Der kürzeste Abstand zwischen den Punkten W5 und W19 ist die Innenraum-Länge t19 oder Länge des Innenraums W4. Nach einer bevorzugten Ausführungsform der Endbereich-Aufnahme U3-4 beträgt sowohl der Abstand t52 als auch der Abstand t61 mindestens 30% des Abstands t19. An einem Außenrand 61a des Seitenabschnitts 61 ist der Punkt W21 als derjenige Punkt des Seitenabschnitts 61 und an einem Außenrand 52a des Seitenabschnitts 52 ist der Punkt W22 als derjenige Punkt des Seitenabschnitts 52 definiert, die von dem Punkt W5 in dem genannten Querschnitt gesehen jeweils am weitesten entfernt liegen. Der Abstand zwischen den Punkten W21 und W5 in der Richtung des kürzesten Abstands t19 definiert die Länge t61 und der Abstand zwischen den Punkten W5 und W22 in der Richtung des kürzesten Abstands t19 definiert die Länge t52. Die Längen t61 und t52 betragen jeweils mindestens die dreifach durchschnittliche Dicke der Dekorschicht 60 bzw. 50.

Zur Herstellung des Verkleidungsteils 1 nach der Figur 24 können dieselben Ausführungsformen der Werkzeugstation 200 und des Verfahrens verwendet werden, die bzw. das an Hand der Figuren 8 bis 16 beschrieben ist. Die Ausführungsformen der Herstellungsvorrrichtung nach der Erfindung können generell eine Umbugvorrichtung aufweisen, mit der während des Verfahrens ein Umbug eines Randabschnitts zumindest eines Dekorteils an dem Trägerteil erfolgen kann. In den Figuren 27, 29 bis 31 ist eine erste Umbugvorrichtung 510 und eine zweite Umbugvorrichtung 520 angeordnet. Jede Umbugvorrichtung 510, 520 weist einen Grundkörper 511 bzw. 521, eine darin angeordnete Schneidvorrichtung 512 bzw. 522, ein am Grundkörper zu dessen Verstellung angeordnete Stellvorrichtung 513 bzw. 523 und einen Umbugschieber 514 bzw. 524 auf, der jeweils mittels einer nicht dargestellten Verstellmechanik eine Umbugbewegung zum Umbugen eines Randbereichsabschnitts des jeweiligen Dekorteils an dem Trägerteil 10 ausführen kann. Die Umbugvorrichtungen 510, 520 können auch auf andre Weise ausgeführt sein.

In der Figur 27 ist die Werkzeugstation 200 in einem offenen Zustand und in der Figur 29 ist dieser in einem Zwischen-Zustand gezeigt, wobei in diese eine Halbzeug-Anordnung zur Herstellung eines Verkleidungsteils 1 nach der Figur 24 eingelegt ist:
▪ Eine Anordnung aus einem Trägerteil 10 und drei Dekorteilen 40, 50, 60 ist zwischen dem ersten Werkzeugteil 210 und dem zweiten Werkzeugteil 220 eingelegt, wobei das Dekorteil 40, 50, 60 auf dem Abschnitt 10-4 bzw. 10-5 bzw. 10-6 des Trägerteils 10 gelegen ist und die Abschnitte 10-4 und 10-6 im Bereich der Haltebacken 251; 252 und 261; 262 gelegen sind. Die Figur 28 zeigt, dass die Dekorteile 40 und 50 sowie 50 und 60 aneinander liegen. Die jeweiligen Dekorteile können an ihren Randabschnitten sich in Anlage zueinander befinden oder in einem Abstand zueinander gelegen sein, wie dies in der Figur 28 am Beispiel der Dekorteile 40 und 50 gezeigt ist.
▪ Ein Oberflächenabschnitt des ersten Werkzeugteils 210 und ein diesem gegenüber liegender Oberflächenabschnitt des zweiten Werkzeugteils 220 halten und pressen zusammen einen Basisabschnitt AB1 der Halbzeug-Anordnung, die in diesem Abschnitt aus dem Trägerteil 10 und dem Dekorteil 50 gebildet ist. Dabei kann insbesondere vorgesehen sein, dass die Heizvorrichtung 219 und/oder die Heizvorrichtung 229 das erste Werkzeugteil 210 und das zweite Werkzeugteil 220 erwärmen, um eine Pressverformung des Basisabschnitts AB1 des jeweiligen zwischen den Werkzeugteilen 210 und 220 gelegenen Halbzeugs zu erreichen.
▪ Zwei Paare von im ersten und zweiten Werkzeugteil 210, 220 integrierten Haltebacken 251, 261 bzw. 252, 262 halten jeweils einen Erfassungsbereich AF1; AF2 der Halbzeug-Anordnung, die in diesem Bereich durch das Trägerteil 10 mit jeweils einem Dekorteil 40 bzw. 60 gebildet ist, in einer vorbestimmten Position entlang der Längsersteckung der ersten oder zweiten formgebende Werkzeugoberfläche 212, 222. Dabei kann insbesondere vorgesehen sein, dass die Heizvorrichtung 255 und/oder die Heizvorrichtung 266 den jeweiligen Haltebacken 251; 252 bzw. 261; 262 erwärmen und insbesondere bei einer entsprechenden gewölbten Formgebung der Konturoberfläche 251a, 252a bzw. 261a, 262a eine Pressverformung der Erfassungsabschnitte AF1 oder AF2 des zwischen diesen gelegenen Halbzeugs vornehmen.
▪ Die Haltebacken 251; 252 bzw. 261; 262 wurden in Richtung zum Basisabschnitt AB1 bewegt.
▪ Die Schieber 293, 294 sind in den Zwischenabschnitt AZ3 bzw. AZ4 eingefahren.
▪ Die Schneidvorrichtungen 512 bzw. 522 der jeweiligen Umbugvorrichtung 510 bzw. 520 haben einen Abschnitt des Trägerteils abgeschnitten, so dass sich die Dekorteile 40, 60 über das Trägerteil 10 hinaus erstrecken.

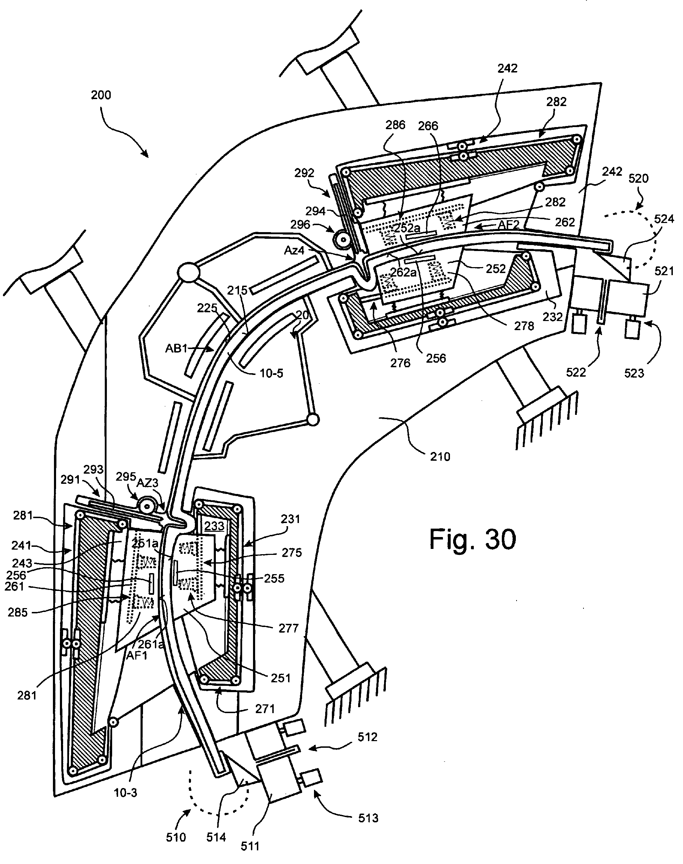

In der Figur 30 ist der Schieber 293, 294 aus dem Abschnitt AZ3 bzw. AZ4 der Halbzeug-Anordnung heraus bewegt und das jeweilige Paar von Haltebacken 251 und 261 bzw. 252 und 262 in Richtung zum Basisabschnitt AB1 bewegt. Die Umbugschieber 314 bzw. 324 haben entsprechende, sich über das Trägerteil 10 hinaus erstreckende Abschnitte der Dekorteile 40 bzw. 60 umgebugt.

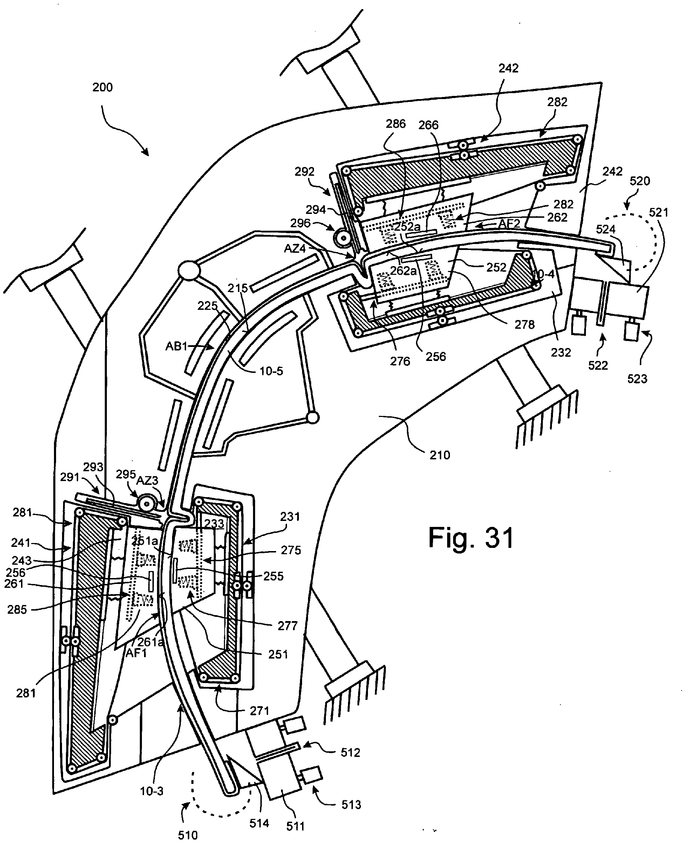

Die Figur 31 zeigt den darauf folgenden Zwischenzustand, in dem die Schieber 293, 294 aus der jeweiligen Zwischen-Schleife des Trägerteils 10 herausgezogen sind und die Haltebacken 251 und 261 bzw. 252 und 262 jeweils weiter in Richtung des Basisabschnitts AB1 bewegt und dadurch die Schenkel W1, W2 jeder Zwischen-Schleife des Trägerteils 10 weiter derart zusammen bewegt wurden, dass die jeweils einander zugewandten Innenflächen der Schenkel W1, W2 der jeweiligen Ausbauchung oder Zwischen-Schleife des Trägerteils 10 den zwischen diesen jeweils gelegenen Endabschnitt flächig zusammendrücken und den Punkt W5 (Figur 3 und Figur 5) somit Nute N3-1, N3-2 jeweils mit einem Wurzelpunkt W5 bilden. Ein Aushärten wurde vorgenommen und die Werkzeugstation 200 ist geöffnet, so dass das hergestellte Verkleidungsteil 1 der Werkzeugstation 200 entnommen werden kann.

Mit einer Ausführungsform der erfindungsgemäßen Herstellungsvorrichtung und dem erfindungsgemäßen Verfahren ist es auch möglich, ein Verkleidungsteil 1 herzustellen, das nur eine Nut aufweist. Ein solches Verkleidungsteil 1 ist in den Figuren 33 und 34 dargestellt.

Das in den Figuren 33 und 34 dargestellte Verkleidungsteil 1 weist hinsichtlich seiner flächigen Erstreckung einen ersten Abschnitt 3 oder einen ersten Seitenabschnitt 3 mit einem ersten Oberflächen-Abschnitt 3a und einen zweiten Abschnitt 7 oder zweiten Seitenabschnitt 7 mit einem zweiten Oberflächen-Abschnitt 7a sowie eine zwischen diesen gelegene Endbereich-Aufnahme U4 auf, die wie die Endbereich-Aufnahme U3-1 nach der Figur 25 ausgeführt ist, d.h. die Seitenabschnitte 72 und 81 erstrecken sich in analoger Weise in dem Innenraum W4. Ein auf einer in der positiven X-Richtung seitlich der Endbereich-Aufnahme U4 gelegener Abschnitt 17 der Trägerschicht 10 ist mit einer Dekorschicht 70 beschichtet, so dass die Oberfläche 3a des Verkleidungsteils 1 durch eine erste Oberfläche 70a der Dekorschicht 70 gebildet wird.

Auch ist ein auf einer in der negativen Richtung seitlich der Endbereich-Aufnahme U4 gelegener Abschnitt 18 der Trägerschicht 10 mit einer Dekorschicht 80 beschichtet, so dass die Oberfläche 6a eines Abschnitts 6 des Verkleidungsteils 1 durch eine erste Oberfläche 80a der Dekorschicht 80 gebildet wird. Bei der Ausführungsform des Verkleidungsteils nach der Figur 33 ist die Endbereich-Aufnahme U4 nach der Endbereich-Aufnahme U3-1 oder U3-2 der Figuren 6 und 7 ausgeführt. Dabei sind in der zugehörigen Trägerschicht-Schleife V4 zwei Seitenabschnitte 72, 81 aufgenommen, wobei der Seitenabschnitt 72 Bestandteil der Dekorschicht 70, sind die Seitenabschnitt 81 Bestandteil der Dekorschicht 80 ist. Die Figur 9 zeigt die Seitenabschnitte 72, 81, die im Verkleidungsteil-Querschnitt gesehen (wie an Hand der Figur 3 definiert) in dem Innenraum W4 der Trägerschicht-Schleife V4 gelegen sind und sich dabei aneinander anliegend entlang zueinander erstrecken, wobei
▪ sich der Seitenabschnitt 72 entlang des Schenkels W1 erstreckt,
▪ sich der Seitenabschnitt 81 entlang des Schenkels W2 erstreckt.

Als Wurzelpunkt der v-förmigen Nut N4 ergibt sich der Punkt W5. Der Punkt W5 ergibt sich in diesem Querschnitt als der Wurzelpunkt der v-förmigen Nut N4. An einem Außenrand 73 des Seitenabschnitts 72 ist der Punkt W21 als derjenige Punkt des Seitenabschnitts 72 definiert, der von dem Punkt W5 in dem genannten Querschnitt gesehen am weitesten entfernt liegt. Analog zur Ausführungsform der Figur 7 ist weiterhin vorgesehen: Der Abstand zwischen den Punkten W21 und W5 definiert die Länge t21. Weiterhin ist an einem Außenrand 82 des Seitenabschnitts 81 der Punkt W22 als derjenige Punkt des Seitenabschnitts 81 definiert, der von dem Punkt W5 in dem genannten Querschnitt gesehen am weitesten entfernt liegt. Der Abstand zwischen den Punkten W22 und W5 definiert die Länge t22. In der Figur 7 ist auch der Basispunkt oder Punkt W19 des Innenraums W4 eingetragen, der derjenige Punkt der Innenfläche W8 der ersten Oberfläche 1a des Trägerteils 10 im Innenraum W4 ist, der von dem Punkt W5 in dem genannten Querschnitt und in der Längsersteckung der Schleife V4 des Trägerteils 10 gesehen am weitesten entfernt liegt. Der kürzeste Abstand zwischen den Punkten W5 und W19 wird hierin als Innenraum-Länge t19 oder als Länge des Innenraums W4 bezeichnet. Nach einer bevorzugten Ausführungsform der Endbereich-Aufnahme U4 beträgt sowohl der Abstand t72 als auch der Abstand t81 mindestens 30% des Abstands t19. Die Längen t72 und t81 können jeweils mindestens die dreifach durchschnittliche Dicke der Dekorschicht 70 bzw. 80 betragen.

Die Werkzeugstation 300 (Figur 35) weist ein erstes Werkzeugteil 310 mit einer ersten formgebenden Werkzeugoberfläche oder Konturoberfläche 315 und ein zweites Werkzeugteil 320 mit einer zweiten formgebenden Werkzeugoberfläche 325 auf, die jeweils mittels zumindest einer Verstellvorrichtung 311 bzw. 321 relativ zueinander verstellbar sind. Das erste Werkzeugteil 210 und das zweite Werkzeugteil 220 kann jeweils eine optional vorgesehene Unterdruckvorrichtung 218, 228 (Figur 8) aufweisen, mit der z.B. ein an der ersten formgebenden Werkzeugoberfläche 315 anliegendes Halbzeug oder ein jeweils vorgesehenes und an der zweiten formgebenden Werkzeugoberfläche 325 anliegendes Dekorteil 70, 80 an das zweite Werkzeugteil 320 angesaugt werden kann. Insbesondere kann in diesen jeweiligen Zuständen vorgesehen sein, dass das anliegende Trägerteil 10 bzw. das anliegende Dekorteil mittels einer Heizvorrichtung, die in dem ersten Werkzeugteil 310 bzw. dem zweiten Werkzeugteil 320 integriert ist, erwärmt wird (nicht dargestellt). Damit kann insbesondere auf den an Hand der Figuren 6 und 7 beschriebenen Vorbereitungsschritt verzichtet werden.

Das erste Werkzeugteil 310 weist zwei Halte-Einstellvorrichtungen 331, 332 und einen Aufnahmeraum 333 zur Aufnahme von zwei Haltebacken 351 und 352 und zwei jeweils diesen zugeordneten Verstellvorrichtung 371 bzw. 372 auf, mit der jeweils jeder Haltebacken 351 bzw. 352 zwischen einer Ausgangsstellung (Figur 35) und einer Press-Stellung entlang der ersten formgebenden Werkzeugoberfläche 312 bewegt werden kann. Jeder Haltebacken 351, 352 weist eine Haltebacken-Konturoberfläche 351 a bzw. 352a auf, die der zweiten formgebenden Werkzeugoberfläche 322 zugewandt ist. Weiterhin weist jeder Haltebacken 351, 352 eine Anlagefläche 351 b bzw. 352b auf, die jeweils quer zur Haltebacken-Konturoberfläche 351a bzw. 352a verläuft.

Die erste formgebende Werkzeugoberfläche 312 weist einen ersten Abschnitt 317 und einen zweiten Abschnitt 318 auf, zwischen denen die Halte-Einstellvorrichtung 331 gelegen ist. Der erste Abschnitt 317 und der zweite Abschnitt 318 sind jeweils als Abschnitte vorgesehen, gegenüber denen während des Verformungsprozesses der an diesem jeweils anliegenden Abschnitt einer Halbzeuganordnung aus einem Trägerteil 10 und einem Dekorteil 70 bzw. 80 bewegt werden.

Ein Aufnahmeraum 333 ist zwischen dem ersten Abschnitt 317 und dem zweiten Abschnitt 315 gelegen, so dass in dem Aufnahmeraum 333 die Haltebacken 351, 352 gelegen sind und in dem Aufnahmeraum 333 die Funktion einer formgebende Werkzeugoberfläche ergänzend zur den formgebenden Werkzeugoberflächen 317, 318 übernehmen. Zur Bewegungsführung der Haltebacken 351, 352 weist jede Halte-Einstellvorrichtung 331, 332 eine Führungsvorrichtung 375 bzw. 376 auf. Jede Halte-Einstellvorrichtung 331, 332 kann auch eine Vorspanneinrichtung 377 bzw. 378 aufweisen, mit der der jeweilige Haltebacken 351, 252 in eine ausgefahrene Stellung vorgespannt ist, bei der die Kontur-Oberfläche 351a bzw. 352a des Haltebackens 351 bzw. 352 eine Distanz über die Konturoberfläche der ersten formgebenden Werkzeugoberfläche 312, sowie sie sich als kontinuierliche Konturlinie ohne Wendepunkt aus dem Verlauf des ersten Abschnitts 317 und des zweiten Abschnitts 318 ergeben, in Richtung zum zweiten Werkzeugteil 220 übersteht. Die Haltebacken 351, 352 können mittels der jeweiligen Verstellvorrichtung 371 bzw. 372 aufeinander zu bewegt werden, dass die Anlageflächen 351 b und 352b einen Taschenabschnitt U4 (Figur 33) und zumindest einen jeweiligen Randbereichs-Abschnitt 70, 80 eines jeweiligen Dekorteils pressen und somit ausbilden können.

Auch weist das zweite Werkzeugteil 320 zwei Halte-Einstellvorrichtungen 341, 342 und einen Aufnahmeraum 343 zur Aufnahme von zwei Haltebacken 361 und 362 und zwei jeweils diesen zugeordneten Verstellvorrichtung 381 bzw. 382 auf, mit der jeweils jeder Haltebacken 361 bzw. 362 zwischen einer Ausgangsstellung (Figur 8) und einer Press-Stellung entlang der zweiten formgebenden Werkzeugoberfläche 222 bewegt werden kann. Jeder Haltebacken 361, 362 weist eine Haltebacken-Konturoberfläche 361a bzw. 362a auf, die der ersten formgebenden Werkzeugoberfläche 312 zugewandt ist. Weiterhin weist jeder Haltebacken 361, 362 eine Anlagefläche 361 b bzw. 362b auf, die jeweils quer zur Haltebacken-Konturoberfläche 361a bzw. 362a verläuft.

Die zweite formgebende Werkzeugoberfläche 322 weist einen ersten Abschnitt 327 und einen zweiten Abschnitt 328 auf, die jeweils als Abschnitte vorgesehen sind, auf denen während des Verformungsprozesses der an diesem jeweils anliegende Abschnitt einer Halbzeuganordnung bewegt wird. Der Aufnahmeraum 343 ist zwischen dem ersten Abschnitt 327 und dem zweiten Abschnitt 328 gelegen, so dass in diesem Bereich die Haltebacken 361 und 362 die Funktion von formgebenden Werkzeugoberflächen ergänzend zur der formgebenden Werkzeugoberfläche 325 übernehmen.

Zur Bewegungsführung der Haltebacken 361 und 362 weist jede Halte-Einstellvorrichtung 341, 342 eine Führungsvorrichtung 385 bzw. 386 auf. Jede Halte-Einstellvorrichtung 341, 342 kann auch eine Vorspanneinrichtung 387 bzw. 388 aufweisen, mit der der jeweilige Haltebacken 361 bzw. 362 in eine ausgefahrene Stellung vorgespannt ist, bei der die Kontur-Oberfläche 361a bzw. 362a des Haltebackens 361 bzw. 362 eine Distanz über die Konturoberfläche der ersten formgebenden Werkzeugoberfläche 325, wie sie sich als kontinuierliche Konturlinie ohne Wendepunkt aus dem Verlauf des ersten Abschnitts 327 und des zweiten Abschnitts 328 ergibt, in Richtung zum ersten Werkzeugteil 310 übersteht. Der Haltebacken 361, 362 kann mittels der Verstellvorrichtung 381 bzw. 382 derart bewegt werden, dass die Haltebacken 361, 362 in derselben Richtung und Geschwindigkeit wie der jeweils gegenüberliegende Haltebacken 361 bzw. 362 des zweiten Werkzeugteils 320 bewegt wird.

An dem zweiten Werkzeugteil 320 ist eine Schiebervorrichtung 391 mit einem Schieber 393, einer Schieber-Verstellmechanik 397, insbesondere in Form eine Führungsvorrichtung wie z.B. einer Gleitführung, und jeweils einer Antriebsvorrichtung 395 zum Antrieb und Bewegen des Schiebers 393 angeordnet. Der Schieber 393 ist in dem Aufnahmeraum 343 gelegen. Der Schieber 294 ist zwischen dem Aufnahmeraum 244 und dem Mittelabschnitt 225 gelegen. Die Schiebervorrichtung 391 ist derart ausgeführt, dass der zugehörige Schieber 393 zwischen einer eingefahrenen Stellung (Figur 35) und einer ausgefahrenen Stellung (Figur 37) bewegbar ist. Die Haltebacken 351, 352 und 361, 362 sind derart in den jeweiligen Werkzeugteilen 310, 320 angeordnet und optional an der Vorspannvorrichtung 377, 378 in Bezug auf das jeweils gegenüber gelegene Werkzeugteil 310 bzw. 320 gelagert, dass beim Zusammenfahren der Werkzeugteile 310, 320 und einem zwischen den jeweils einander gegenüber liegenden Haltebacken 351 und 361 bzw. 352 und 362 gelegenen Halbzeug mit der Kombination aus dem Trägerteil 10 und dem Dekorteil 70 bzw. 80 die Haltebacken 351 und 361 bzw. 352 und 362 gegen die Vorspannung der Vorspannvorrichtung 377bzw. 378 in das jeweilige Werkzeugteil 310 bzw. 320 eingefahren werden. Dadurch ist es möglich, dass die Haltebacken 351 und 361 bzw. 352 und 362 das Halbzeug oder die Halbzeug-Anordnung mit einer vorbestimmten maximalen Kraft und auf nachgiebige oder elastische Weise von zwei entgegen gesetzten Seiten zusammendrücken, so dass das Risiko einer Beschädigung des Halbzeugs oder der Halbzeug-Anordnung reduziert ist und die Verkleidungsteil-Qualität und insbesondere die Qualität des Dekorteils des Verkleidungsteils 1 sicher gestellt und insbesondere erhöht werden kann.

Die Oberflächen 351a und 361a bzw. 352a und 362a der jeweils einander gegenüber liegenden Haltebacken 351 und 361 bzw. 352 und 362 sind komplementär zueinander und derart gestaltet, dass diese den Abschnitt AF3 bzw. AF4 der Halbzeuganordnung formen, der jeweils von diesen jeweils einander gegenüber liegenden Haltebacken 351 und 361 bzw. 352 und 362 durch Andrücken oder Anpressen geformt wird.

Nach einer Ausführungsform der Erfindung weist jeder zumindest eines Paares von Haltebacken 351 und 361 bzw. 352 und 362 jeweils eine Heizvorrichtung 255 und 256 bzw. 265 und 266 (Figur 8) auf, durch die eine Pressverformung jeweils eines Abschnitts AF3 bzw. AF4 der Halbzeug-Anordnung aus dem Trägerteil 10 und dem jeweiligen Dekorteil 70 bzw. 80 vorgenommen werden kann, wenn die Haltebacken 351 und 361 bzw. 352 und 362 den jeweiligen Abschnitt AF3 bzw. AF4 von zwei entgegen gesetzt zueinander gelegenen Seiten andrücken und den jeweiligen Abschnitt AF3 bzw. AF4 erwärmen.

Auf einer oder beiden der formgebenden Werkzeugoberflächen 321, 322 und insbesondere auf dem ersten Abschnitt 317 oder dem zweiten Abschnitt 318 des ersten Werkzeugteils 310 und/oder auf dem ersten Abschnitt 327 oder dem zweiten Abschnitt 328 des zweiten Werkzeugteils 320 kann abschnittsweise oder durchgehend eine beschriebene elastische Auflage oder Gleit-Auflage (nicht in den Figuren dargestellt) gelegen sein, um ein Gleiten der an diesen jeweils anliegenden Halbzeug-Anordnung zu verbessern.

In der Figur 35 ist die Werkzeugstation 300 in einem offenen Zustand gezeigt, bei dem eine Halbzeug-Anordnung zur Herstellung eines Verkleidungsteils 1 in die Werkzeugstation 300 eingelegt ist.

In der Figur 37 ist die Werkzeugstation 300 in einem geschlossenen und in einem Zwischen-Zustand gezeigt, bei dem eine Halbzeug-Anordnung zur Herstellung eines Verkleidungsteils 1 in die Werkzeugstation 300 eingelegt ist:
▪ Eine Anordnung aus einem Trägerteil 10 und zwei Dekorteilen 70, 80 ist zwischen dem ersten Werkzeugteil 310 und dem zweiten Werkzeugteil 320 eingelegt, wobei das jeweilige Dekorteil 70, 80 auf dem Abschnitt 10-7 bzw. 10-8 des Trägerteils 10 gelegen ist und die Abschnitte 10-7 und 10-8 im Bereich der Haltebacken 351; 352 und 361; 362 gelegen sind. Die Figur 36 zeigt, dass die Dekorteile 70 und 80 aneinander liegen. Die Dekorteile 70 und 80 können an ihren Randabschnitten sich in Anlage zueinander befinden oder in einem Abstand zueinander gelegen sein, wie dies in der Figur 36 gezeigt ist.
▪ Ein Oberflächenabschnitt 317 des ersten Werkzeugteils 310 und ein diesem gegenüber liegender Oberflächenabschnitt 327 des zweiten Werkzeugteils 320 halten und pressen zusammen einen Basisabschnitt AB3 der Halbzeug-Anordnung, die in diesem Abschnitt aus dem Trägerteil 10 und dem Dekorteil 70 gebildet ist. Dabei kann insbesondere vorgesehen sein, dass die Heizvorrichtung 219 und/oder die Heizvorrichtung 229 das erste Werkzeugteil 310 und das zweite Werkzeugteil 320 erwärmen (Figur 8), um eine Pressverformung des Basisabschnitts AB3 des jeweiligen zwischen den Werkzeugteilen 310 und 320 gelegenen Halbzeugs zu erreichen.
▪ Ein weiterer Oberflächenabschnitt 318 des ersten Werkzeugteils 310 und ein diesem gegenüber liegender Oberflächenabschnitt 328 des zweiten Werkzeugteils 320 halten und pressen zusammen einen Basisabschnitt AB4 der Halbzeug-Anordnung, die in diesem Abschnitt aus dem Trägerteil 10 und dem Dekorteil 80 gebildet ist. Dabei kann insbesondere vorgesehen sein, dass die Heizvorrichtung 219 und/oder die Heizvorrichtung 229 das erste Werkzeugteil 310 und das zweite Werkzeugteil 320 erwärmen (Figur 8), um eine Pressverformung des Basisabschnitts AB4 des jeweiligen zwischen den Werkzeugteilen 310 und 320 gelegenen Halbzeugs zu erreichen.
▪ Zwei Paare von im ersten und zweiten Werkzeugteil 310, 320 integrierten Haltebacken 351, 361 bzw. 352, 362 halten jeweils einen Erfassungsbereich AF3; AF4 der Halbzeug-Anordnung, die in diesem Bereich durch das Trägerteil 10 mit jeweils einem Dekorteil 70 bzw. 80 gebildet ist, in einer vorbestimmten Position entlang der Längsersteckung der ersten oder zweiten formgebende Werkzeugoberfläche 312, 322. Dabei kann insbesondere vorgesehen sein, dass die Heizvorrichtung 255 und/oder die Heizvorrichtung 266 den jeweiligen Haltebacken 251; 252 bzw. 261; 262 erwärmen und insbesondere bei einer entsprechenden gewölbten Formgebung der Konturoberfläche 251a, 252a bzw. 261 a, 262a eine Pressverformung der Erfassungsabschnitte AF1 oder AF2 der zwischen diesen gelegenen Halbzeug-Anordnung vornehmen (Figur 8).
▪ Die Haltebacken 351; 352 bzw. 361; 362 wurden aufeinander zu bewegt.
▪ Der Schieber 393 ist in den Zwischenabschnitt AZ5 eingefahren. Ein Zwischenzustand, bei dem der Schieber 393 in einem dazu geringeren Maß in die Halbzeug-Anordnung eingefahren ist, ist in der Figur 36 gezeigt.
▪ Die Schneidvorrichtungen 512 bzw. 522 der optional vorgesehenen jeweiligen Umbugvorrichtung 510 bzw. 520 haben einen Randbereichs-Abschnitt des Trägerteils 10 abgeschnitten, so dass sich die Dekorteile 70 bzw. 80 über das Trägerteil 10 hinaus erstrecken.

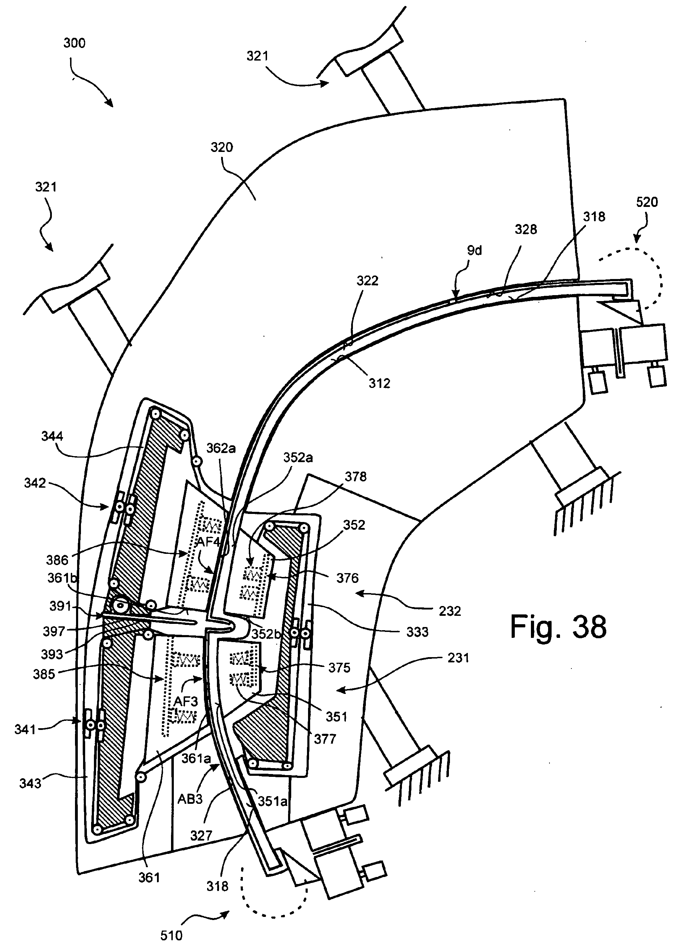

In der Figur 38 ist der Schieber 393 aus dem Abschnitt AZ5 der Halbzeug-Anordnung heraus bewegt. Die Umbugschieber 514 bzw. 524 haben entsprechende, sich über das Trägerteil 10 hinaus erstreckende Abschnitte der Dekorteile 70 bzw. 80 umgebugt.

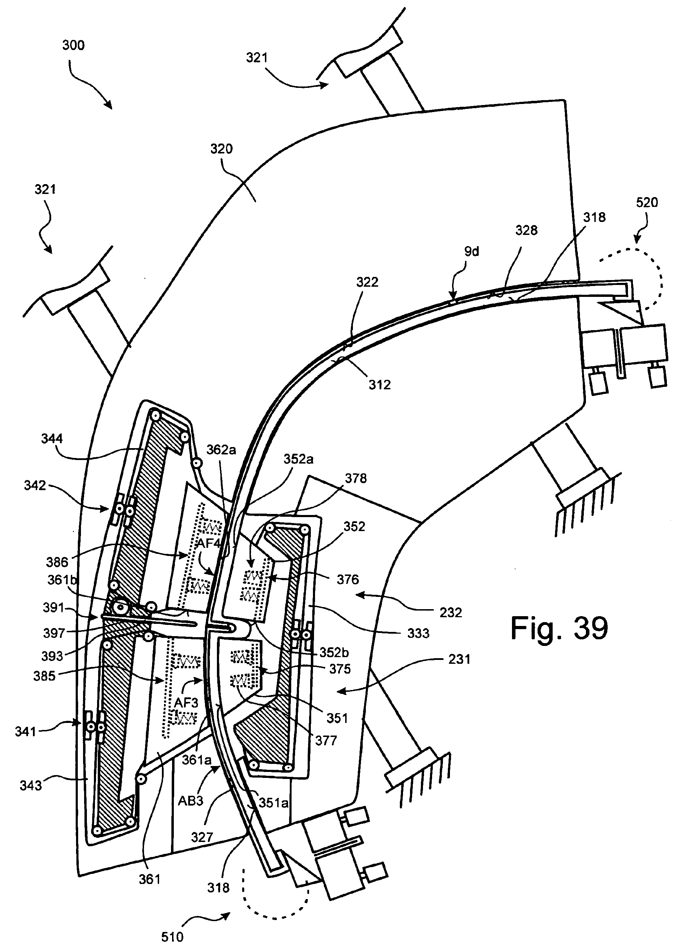

Die Figur 39 zeigt den darauf folgenden Zwischenzustand, in dem der Schieber 393, aus der Zwischen-Schleife AZ5 der Halbzeug-Anordnung bzw. des Trägerteils 10 herausgezogen ist und die Haltebacken 351 und 361 bzw. 352 und 362 jeweils weiter aufeinander zu bewegt und durch die Anlageflächen 351 b und 361b bzw. 352b und 362b die Schenkel W1, W2 der Zwischen-Schleife AZ5 der Halbzeug-Anordnung bzw. des Trägerteils 10 weiter derart zusammen bewegt wurden, dass die jeweils einander zugewandten Innenflächen der Schenkel W1, W2 der jeweiligen Ausbauchung oder Zwischen-Schleife des Trägerteils 10 den zwischen diesen jeweils gelegenen Endabschnitt flächig zusammendrücken und den Punkt W5 (Figur 34) somit die Nut N4 mit einem Wurzelpunkt W5 bilden.

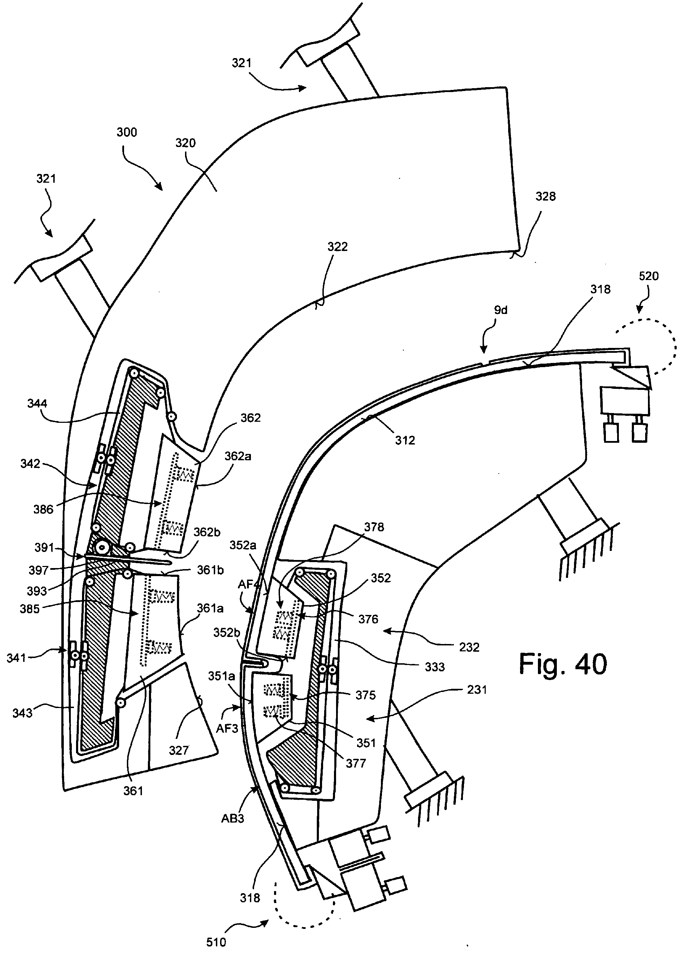

Nach der Figur 40 wurde ein Aushärten vorgenommen und die Werkzeugstation 300 ist geöffnet, so dass das hergestellte Verkleidungsteil 1 (Figur 41) der Werkzeugstation 300 entnommen werden kann.

Mit Varianten der dargestellten Ausführungsformen ist es auch möglich, mehr als zwei Taschenabschnitte nach einer der hierin beschriebenen Ausführungsformen an einem Verkleidungsteil 1 herzustellen. Die Form des Taschenabschnitts kann abhängig von den Eigenschaften der jeweils verwendeten Halbzeuge beliebig hergestellt werden. Insbesondere der Verlauf des jeweiligen Taschenabschnitts in seiner jeweiligen Längsrichtung (z.B. Längsrichtung L1, L2 gemäß Figur 3, 5, 18 oder Längsrichtung L4 gemäß Figur 33) wird durch die Formgebung des jeweils verwendeten Schiebers bestimmt.

In der Figur 42 ist eine weitere Ausführungsform der Herstellungsvorrichtung dargestellt, die z.B. gegenüber der in den Figuren 8 bis 16 dargestellten Ausführungsform der Herstellungsvorrichtung eine Verstellvorrichtung 271, 272, 281, 282 zum Bewegen der Haltebacken 351, 361, 352, 362 aufweist, die als Linearantriebsvorrichtung realisiert ist, wie schematisch in der Figur 42 gezeigt ist. Die Linearantriebsvorrichtung weist einen Antriebsmotor z.B. in Form eines pneumatischen oder hydraulischen Antriebszylinders mit einer Schubstange auf, an die ein jeweiliger Haltebacken 351, 361, 352, 362 gekoppelt ist. Die Linearantriebsvorrichtung kann auch einen Elektromotor mit einem ausgangsseitigen und längsverschiebbaren Stellelement sowie eine an dieses gekoppelte Antriebsstange oder Schubstange aufweisen, die an einen jeweiligen Haltebacken 351, 361, 352, 362 gekoppelt ist.

## Patentansprüche

1. Verfahren zur Herstellung eines Innenverkleidungsteils (1) in einer Werkzeug-Station (200; 300) aus einer Halbzeug-Anordnung aus einem Trägerteil (10) und einem Dekorteil (20, 30, 40, 50, 60, 70, 80), wobei die Werkzeug-Station (200; 300) zumindest ein Paar von Haltebacken (251, 252; 351, 352; 261, 262; 361, 362) aufweist, die einen Erfassungsabschnitt (AF1, AF2; AF3, AF4) der Halbzeug-Anordnung halten, das Verfahren aufweisend die Schritte:
▪ Verschieben des Erfassungsabschnitts (AF1, AF2; AF3, AF4) mittels des Paars von an diesem anliegenden Haltebacken (251, 252; 351, 352; 261, 262; 361, 362) in Richtung zu einem Basisabschnitt (AB1, AB2; AB3, AB4) und gleichzeitiges Fahren eines Schiebers (293, 294; 391) auf einen Zwischenabschnitt (AZ1, AZ2; AZ3, AZ4),
▪ Weiterfahren des Schiebers (293, 294; 391), so dass sich in dem Zwischenabschnitt (AZ1, AZ2; AZ3, AZ4) eine Trägerteil-Schleife (V1-1, V1-2; V2-1, V2-2; V3-1, V3-2; V4) ausbildet, wobei ein Randbereichs-Abschnitt (31, 32; 42, 61; 42, 51, 52, 61; 42, 81) des Dekorteils (20, 30, 40, 50, 60, 70, 80) in der Trägerteil-Schleife (V1-1, V1-2; V2-1, V2-2; V3-1, V3-2; V4) gelegen ist,
▪ Herausfahren des Schiebers (293, 294) aus der Trägerteil-Schleife (V1-1, V1-2; V2-1, V2-2; V3-1, V3-2; V4),
▪ weiteres Bewegen der einen Erfassungsabschnitt (AF1, AF2; AF3, AF4) haltenden Haltebacken (251, 252; 351, 352; 261, 262; 361, 362) in Richtung zu dem Basisabschnitt (AB1, AB2; AB3, AB4), so dass zwei Schenkel (W1, W2) der Trägerteil-Schleife (V1-1, V1-2; V2-1, V2-2; V3-1, V3-2; V4) aneinander gepresst werden.

2. Verfahren nach dem Anspruch 1, wobei die Halbzeug-Anordnung in zumindest einem Basisabschnitt (AB1, AB2; AB3, AB4) aus einer Kombination eines Trägerteils (10), und eines Dekorteils (20, 30, 40, 50, 60, 70, 80), das in einem Beschichtungsbereich des Trägerteils (10) auf dieses kaschiert ist, gebildet ist, das Verfahren aufweisend die Schritte:
▪ Verschieben des Erfassungsabschnitts (AF1, AF2; AF3, AF4) mittels dem Paar von an diesem jeweils anliegenden Haltebacken (251; 261; 252, 262) in Richtung zu einem Basisabschnitt (AB1, AB2; AB3, AB4) und gleichzeitiges Fahren eines Schiebers (293, 294; 391) auf einen Zwischenabschnitt (AZ1, AZ2; AZ3, AZ4), der zwischen einem Basisabschnitt (AB1, AB2; AB3, AB4) und dem jeweiligen Erfassungsabschnitt (AF1, AF2; AF3, AF4) gelegen ist,
▪ Weiterfahren des Schiebers (293, 294; 391), so dass sich in dem Zwischenabschnitt (AZ1, AZ2; AZ3, AZ4) eine Trägerteil-Schleife (V1-1, V1-2; V2-1, V2-2; V3-1, V3-2) mit zwei Schenkel (W1, W2) und einem zwischen diesen gelegenen Verbindungsabschnitt (W3) ausbildet, wobei die Halbzeug-Anordnung derart ausgeführt ist, dass ein Randbereichs-Abschnitt (31, 32; 42, 61; 42, 51, 52, 61; 42, 81) des Dekorteils (30) in der Trägerteil-Schleife (V1-1, V1-2; V2-1, V2-2; V3-1, V3-2) gelegen ist,
▪ Herausfahren des Schiebers (293, 294) aus der Trägerteil-Schleife (V1-1, V1-2; V2-1, V2-2; V3-1, V3-2),
▪ weiteres Bewegen der einen Erfassungsabschnitt (AF1, AF2; AF3, AF4) haltenden Haltebacken (251; 261; 252, 262) in Richtung zu dem Basisabschnitt (AB1, AB2; AB3, AB4), so dass die zwei Schenkel (W1, W2) der Trägerteil-Schleife (V1-1, V1-2; V2-1, V2-2; V3-1, V3-2) aneinander gepresst werden.

3. Verfahren nach dem Anspruch 1, wobei die Halbzeug-Anordnung in zumindest einem Basisabschnitt (AB3, AB4) aus einer Kombination eines Trägerteils (10) und eines Dekorteils (70, 80), das in einem Beschichtungsbereich des Trägerteils (10) auf dieses kaschiert ist, gebildet ist, das Verfahren aufweisend die Schritte:
▪ Verschieben von zwei Erfassungsabschnitten (AF3, AF4) mittels jeweils einem Paar von an diesen jeweils anliegenden Haltebacken (351; 361; 352, 362) in Richtung aufeinander zu und gleichzeitiges Fahren eines Schiebers (391) auf einen Zwischenabschnitt (AZ5), der zwischen den Erfassungsabschnitten (AF3, AF4) gelegen ist,
▪ Weiterfahren des Schiebers (391), so dass sich in dem Zwischenabschnitt (AZ5) eine Trägerteil-Schleife (V4) mit zwei Schenkel (W1, W2) und einem zwischen diesen gelegenen Verbindungsabschnitt (W3) ausbildet, wobei die Halbzeug-Anordnung derart ausgeführt ist, dass ein Randbereichs-Abschnitt (42, 81) des Dekorteils (30) in der Trägerteil-Schleife (V4) gelegen ist,
▪ Herausfahren des Schiebers (391) aus der Trägerteil-Schleife (V4),
▪ weiteres Bewegen der beiden jeweils einen Erfassungsabschnitt (AF5) haltenden Haltebacken (351; 361; 352, 362) in Richtung aufeinander zu, so dass die zwei Schenkel (W1, W2) der Trägerteil-Schleife (V4) aneinander gepresst werden.

4. Verfahren nach einem der vorstehenden Ansprüche, wobei in der Werkzeug-Station (200; 300) nach dem Zusammenpressen der zwei Schenkel (W1, W2) der Trägerteil-Schleife (V1-1, V1-2; V2-1, V2-2; V3-1, V3-2; V4) ein Aushärten der Halbzeug-Anordnung erfolgt.

5. Werkzeug-Station (200; 300) zur Herstellung eines Innenverkleidungsteils (1) in einer aus einer Halbzeug-Anordnung aus einem Trägerteil (10) und einem zumindest abschnittsweise auf diesem kaschierten Dekorteil (20, 30, 40, 50, 60, 70, 80), wobei die Werkzeug-Station (200; 300) aufweist:
▪ ein erstes Werkzeugteil (210; 310) mit einer formgebenden Werkzeugoberfläche (212; 312),
▪ zumindest einen im ersten Werkzeugteil (210; 310) integrierten Haltebacken (251, 252; 351, 352),
▪ eine Verstellvorrichtung (271, 272), die mit dem im ersten Werkzeugteil (210; 310) integrierten Haltebacken (251, 252; 351, 352) gekoppelt und derart ausgeführt ist, dass diese den Haltebacken (251, 252; 351, 352) entlang der Erstreckung der formgebenden Werkzeugoberfläche (212; 312) bewegen kann,
▪ zumindest eine Schiebervorrichtung (291; 391) mit jeweils einem Schieber (291, 292; 393), und jeweils einer Antriebsvorrichtung (295, 296; 395) zum Antrieb und Bewegen des Schiebers (291, 292; 393),
▪ ein zweites Werkzeugteil (220; 320) mit einer formgebenden Werkzeugoberfläche (222; 322),
**dadurch gekennzeichnet, dass** die Werkzeug-Station weiter aufweist:
▪ zumindest einen im zweiten Werkzeugteil (220; 320) integrierten Haltebacken (261, 262; 361, 362),
▪ eine Verstellvorrichtung (281, 282), die mit dem im zweiten Werkzeugteil (220; 320) integrierten Haltebacken (261, 262; 361, 362) gekoppelt und derart ausgeführt ist, dass diese den Haltebacken (261, 262; 361, 362) entlang der Erstreckung der formgebenden Werkzeugoberfläche (222; 322) bewegen kann,
▪ eine Steuerungsvorrichtung, die funktional mit der Verstellvorrichtung (271, 272) und der Antriebsvorrichtung (295, 296; 395) des ersten Werkzeugteils (210; 310) sowie mit der Verstellvorrichtung (281, 282) des zweiten Werkzeugteils (220; 320) verbunden und derart ausgeführt ist, dass diese den im ersten Werkzeugteil (210; 310) integrierten Haltebacken (251, 252; 351, 352) und den im zweiten Werkzeugteil (220; 320) integrierten Haltebacken (261, 262; 361, 362) zeitgleich entlang derselben Bewegungsrichtung bewegen und gleichzeitig weiterhin den Schieber (291, 292; 393) in Richtung zum zweiten Werkzeugteil (220; 320) bewegen kann.

## Claims

1. Method for manufacturing of an inner lining part (1) in a tool station (200; 300) from a semi-finished product arrangement of a support part (10) and a decoration part (20, 30, 40, 50, 60, 70, 80), wherein the tool station (200; 300) comprises at least a pair of holding clamps (251, 252; 351, 352; 261, 262; 361, 362) which hold a capture section (AF1, AF2; AF3, AF4) of the semi-finished product arrangement, the method comprising the steps:
▪ shifting of the capture section (AF1, AF2; AF3, AF4) by means of the pair of holding clamps (251, 252; 351, 352; 261, 262; 361, 362) which lie against the same in direction to a base section (AB1, AB2; AB3, AB4) and simultaneously moving a slider (293, 294; 391) towards a connecting section (AZ1, AZ2; AZ3, AZ4),
▪ moving on the slider (293, 294; 391) so that a support part loop (V1-1, V1-2; V2-1, V2-2; V3-1, V3-2; V4) is formed in the connecting section (AZ1, AZ2; AZ3, AZ4), wherein an edge region section (31, 32; 42, 61; 42, 51, 52, 61; 42, 81) of the decoration part (20, 30, 40, 50, 60, 70, 80) is positioned in the support part loop (V1-1, V1-2; V2-1, V2-2; V3-1, V3-2; V4),
▪moving the slider (293, 294) out of the support part loop (V1-1, V1-2; V2-1, V2-2; V3-1, V3-2; V4),
▪ further moving the holding clamps (251, 252; 351, 352; 261, 262; 361, 362) which hold the capture section (AF1, AF2; AF3, AF4) in direction to the base section (AB1, AB2; AB3, AB4) so that two legs (W1, W2) of the loop (V1-1, V1-2; V2-1, V2-2; V3-1, V3-2; V4) of the support part are pressed against each other.

2. Method according to claim 1, wherein die semi-finished product arrangement in at least a base section (AB1, AB2; AB3, AB4) is formed of a combination of a support part (10) and of a decoration part (20, 30, 40, 50, 60, 70, 80) which is laminated on the support part (10) in a lamination area of the support part (10), the method comprising the steps:
▪ shifting of the capture section (AF1, AF2; AF3, AF4) by means of the pair of holding clamps (251; 261; 252, 262) which lie against the same in direction to a base section (AB1, AB2; AB3, AB4) and simultaneously moving a slider (293, 294; 391) towards a connecting section (AZ1, AZ2; AZ3, AZ4) which lies between a base section (AB1, AB2; AB3, AB4) and the respective capture section (AF1, AF2; AF3, AF4),
▪ moving on the slider (293, 294; 391) so that in the connecting section (AZ1, AZ2; AZ3, AZ4) a support part loop (V1-1, V1-2; V2-1, V2-2; V3-1, V3-2) with two legs (W1, W2) and a connecting section (W3) which lies between the same is formed, wherein the semi-finished product arrangement is formed such that an edge region section (31, 32; 42, 61; 42, 51, 52, 61; 42, 81) of the decoration part (30) is positioned in the support part loop (V1-1, V1-2; V2-1, V2-2; V3-1, V3-2),
▪ moving the slider (293, 294) out of the support part loop (V1-1, V1-2; V2-1, V2-2; V3-1, V3-2),
▪ further moving the holding clamps (251; 261; 252, 262) which hold the capture section (AF1, AF2; AF3, AF4) in direction to the base section (AB1, AB2; AB3, AB4) so that the two legs (W1, W2) of the support part loop (V1-1, V1-2; V2-1, V2-2; V3-1, V3-2) are pressed against each other.

3. Method according to claim 1, wherein die semi-finished product arrangement in at least a base section (AB3, AB4) is formed of a combination of a support part (10) and of a decoration part (70, 80) which is laminated on the support part (10) in a lamination area of the support part (10), the method comprising the steps:
▪ shifting of two capture sections (AF3, AF4) by means of a respective pair of holding clamps (351; 361; 352, 362) which lie against a respective pair of holding clamps in direction to each other and simultaneously moving a slider (391) towards a connecting section (AZ5) which lies between the capture sections (AF3, AF4),
▪ moving on the slider (391) so that in the connecting section (AZ5) a support part loop (V4) with two legs (W1, W2) and a connecting section (W3) which lies between the same is formed, wherein the semi-finished product arrangement is formed such that an edge region section (42, 81) of the decoration part (30) is positioned in the support part loop (V4),
▪ moving the slider (391) out of the support part loop (V4),
▪ further moving the holding clamps (351; 361; 352, 362) which hold a respective capture section (AF5) in direction to each other so that the two legs (W1, W2) of the support part loop (V4) are pressed against each other.

4. Method according to one of the preceding claims, wherein in the tool station (200; 300) after the pressing the two legs (W1, W2) of the support part loop (V1-1, V1-2; V2-1, V2-2; V3-1, V3-2; V4) together a curing of the semi-finished product arrangement occurs.

5. Tool station (200; 300) for manufacturing of an inner lining part (1) in a tool station (200; 300) from a semi-finished product arrangement of a support part (10) and a decoration part (20, 30, 40, 50, 60, 70, 80) which is at least partly laminated on the support part (10), wherein the tool station (200; 300) comprises:
▪ a first tool part (210; 310) with a forming tool surface (212; 312),
▪ at least a holding clamp (251, 252; 351, 352) which is integrated in the first tool part (210; 310),
▪ an adjustment device (271, 272) which is coupled to the holding clamp (251, 252; 351, 352) which is integrated in the first tool part (210; 310) and which is formed such that the same can move the holding clamp (251, 252; 351, 352) along the extension of the forming tool surface (212; 312),
▪ at least a slider device (291; 391) with a respective slider (291, 292; 393) and with a respective drive device (295, 296; 395) for driving and moving the slider (291, 292; 393),
▪ a second tool part (220; 320) with a forming tool surface (222; 322),
**characterized in that** the tool station further comprises:
▪at least a holding clamp (261, 262; 361, 362) which is integrated in the second tool part (220; 320),
▪ an adjustment device (281, 282) which is coupled to the holding clamp (261, 262; 361, 362) which is integrated in the second tool part (220; 320) and which is formed such that the same can move the hoilding clamp (261, 262; 361, 362) along the extension of the forming tool surface (222; 322),
▪ a control device which is functionally coupled with the adjustment device (271, 272) and the drive device (295, 296; 395) of the first tool part (210; 310) and with the adjustment device (281, 282) of the second tool part (220; 320) and which is formed such that the same can move simultaneously along the same direction of movement the holding clamp (251, 252; 351, 352) which is integrated in the first tool part (210; 310) and the holding clamp (261, 262; 361, 362) which is integrated in the second tool part (220; 320) and further simultaneously the slider (291, 292; 393) in direction to the second tool part (220; 320).

## Revendications

1. Procédé de fabrication d'une partie d'habillage intérieur (1) dans une station d'outils (200 ; 300) à partir d'un agencement semi-fini d'une partie de support (10) et d'une partie de décor (20, 30, 40, 50, 60, 70, 80), la station d'outils (200 ; 300) comportant au moins une paire de mâchoires de fixation (251, 252 ; 351, 352 ; 261, 262 ; 361, 362), qui retiennent une section de saisie (AF1, AF2 ; AF3, AF4) de l'agencement semi-fini, le procédé comprenant les étapes de :
▪ déplacement de la section de saisie (AF1, AF2 ; AF3, AF4) au moyen de la paire de mâchoires de fixation appliquées à celle-ci (251, 252 ; 351, 352 ; 261, 262 ; 361, 362) en direction d'une section de base (AB1, AB2 ; AB3, AB4) et de déplacement simultané d'un coulisseau (293, 294 ; 391) sur une section intermédiaire (AZ1, AZ2 ; AZ3, AZ4),
▪ continuation du déplacement du coulisseau (293, 294 ; 391), de manière qu'il se forme une boucle de la partie de support (V1-1, V1-2 ; V2-1, V2-2 ; V3-1, V3-2 ; V4) dans la section intermédiaire (AZ1, AZ2 ; AZ3, AZ4), une section de la zone de bordure (31, 32 ; 42, 61 ; 42, 51, 52, 61 ; 42, 81) de la partie de décor (20, 30, 40, 50, 60, 70, 80) étant placée dans la boucle de la partie de support (V1-1, V1-2 ; V2-1, V2-2 ; V3-1, V3-2 ; V4),
▪ sortie du coulisseau (293, 294) de la boucle de la partie de support (V1-1, V1-2 ; V2-1, V2-2 ; V3-1, V3-2 ; V4),
▪ autre déplacement des mâchoires de fixation (251, 252 ; 351, 352 ; 261, 262 ; 361, 362) retenant la section de saisie (AF1, AF2 ; AF3, AF4) en direction de la section de base (AB1, AB2 ; AB3, AB4), de manière que deux branches (W1, W2) de la boucle de la partie de support (V1-1, V1-2 ; V2-1, V2-2 ; V3-1, V3-2 ; V4) sont comprimées l'une contre l'autre.

2. Procédé selon la revendication 1, l'agencement semi-fini étant formé dans au moins une partie de base (AB1, AB2 ; AB3, AB4) à partir d'une combinaison d'une partie de support (10) et d'une partie de décor (20, 30, 40, 50, 60, 70, 80), qui est doublée sur celle-ci dans une zone de revêtement de la partie de support (10), le procédé comprenant les étapes de :
▪ déplacement de la section de saisie (AF1, AF2 ; AF3, AF4) au moyen de la paire de mâchoires de fixation appliquées à celle-ci (251 ; 261 ; 252, 262) en direction d'une section de base (AB1, AB2 ; AB3, AB4) et déplacement simultané d'un coulisseau (293, 294 ; 391) sur une section intermédiaire (AZ1, AZ2 ; AZ3, AZ4), qui est placée entre une section de base (AB1, AB2 ; AB3, AB4) et la section de saisie respective (AF1, AF2 ; AF3, AF4),
▪ continuation du déplacement du coulisseau (293, 294 ; 391), de manière qu'il se forme une boucle de la partie de support (V1-1,-V1-2 ; V2-1, V2-2 ; V3-1, V3-2) dans la section intermédiaire (AZ1, AZ2 ;AZ3, AZ4) avec deux branches (W1, W2) et une section de liaison (W3) placée entre celles-ci, l'agencement semi-fini étant exécuté de telle manière qu'une section de la zone de bordure (31, 32 ; 42, 61 ; 42, 51, 52, 61 ; 42, 81) de la partie de décor (30) est placée dans la boucle de la partie de support (V1-1, V1-2 ; V2-1, V2-2 ; V3-1, V3-2),
▪ sortie du coulisseau (293, 294) de la boucle de la partie de support (V1-1, V1-2 ; V2-1, V2-2 ; V3-1, V3-2),
▪ autre déplacement des mâchoires de fixation (251 ; 261 ; 252, 262) retenant la section de saisie (AF1, AF2 ; AF3, AF4) en direction de la section de base (AB1, AB2 ; AB3, AB4), de manière que les deux branches (W1, W2) de la boucle de la partie de support (V1-1, V1-2 ; V2-1, V2-2 ; V3-1, V3-2) sont comprimées l'une contre l'autre.

3. Procédé selon la revendication 1, l'agencement semi-fini étant formé dans au moins une partie de base (AB3, AB4) à partir d'une combinaison d'une partie de support (10) et d'une partie de décor (70, 80), qui est doublée sur celle-ci dans une zone de revêtement de la partie de support (10), le procédé comprenant les étapes de :
▪ déplacement de deux sections de saisie (AF3, AF4) au moyen respectivement d'une paire de mâchoires de fixation appliquées à celle-ci (351, 361, 352, 362) en direction l'une vers l'autre et déplacement simultané d'un coulisseau (391) sur une section intermédiaire (AZ5), qui est placée entre les sections de saisie (AF3, AF4),
▪ continuation du déplacement du coulisseau (391), de manière qu'il se forme dans la section intermédiaire (AZ5), une boucle de la partie de support (V4) avec deux branches (W1, W2) et une section de liaison (W3) placée entre celles-ci, l'agencement semi-fini étant exécuté de telle manière qu'une section de la zone de bordure (42, 81) de la partie de décor (30) est placée dans la boucle de la partie de support (V4),
▪ sortie du coulisseau (391) de la boucle de la partie de support (V4),
▪ autre déplacement des deux mâchoires de fixation (351 ; 361 ; 352, 362) retenant respectivement la section de saisie (AF5) en direction l'une vers l'autre de manière que les deux branches (W1, W2) de la boucle de la partie de support (V4) sont comprimées l'une contre l'autre.

4. Procédé selon l'une quelconque des revendications précédentes, endurcissement de l'agencement semi-fini ayant lieu dans la station d'outils (200 ; 300) après compression des deux branches (W1, W2) de la boucle de la partie de support (V1-1, V1-2 ; V2-1, V2-2 ; V3-1, V3-2 ; V4).

5. Station d'outils (200 ; 300) pour la fabrication d'une partie d'habillage intérieur (1) dans une station d'outils (200 ; 300) à partir d'un agencement semi-fini d'une partie de support (10) et d'une partie de décor (20, 30, 40, 50, 60, 70, 80) au moins en partie doublée sur celle-ci, la station d'outils (200 ; 300) comportant :
▪ une première partie d'outil (210 ; 310) avec une surface supérieure de formage de l'outil (212 ; 312),
▪ au moins une mâchoire de fixation (251, 252 ; 351, 352) intégrée dans la première partie d'outil (210 ; 310),
▪ un dispositif de réglage (271, 272), qui est couplé avec la mâchoire de fixation (251, 252 ; 351, 352) intégrée dans la première partie d'outil (210 ; 310) et exécuté de telle manière que celui-ci peut déplacer les mâchoires de fixation (251, 252 ; 351, 352) le long de l'extension de la surface supérieure de formage de l'outil (212 ; 312),
▪ au moins un dispositif à coulisseau (291 ; 391) avec respectivement un coulisseau (291, 292 ; 393) et respectivement un dispositif d'entraînement (295, 296 ; 395) pour entraîner et déplacer le coulisseau (291, 292 ; 393),
▪ une deuxième partie d'outil (220 ; 320) avec une surface supérieure de formage de l'outil (222 ; 322),
**caractérisé en ce que**, la station d'outils comprend en plus :
▪ au moins une mâchoire de fixation (261, 262 ; 361, 362) intégrée dans la deuxième partie d'outil (220 ; 320),
▪ un dispositif de réglage (281, 282), qui est couplé avec la mâchoire de fixation (261, 262 ; 361, 362) intégrée dans la deuxième partie d'outil (220 ; 320) et exécuté de telle manière que celui-ci peut déplacer les mâchoires de fixation (261, 262 ; 361, 362) le long de l'extension de la surface supérieure de formage de l'outil (222 ; 322),
▪ un dispositif de commande qui est relié du point de vue fonctionnel avec le dispositif de réglage (271, 272) et le dispositif d'entraînement (295, 296 ; 395) de la première partie d'outil (210 ; 310) ainsi qu'avec le dispositif de réglage (281, 282) de la deuxième partie d'outil (220 ; 320) et est exécuté de telle manière que celui-ci peut déplacer les mâchoires de fixation (251, 252 ; 351, 352) intégrées dans la première partie d'outil (210 ; 310) et les mâchoires de fixation (261, 262 ; 361, 362) intégrées dans la deuxième partie d'outil (220 ; 320) en même temps le long de la même direction de déplacement et simultanément en outre le coulisseau (291, 292 ; 393) en direction de la deuxième partie d'outil (220 ; 320).
